(19) **Europäisches Patentamt**

**European Patent Office**

**Office européen des brevets**

(11) Numéro de publication: **0 300 916 B1**

(12) **FASCICULE DE BREVET EUROPEEN**

(45) Date de publication de fascicule du brevet: **29.12.93** (51) Int. Cl.⁵: **G02F 1/17**

(21) Numéro de dépôt: **88401914.2**

(22) Date de dépôt: **22.07.88**

(54) **Cellule pour la modulation de la lumière.**

(30) Priorité: **24.07.87 FR 8710562**

(43) Date de publication de la demande:
**25.01.89 Bulletin 89/04**

(45) Mention de la délivrance du brevet:
**29.12.93 Bulletin 93/52**

(84) Etats contractants désignés:
**AT BE CH DE ES FR GB GR IT LI LU NL SE**

(56) Documents cités:
**FR-A- 2 260 167**
**FR-A- 2 351 463**
**FR-A- 2 352 361**
**US-A- 4 285 575**
**US-A- 4 596 722**

(73) Titulaire: **ALPINE POLYVISION, Inc.**
**Three University Plaza**
**Hackensack New Jersey 07601(US)**

(72) Inventeur: **Warszawski, Bernard**
**122, avenue de Wagram**
**F-75017 Paris(FR)**

(74) Mandataire: **Derambure, Christian et al**
**Cabinet Bouju Derambure (Bugnion) S.A.**
**55, rue Boissonade**
**F-75014 Paris (FR)**

Rank Xerox (UK) Business Services
(3.10/3.6/3.3.1)

## Description

L'invention concerne une cellule pour la modulation de la lumière, en particulier pour la réflexion variable de la lumière, la transmission variable de la lumière, l'affichage de signaux et images tels que par exemple des informations alphanumériques, graphiques et autres informations optiques. Elle s'applique notamment aux dispositifs électro-optiques les plus divers, notamment panneaux, écrans et dispositifs d'affichage, fenêtres, vitrines, écrans, pare-brises, lunettes, ceux-ci étant à transparence variable, valves de lumière, obturateurs, miroirs à réflexion variable, mémoires, etc ...

On connaît de nombreux procédés et dispositifs de modulation de la lumière parmi lesquels présentent un intérêt tout particulier ceux permettant la réalisation de dispositifs électro-optiques de faible épaisseur par rapport à leur surface, notamment, s'agissant de dispositifs d'affichage, d'écrans dits plats à cristaux liquides, électrochromiques, électrophorétiques, notamment.

Parmi ces différentes techniques de modulation de la lumière, les procédés électrochromiques utilisent le changement réversible de couleur et/ou de densité optique obtenu par oxydo-réduction électrochimique d'un matériau dit électrochrome dont la forme oxydée et la forme réduite sont de couleurs et/ou de densités optiques différentes.

Les procédés électrochromiques de modulation de la lumière présentent un ensemble de caractéristiques remarquables pour de nombreuses applications : faible tension de commande, au maximum de quelques volts ; faible consommation d'énergie ; mémoire en circuit ouvert ; écartement entre électrode et contre-électrode relativement peu critique. Ils présentent en outre des caractéristiques additionnelles particulièrement intéressantes pour des dispositifs d'affichage : contraste très élevé, même en vision latérale sous un angle élevé ; visibilité excellente par réflexion dans des conditions de forte illumination telle qu'à l'extérieur par fort ensoleillement ; échelle de gris étendue ; gamme de températures de fonctionnement large, s'étendant souvent à de basses températures. Par ailleurs, la faible tension de commande autorise l'emploi de moyens électroniques de commande et d'adressage de faible coût. En outre, la faible consommation d'énergie autorise des applications où un fonctionnement autonome (sur piles ou accumulateurs) est requis.

Cependant, les procédés et dispositifs électrochromiques de l'art antérieur présentent un certain nombre d'inconvénients qui en limitent les possibilités et les domaines d'application.

D'une manière générale, une cellule élémentaire d'un dispositif de modulation de la lumière, électrochromique, de l'art antérieur est une cellule scellée (individuellement ou en combinaison avec d'autres cellules) de façon rigoureusement étanche vis-à-vis de l'atmosphère ambiante extérieure. Cette cellule comporte généralement une électrode frontale transparente déposée sur une plaque transparente de verre ou de matière plastique, un matériau électrochrome souvent sous forme de couche mince déposée sur l'électrode transparente, un intervalle rempli d'électrolyte, une contre-électrode (également transparente si le dispositif fonctionne par transmission) et des conducteurs de connexion électrique de chaque électrode aux moyens électroniques de commande extérieurs à la cellule. Elle comporte aussi, le plus souvent, un séparateur spécifique destiné à maintenir entre l'électrode et la contre-électrode un intervalle d'épaisseur constante destiné à contenir l'électrolyte. Elle comporte aussi des moyens structurels impliquant les matériaux et joints de scellement destinés à maintenir sa cohésion ainsi que la permanence des contacts physiques et électriques internes nécessaire au bon fonctionnement. Au moins l'électrode frontale et/ou la couche de matériau électrochrome sont délimitées de façon à définir la forme requise pour le point-image ou segment d'image correspondant.

Un scellement rigoureusement étanche est nécessaire pour éviter la perte (par fuite, évaporation, notamment, selon les cas) de constituants du milieu intérieur, notamment de constituants de l'électrolyte, et/ou pour éviter l'entrée dans la cellule de constituants de l'atmosphère ambiante extérieure (par exemple oxygène, dioxyde de carbone, humidité, corps contaminants divers) susceptibles, souvent, même à l'état de traces, d'altérer ou dégrader des constituants du milieu intérieur, d'introduire des processus parasites, d'affecter le fonctionnement de la cellule et de réduire sa durée de vie. Le problème du scellement est d'autant plus important que la cellule doit permettre la traversée étanche des conducteurs qui connectent l'électrode frontale et la contre-électrode aux moyens électroniques extérieurs. Les joints de scellement, qui doivent être compatibles avec les différents matériaux utilisés, sont sujets à des contraintes mécaniques résultant notamment des différences entre les coefficients de dilatation de ces matériaux; ce problème est aggravé lorsque les dimensions du dispositif sont augmentées : aux contraintes d'origine thermique qui peuvent augmenter en raison d'asymétries d'exposition à des sources de chaleur peuvent être ajoutées des contraintes d'origine mécanique dues aux vibrations auxquelles un panneau de grandes dimensions est naturellement exposé et à l'interaction avec la structure de fixation et de maintien du panneau.

La nécessité d'un tel scellement rigoureusement étanche et les problèmes qu'il pose sont explicitement mentionnés et justifiés, et cela avec les matériaux électrochromes, les électrolytes et les structures les plus divers, dans de nombreux documents notamment US 4,127,853 ; FR 83.041.162 (cellule contenant un oxyde métallique comme matériau électrochrome et un électrolyte organique liquide d'où l'oxygène moléculaire doit être chassé) ; FR-A-2 260 167 (FR 74.43.548, pour plusieurs classes d'électrolytes solides, maintien nécessaire - à l'aide d'un boîtier étanche - de conditions particulières d'humidité, de pression, de vide ou d'atmosphère gazeuse indispensables au bon fonctionnement du dispositif) ; US 4,128,315 (scellement nécessaire pour éviter une perte d'humidité) ; US 4,116,546 (utilisation d'un électrolyte solide en vue notamment d'éviter la dégradation rapide du scellement observée avec des électrolytes liquides ou semi-solides acides) ; US 4,167,309 (protection contre l'oxygène atmosphérique de matériaux électrochromes radicalaires) ; US 3,704,057 (joint d'étanchéité pour sceller une cellule comprenant du trioxyde de tungstène comme matériau électrochrome et un électrolyte gélifié semi-solide) ; US 3,708,220 (cellule évitant toute fuite par auto-scellement de l'orifice d'entrée de l'électrolyte) ; J. Duchene et alias, IEEE Transactions on Electron Devices, Vol RD-26, N° 8, Août 1986, p. 1263 (cellule à électrodéposition avec électrolyte organique liquide étanchéifiée par un verre de scellement).

Dans les procédés et dispositifs électrochromiques de l'art antérieur, il existe plusieurs types de matériaux électrochromes et de mécanismes de production et d'effacement de la densité optique et/ou de la coloration, chacun présentant des problèmes propres qui s'ajoutent aux problèmes communs décrits précédemment. Ces problèmes sont notamment les suivants :

1) Oxydo-réduction de solides électrochromes non-stoechiométriques :

Un nombre considérable de solides électrochromes ont été utilisés : ce sont généralement des solides insolubles dans les deux états d'oxydation entre lesquels ils changent de couleur ; ces solides sont électriquement isolants ou faiblement conducteurs. On peut citer, entre autres parmi les matériaux inorganiques notamment : $WO_3$, $MoO_3$, $V_2O_5$, $Nb_2O_5$, $IrO$ indice x (une liste extensive est donnée par exemple dans le document US 3,704,057) et, parmi les matériaux organiques : diphtalocyanine de Lu, de Yb, notamment.

Ces solides électrochromes doivent généralement être mis en oeuvre par dépôt en couche mince sur l'électrode transparente à l'aide des techniques coûteuses de dépôt sous vide (évaporation sous vide, pulvérisation cathodique, notamment). Leur changement de couleur est généralement de l'incolore ou d'une première couleur à une seconde autre couleur : incolore à bleu pour $WO_3$ et $MoO_3$, jaune à vert pour $V_2O_5$, incolore à bleu ou bleu-noir pour $IrO$ indice x , vert à rouge pour la diphtalocyanine de lutécium.

Le plus utilisé de ces solide électrochromes, le trioxyde de tungstène $WO_3$, présente, en plus de ceux déjà mentionés, d'autres problèmes représentatifs de ceux de cette classe de matériaux électrochromes: très haute sensibilité aux corps contaminants, notamment atmosphériques (document FR 83.041.162), dégradation par corrosion avec dissolution dans les électrolytes aqueux et polymères (documents US 4,215,917, US 3,970,365), réduite mais non supprimée dans les électrolytes organiques (Kodintsev et alias, Elecktrokhimiya 1983, VOl. 19, N° 8, page 1137). Des techniques complexes, par exemple l'évaporation oblique (document US 4,390,246), sont requises pour améliorer les caractéristiques de coloration et d'effacement qui sont très sensibles à de légères modifications de préparation et de composition. Dans la plupart des dispositifs d'affichage (par exemple document US 4,128,315), le film de trioxyde de tungstène doit être déposé avec délimitation selon la forme et les dimensions du point ou segment d'image. Enfin, les cellules ne possèdent ni le seuil de tension ni la mémoire en circuit couplé sur d'autres cellules qui seraient nécessaires au fonctionnement matriciel multiplexé (document Yoshiro Mori, J.E.E., Août 1985, p. 53).

2) Oxydo-réduction de composés radicalaires :

Le plus représentatif et le plus étudié des matériaux de cette classe est l'heptyl-viologène. Celui-ci, dissous dans l'électrolyte où il est incolore, se dépose par réduction en un film coloré en bleu ou rouge sur l'électrode transparente et se redissout par oxydation (document US 4,116,535). Mais, il est connu que le dépôt recristallise progressivement sous une forme qui ne peut être redissoute, ce qui limite sévèrement le nombre de cycles accessibles et la durée de vie, ou, alternativement, que l'électrode se passive, réduisant notablement la vitesse de la réaction d'écriture qu'il faut alors catalyser, par exemple à l'aide d'ions métalliques déposables (document EP 0.083.668). Enfin, les cellules ne présentent pas de seuil ni de mémoire en circuit couplé sur d'autres cellules.

3) Electrodéposition de métaux :

L'électrodéposition réversible de métaux à partir d'une solution électrolytique a fait l'objet de divers travaux, notamment avec des électrolytes organiques liquides en raison des problèmes de corrosion et des réactions parasites nocives à la stabilité et à la durée de vie rencontrés avec les électrolytes aqueux. Par exemple, Y. Duchene et al. (article cité) décrivent une cellule d'affichage utilisant comme électrolyte du méthanol ou de l'acétonitrile contenant de l'iodure d'argent et de l'iodure de sodium. Les ions argent se réduisent en un film d'argent présentant un contraste élevé. Toutefois, la densité optique dépend, pour une même charge électrique, de la densité de courant utilisée, et des hétérogénéités apparaissent sur le film déposé après un certain nombre de cycles dépôt-redissolution. La cellule ne possède pas de seuil de tension d'écriture et ne se prête donc pas à l'écriture matricielle multiplexée. La zone de l'électrode transparente correspndant à l'affichage doit être délimitée à l'intérieur de la cellule à l'aide d'une couche isolante gravée selon le dessin de la zone en question. Enfin, l'utilisation d'une technologie de verre de scellement est indiquée comme l'une des conditions de fiabilité, confirmant l'importance du scellement rigoureusement étanche.

Une cellule voisine décrite par I. Camlibel et at. (Appl. Phys. Letters, 33,9, Nov. 78, page 793) contient de l'iodure d'argent et de l'iodure de potassium dans du diméthylsulfoxyde et produit un dépôt doré spéculaire ou rouge vif selon les conditions.

4) Polymères électroactifs (redox) :

Des travaux récents portent sur des polymères tels que la polyaniline, le polyacétylène, le polypyrrole, le polythiophène, notamment qui, en couche mince sur une électrode transparente, peuvent changer de couleur (par exemple du rouge au bleu pour le polythiophène) selon leur état d'oxydation. Ces matériaux, généralement assez instables, ou facilement altérables, présentent une faible durée de vie et ne permettent d'atteindre qu'un très petit nombre de cycles de fonctionnement.

On a vu que la plupart des cellules électrochromiques de l'art antérieur ne présentent pas de seuil de tension électrique défini, c'est-à-dire une tension électrique en-dessous de laquelle un point-image ne s'écrit pas. En outre, si la plupart de ces cellules offrent une mémoire en circuit ouvert, c'est-à-dire une persistance de l'état écrit quand la source de tension électrique d'écriture est déconnectée, cette mémoire se décharge partiellement si on connecte une cellule écrite à une cellule effacée, de sorte que la première s'efface partiellement tandis que la seconde s'écrit partiellement et la densité optique des deux tend à s'uniformiser avec le temps. L'absence d'un seuil défini d'écriture et/ou d'une mémoire persistante en circuit couplé sur une (autre) cellule effacée interdisent l'écriture matricielle d'un réseau de points-image placés aux intersections de deux réseaux orthogonaux de conducteurs parallèles entre eux : on constate, et l'analyse confirme, que les points-image non sélectionnés s'écrivent partiellement tandis que les points-image sélectionnés s'effacent partiellement ; la densité optique des points-image sélectionnés et celle des points-image non sélectionnés se rapprochent, dégradant et même supprimant tout contraste.

Dans l'art antérieur, il est exceptionnel d'obtenir un noir véritable dans l'état écrit (et pas toujours courant d'obtenir un aspect véritablement blanc ou transparent incolore dans l'état effacé). Généralement on obtient des couleurs telles que le bleu, le bleu-noir, le pourpre, etc. En dehors de la préférence esthétique pour une couleur ou pour le noir, la production d'une couleur particulière interdit l'affichage multi-couleurs par trichromie (sauf s'il devenait possible de générer les trois couleurs fondamentales). En revanche, la production d'un noir véritable dans l'état écrit et d'un blanc véritable (ou d'un aspect transparent incolore en transmission) dans l'état effacé permet l'affichage multicouleurs par synthèse additive en associant des points-image à des écrans colorés bleus, verts et rouges selon une distribution répétitive.

De nombreux dispositifs électrochromiques de l'art antérieur utilisent un électrolyte liquide, (par exemple un électrolyte aqueux tel qu'une solution aqueuse d'acide sulfurique (document FR 76.26282), ou un électrolyte organique tel qu'une solution de perchlorate de lithium dans du carbonate de propylène (document Yoshiro Mori, art. cité). Cet électrolyte, qui ne peut généralement pas être commun à plusieurs cellules pour des raisons électriques, exige un confinement individuel dans chaque cellule qui doit comprendre un compartiment électrolytique indéformable. En plus des problèmes posés par le remplissage et le scellement individuels de chaque cellule, la structure particulièrement complexe à laquelle on arrive, outre son coût, ne permet pas d'envisager un dispositif d'affichage à haute résolution, tel que par exemple un écran d'ordinateur : s'il paraît possible de réduire la taille du point-image aux valeurs nécessaires, de l'ordre de quelques centaines de micromètres, l'encombrement de la cellule et notamment l'existence nécessaire de parois latérales ne permet pas d'envisager de réduire l'intervalle entre points-image adjacents à une valeur qui devrait être de l'ordre de quelques dizaines de micromètres au plus.

En vue de réduire la complexité de la cellule d'affichage entraînée par les problèmes de confinement d'un électrolyte liquide, on a utilisé notamment des électrolytes liquides gélifiés semi-solides (document US 3,708,220 : acide sulfurique gélifié), des polymères avec fonctions acides (document US 4,116,545), des membranes échangeuses d'ions (document US 4,128,315). La structure des cellules est effectivement simplifiée et dans certains cas bénéficie au surplus de propriétés de collant de contact qui simplifient la construction et de propriétés viscoélastiques qui améliorent les contacts. Mais tous ces électrolytes, utilisés en association avec une couche de matériau solide électrochrome déposée sur l'électrode transparente, contiennent, d'une manière ou d'une autre, une certaine quantité d'eau (de constitution, d'hydratation, d'imprégnation, etc.) et les cellules présentent, à des degrés divers, les problèmes de corrosion mentionnés plus haut, ainsi que la nécessité d'un scellement rigoureusement étanche.

En vue d'éviter d'utiliser un électrolyte liquide libre, on a également utilisé des solides inorganiques présentant une conductivité ionique, tels que par exemple l'alumine bêta (document M. Green et al., Solid State Ionics 3/4, 1981, pages 141 à 147, North-Holland), ou encore des polymères à conduction ionique, tel que par exemple des solutions solides de perchlorate de lithium dans du polyoxyde d'éthylène (document FR 83.09886). Cependant il est bien connu que de tels électrolytes solides ne présentent, aux températures ambiantes ou ordinaires, qu'une conductivité ionique généralement très faible, pénalisant considérablement la vitesse de l'écriture et de l'effacement qui peuvent nécessiter plusieurs secondes ou même bien davantage. En outre, on observe souvent une dégradation progressive du contact électrique entre les électrolytes solides inorganiques et les électrodes, pénalisant la durée de vie des cellules de modulation de la lumière.

Dans les dispositifs électrochromiques de l'art antérieur, la contre-électrode est souvent de structure et de fabrication complexes et coûteuses, en raison des fonctions qu'elle peut avoir à assurer simultanément : fonction redox auxiliaire, maintien d'un potentiel d'électrode constant et même déterminé, capacité de charge élevée, réversibilité, etc., tout en étant capable d'un nombre de cycles élevé sans dégradation. Par exemple, il a été réalisé une contre-électrode comportant une deuxième couche d'un solide électrochrome modifié de façon à présenter une faible électrochromicité et déposé sur une électrode transparente (document US 4,278,329). Une autre contre-électrode connue est une feuille d'un papier formé à l'aide de fibres acryliques, d'un liant et de poudre de carbone, auquel se trouve également incorporé un solide électrochrome (document US 4,088,395). Une autre contre-électrode dont le potention d'électrode est ajustable comprend de la poudre de carbone, un liant et des mélanges des dépolarisants $W_{18}O_{49}$ et $V_6O_{13}$ dans des proportions ajustables (document Yoshiro Mori, article cité).

La structure d'un écran d'affichage électrochromique de l'art antérieur et sa fabrication sont généralement complexes et coûteuses, spécialement quand la taille du panneau est plus grande. Au-delà d'une certaine taille, les problèmes techniques et les coûts de fabrication deviennent tels que de grands panneaux d'affichage ne peuvent être réalisés que sous forme d'une mosaïque de petits panneaux indépendants.

On connaît également, par ailleurs, (document FR 2 504 290), un procédé d'enregistrement de signaux et images dans lequel :

1°) On constitue un support d'enregistrement comportant au moins un matériau électrochrome ayant au moins une surface libre constitué par un mélange de consistance solide d'au moins :

a) un sel hydrosoluble ou un mélange hydrosoluble de sels d'au moins un métal cathodiquement déposable à partir d'une solution aqueuse d'un de ses ions ;

b) une résine polymère filmogène primitivement hydrosoluble, préférentiellement dans la proportion de 1 partie en poids pour 0,5 à 50 parties de sels anhydres ; et

c) de l'eau ;

2°) On place au contact de la surface libre du matériau électrochrome, à un endroit où on veut former une marque, une électrode portée, par rapport audit matériau, à un potentiel négatif de façon à faire circuler un courant électrique entre l'électrode et ledit matériau ;

3°) On forme dans le matériau électrochrome, dans la zone de contact avec l'électrode, une marque immédiatement et directement visible par réduction cathodique d'au moins un ion métallique déposable présent dans le matériau en au moins un métal qui électrocristallise en faisant partie intégrante du matériau, le métal constituant la marque.

Selon ce document, le matériau électrochrome et le procédé de sa mise en oeuvre visent à obtenir une marque (signal ou image) essentiellement stable dans le temps.

Par contre, ce document ne s'intéresse pas, ne suggère pas et ne décrit pas l'application d'un tel matériau électrochrome pour la modulation de la lumière, ni un procédé correspondant de mise en oeuvre.

La présente invention concerne une cellule pour la modulation de la lumière et un procédé de fabrication de celle-ci qui évitent les inconvénients des cellules connues.

A cet effet, une cellule de modulation de la lumière est définie par la revendication 1.

Cette cellule permettant l'écriture d'au moins un point-image ou segment d'image, le maintien dans l'état écrit d'un tel point-image ou segment d'image, reversiblement, l'effacement d'un tel point-image ou segment d'image, et le maintien dans l'état effacé de ce point-image ou segment d'image, l'écriture d'un point-image ou segment d'image étant défini comme l'accroissement de densité optique dans la région de l'interface entre l'électrode de travail et la couche ou portion de couche de matériau et l'effacement d'un point-image ou segment d'image étant défini comme la diminution ou la disparition de l'accroissement de densité optique obtenu lors de l'écriture.

Selon d'autres caractéristiques qui résulteront de ce qui suit, cette cellule est également caractérisée en ce que la contre-électrode est transparente ou substantiellement transparente de manière que la cellule puisse fonctionner notamment par transmission. La contre-électrode est opaque, la cellule fonctionnant par réflexion. Elle comporte, en outre, un élément réfléchissant et/ou masquant et/ou diffusant placé entre l'électrode et la contre-électrode. Une électrode de travail et/ou une contre-électrode possède une structure auto-portante ou est supporté par un substrat auto-portant. Le substrat est transparent ou substantiellement transparent lorsque l'électrode qui lui est associée est elle-même transparente ou substantiellement transparente. La couche de matériau électrolytique est d'épaisseur comprise entre notamment quelques micromètres et plusieurs dizaines de micromètres. La couche de matériau électrolytique présente des propriétés adhésives notamment un toucher collant ou un collant de contact. Elle comporte au moins deux ou plus couches de matériaux électrolytiques distinctes, combinées, notamment superposées et/ou juxtaposées. Deux matériaux constituant deux couches sont différents. Chaque couche contient un pourcentage différent des constituants totaux d'un même matériau électrolytique l'ensemble des couches les contenant tous. Les électrodes présentent une courbure d'ensemble ou des reliefs localisés, ceux-ci étant conférés à la cellule elle-même. Une couche de matériau électrolytique est continue. Une couche d'au moins au matériau électrolytique est en grains ou particules juxtaposés maintenus par eux-mêmes ou au moyen d'un liant. Elle comporte, en outre, des moyens supplémentaires spécifiques de maintien de sa cohésion, de la permanence des contacts électriques ; et/ou des moyens supplémentaires spécifiques d'isolation et de protection de ses éléments constitutifs par rapport à l'atmosphère ambiante ; et/ou un espaceur spécifique. En combinaison, la couche de matériau électrolytique est substantiellement rigide et que la cellule est dépourvue d'espaceur spécifique entre les deux électrodes. En combinaison, d'une part, la couche de matériau électrolytique présente un toucher collant ou collant de contact et, d'autre part, la cellule est dépourvue de moyens supplémentaires spécifiques de maintien de la cohésion. En combinaison, d'une part, une couche de matériau électrolytique a une conductivité ionique permanente, y compris en contact avec l'atmosphère ambiante extérieure et, d'autre part, la cellule est dépourvue de moyens spécifiques assurant son étanchéité à l'humidité. Un point-image ou segment d'image est déterminé en forme, taille et position exclusivement par l'intersection des projections orthogonales, sur une surface d'écran, d'aires données à l'électrode de travail, à la contre-électrode et à la couche de matériau électrolytique. L'aire d'un des composants (électrode de travail, contre-électrode, couche de matériau électrolytique) est déterminée en forme taille et position par l'intersection des projections orthogonales, sur une surface d'écran des aires des deux autres composants. Les aires de deux composants (électrode de travail, contre-électrode, couche de matériau électrolytique) sont identiques et superposés et leur projection orthogonale commune sur le troisième composant est incluse dans l'aire de ce dernier.

A cet effet, un procédé de fabrication d'une telle cellule de modulation de lumière, selon l'une quelconque des revendications 1 à 21, caractérisé en ce qu'il comporte au moins les étapes consistant à:

1°) Constituer d'abord au moins une composition formatrice fluide comportant au moins les constituants du matériau électrolytique et de l'eau en quantité telle que cette composition formatrice fluide ait la viscosité souhaitée, notamment pour son application en couche ;

2°) former au moins une couche, d'au moins une composition formatrice fluide sur au moins une des deux électrodes ;

et

3°) donner à ladite couche sa consistance solide.

Selon d'autres caractéristiques de ce procédé on forme d'abord une couche sur au moins une électrode et on donne ensuite à cette couche sa consistance solide, notamment par évaporation, traitement thermique, réticulation, vulcanisation. On donne d'abord à la couche sa consistance solide notamment par évaporation, traitement thermique et on forme ensuite la couche sur au moins une électrode. Il comporte une étape consistant à former au moins une couche de matériau électrolytique sur une des deux électrodes et une autre étape, ultérieure, consistant à appliquer cette couche, par sa face libre, sur l'autre électrode. Il comporte une étape consistant à former au moins une première couche sur une des deux électrodes, une autre étape consistant à former au moins une seconde couche sur l'autre électrode et une autre étape ultérieure consistant à réunir les première et seconde couches par leurs faces libres. On forme une couche en une passe unique (couche simple) ou en plusieurs passes (couche composite) de compositions formatrices identiques ou non, de façon successive ou non. Pour former une couche de matériau électrolytique adhérant à une électrode, on confère à la couche de matériau électrolytique un collant de surface ou de contact. Pour former une couche de matériau électrolytique sur une électrode soit on applique directement le matériau électrolytique et l'électrode au contact l'un de l'autre ; soit on applique d'abord le matériau électrolytique sur un substrat intermédiaire et provisoire notamment d'état de surface anti-adhérent et on transfère ensuite la couche de matériau électrolytique du substrat à l'électrode considérée. La composition formatrice est appliquée en une ou plusieurs couches d'épaisseur totale préférentiellement comprise entre quelques micromètres et plusieurs centaines de micromètres en fonction notamment de sa teneur en eau, de façon à obtenir une couche de matériau électrolytique d'épaisseur préférentiellement comprise entre quelques micromètres et plusieurs dizaines de micromètres. La composition formatrice comprend au moins les constituants du matériau électrolytique et un supplément d'eau, et éventuellement des agents de maintien de la stabilité et/ou de la conservation et/ou facilitant l'application en couche de la composition formatrice. On ajuste la viscosité de la composition formatrice fluide à une valeur convenable pour un procédé particulier de formation et/ou d'application en couche par évaporation d'une partie de son eau ou par ajout d'un supplément d'eau. Les zones d'amenée du courant électrique sont réparties de manière à obtenir une densité de courant aussi uniforme que possible à l'intérieur du point image ou segment d'image.

Les autres caractéristiques de l'invention seront bien comprises à l'aide des figures suivantes :

. Les figures 1A, 1B ; 2A, 2B ; 3A, 3B ; 4A, 4C sont quatre couples de schémas purement indicatifs et explicatifs, illustrant, pour chaque couple,avec respectivement une vue frontale et une vue de côté, le procédé de modulation de lumière, ainsi qu'une cellule élémentaire d'affichage selon l'invention, respectivement dans sa constitution générale (figures 1A, 1B), dans une phase d'écriture (figures 2A, 2B), dans une phase de maintien (figures 3A, 3B) et dans une phase d'effacement (figures 4A, 4B).

. La figure 5 est une vue en élévation et illustre l'écriture de points-image et/ou de segments d'image par les configurations superficielles conjuguées de l'électrode, de la contre-électrode et du matériau électrolytique.

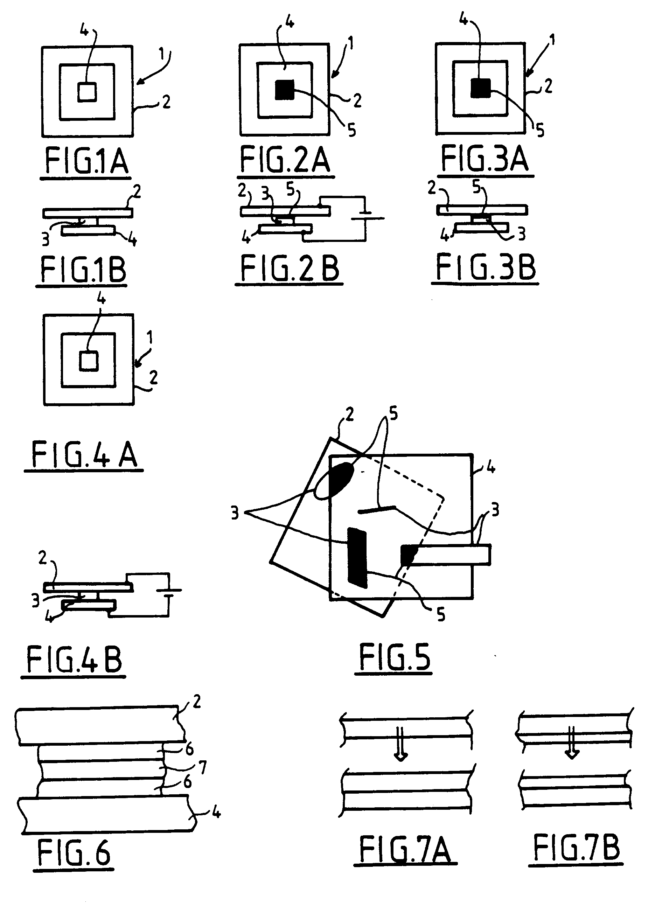

. La figure 6 est une vue en coupe transversale et illustre une forme de réalisation possible de couche de matériau électrolytique.

. Les figures 7A et 7B sont deux vues schématiques en coupe transversale illustrant deux variantes possibles de mode de réalisation d'une cellule élémentaire selon l'invention.

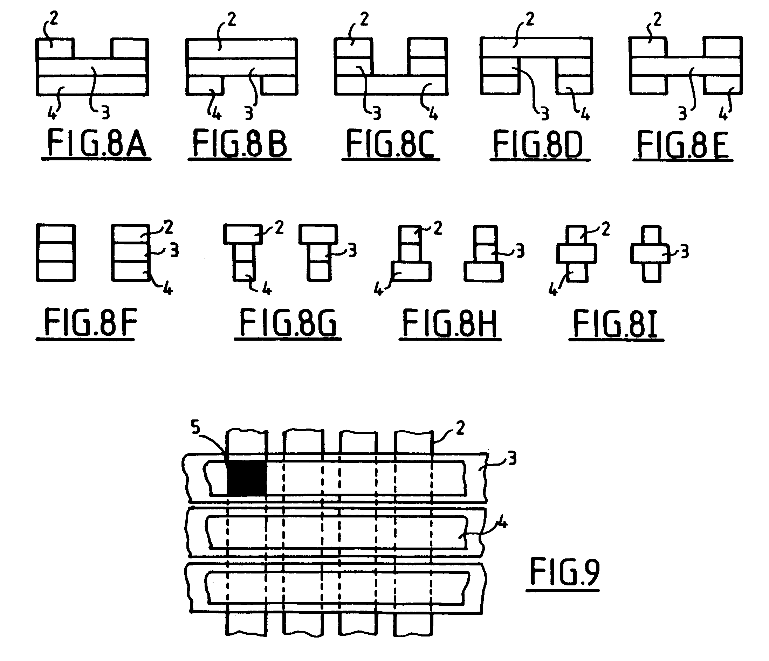

. Les figures 8A, 8B, 8C, 8D, 8E, 8F, 8G, 8H, 8I sont neuf vues schématiques en coupe transversale illustrant neuf variantes de réalisation de configuration conjuguées des constituants, d'une cellule de modulation.

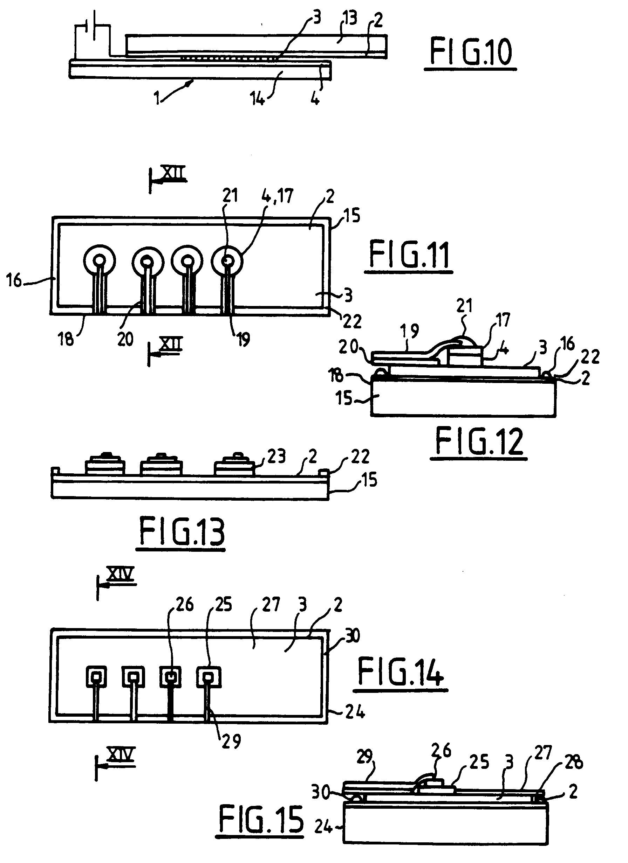

. La figure 9 illustre une forme de réalisation possible de dispositif avec des constituants en bandes, en bandes pour un affichage matériel.

. La figure 10 est une vue en coupe transversale correspondant à l'exemple 1.

. La figure 11 est une vue en élévation correspondant à l'exemple 4.

. La figure 12 est une vue en coupe selon la ligne XII-XII de la figure 11.

. La figure 13 est une vue en coupe transversale correspondant à l'exemple 6.

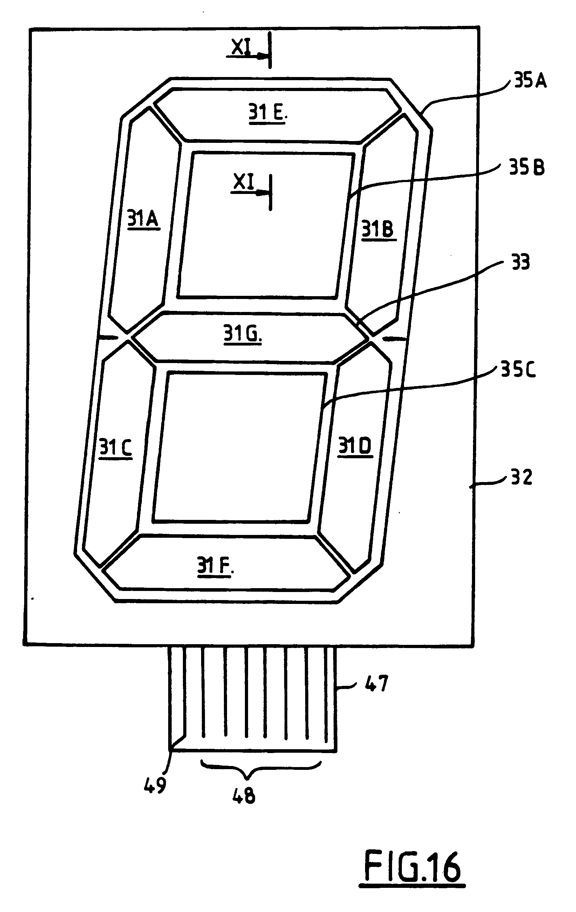

. La figure 14 est une vue en élévation correspondant à l'exemple 7.

. La figure 15 est une vue en coupe selon la ligne XV-XV de la figure 14.

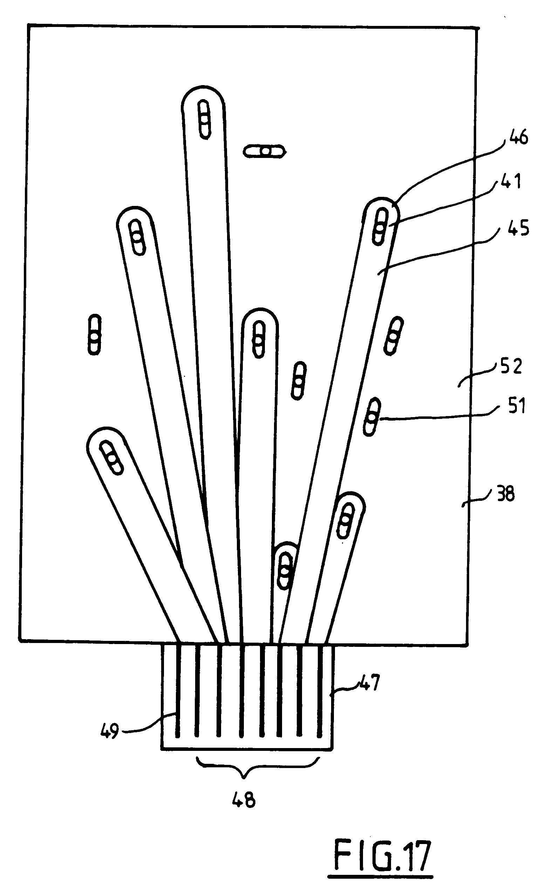

. Les figures 16 et 17 sont deux vues en élévation, respectivement frontale et arrière d'un panneau d'affichage à adressage direct selon l'exemple 11.

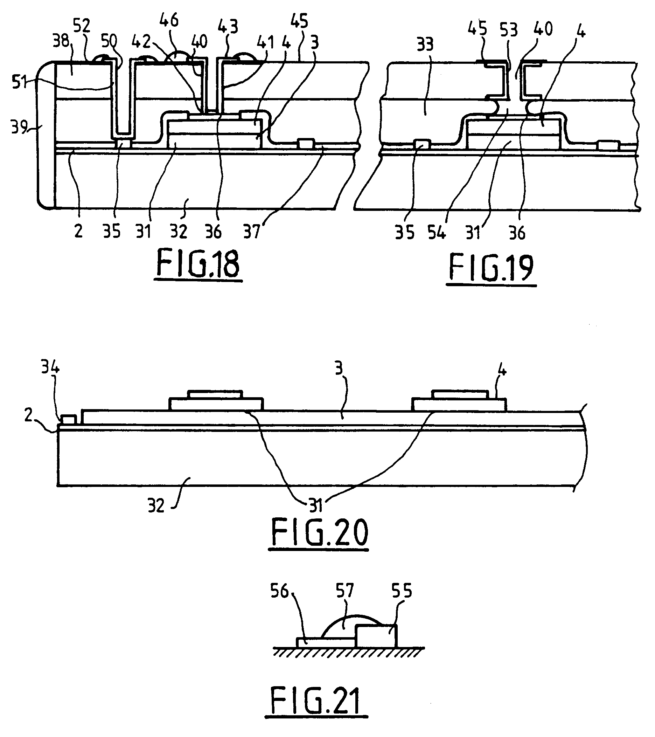

. Les figures 18, 19, 20 sont trois vues schématiques en coupe transversale de variante de ce panneau.

. La figure 21 est une vue de détail en coupe transversale d'une variante possible relative à une connection électrique.

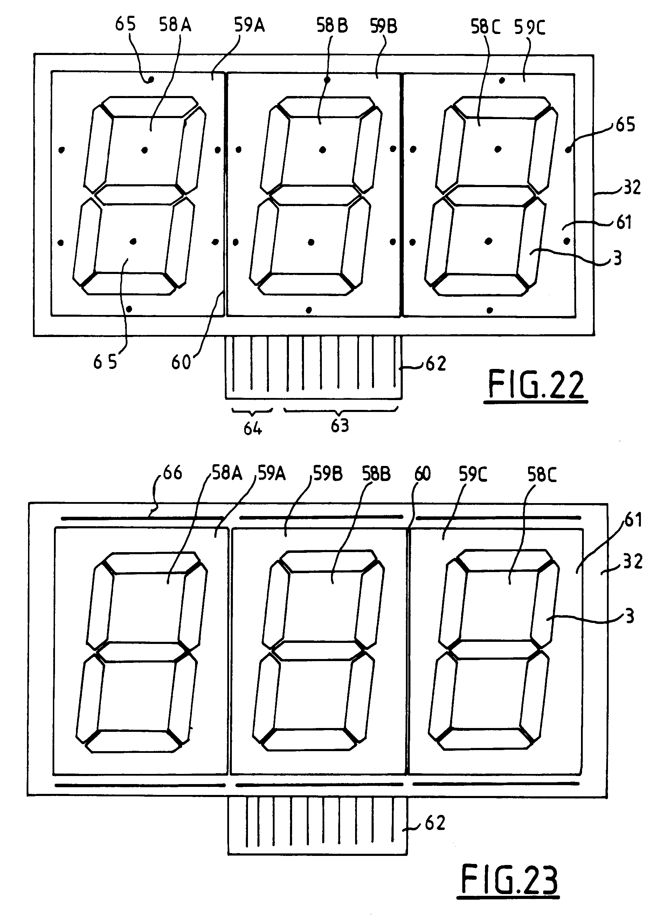

. Les figures 22 et 23 sont deux vues frontales, en élévation d'un panneau selon l'exemple 12.

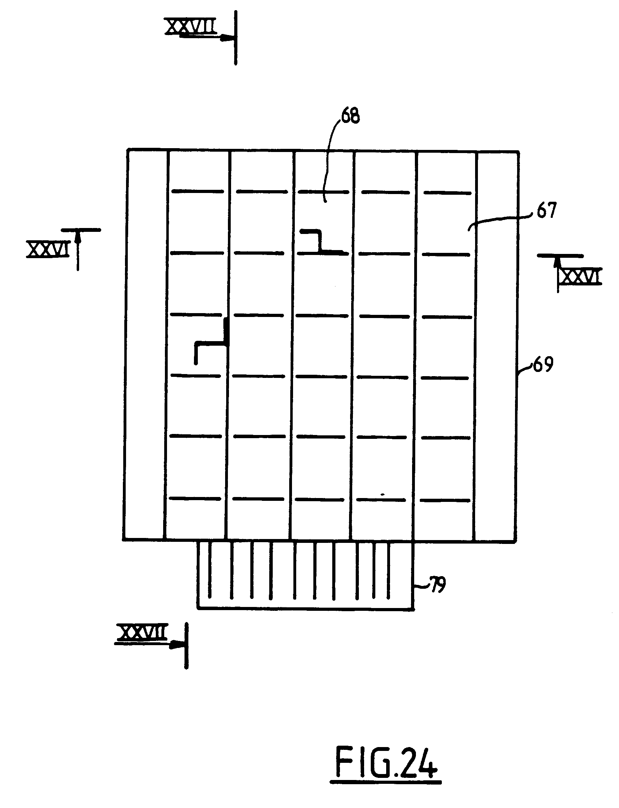

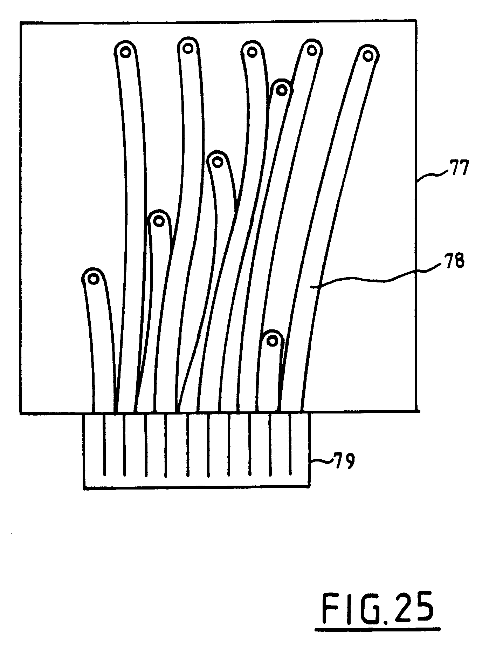

. Les figures 24 et 25 sont deux vues en élévation, respectivement frontale et arrière d'un panneau selon l'exemple 13.

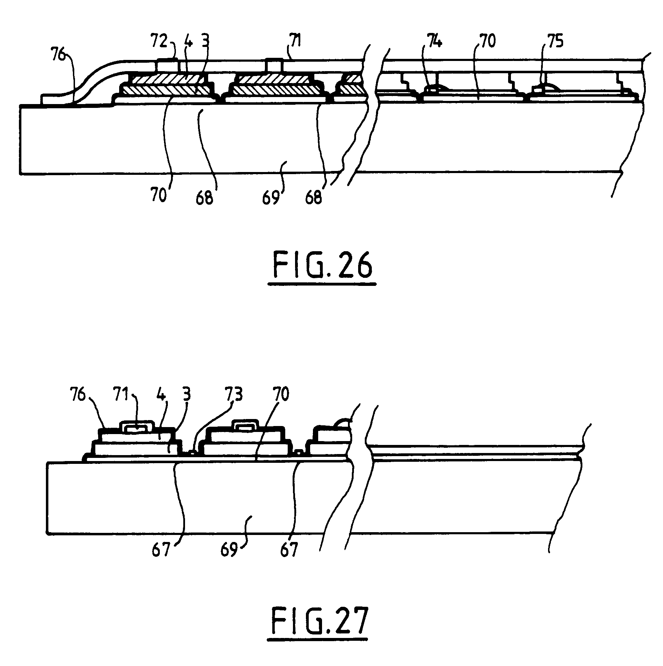

. Les figures 26 et 27 sont deux vues en coupe transversales selon respectivement les lignes XXVI-XXVI et XXVII-XXVII de la figure 24.

On convient, dans la suite du texte des définitions suivantes :

"Point-image" ou "segment d'image" : Zone ou surface délimitée dont la densité optique est susceptible d'être accrue (c'est-à-dire d'acquérir en vision par réflexion une coloration ou un noircissement et/ou de s'opacifier partiellement ou complètement en vision par transmission si elle est transparente) et, inversement, diminuée pour revenir notamment à son aspect d'origine (réflexion d'origine et/ou transparence d'origine). Le terme de point-image est de préférence réservé à une surface petite (par exemple par rapport à la surface d'un écran de dispositif de modulation de la lumière qui en contient une multiplicité), souvent de forme circulaire, carrée ou légèrement rectangulaire, répétée, à la surface d'un écran de dispositif d'affichage qui en contient une multiplicité, identiquement à elle-même selon les noeuds d'un réseau (par exemple carré, carré centré, hexagonal compact, notamment) qui occupe des régions ou la totalité de la surface de l'écran. Le terme de segment d'image est de préférence réservé à une surface pouvant être importante (par exemple par rapport à la surface d'un écran de dispositif de modulation de la lumière qui en contient une multiplicité), de forme quelconque mais souvent allongée, associée, à la surface d'un écran de dispositif d'affichage qui en contient une multiplicité, à d'autres segments d'image de même forme et/ou de formes différentes selon des arrangements géométriques spécifiques, tel que, par exemple, l'arrangement bien connu de sept segments permettant la représentation des chiffres de 0 à 9 par coloration ou opacification sélective de combinaisons adéquates de ces segments.

"Cellule élémentaire de modulation de la lumière" ou "dispositif élémentaire de modulation de la lumière" (ou en abrégé cellule, dispositif élémentaire) : Structure complète nécessaire à la création d'un point-image ou segment d'image et à son fonctionnement réversible lorsque la cellule est commandée électriquement. Une cellule élémentaire de modulation électrochromique comprend au moins, comme composants, convenablement disposés et associés, une première électrode ou électrode de travail, transparente, une seconde électrode ou contre-électrode (transparente ou non, selon que le point-image ou segment d'image est observé par transmission de la lumière ou par réflexion), un conducteur ionique ou matériau électrolytique placé entre les électrodes, des moyens d'électrochromisme et des moyens de connexion électrique à une source extérieure de tension électrique permettant la commande de la cellule et, si une cellule élémentaire fait partie d'une multiplicité de cellules élémentaires dans un même dispositif d'affichage, des moyens d'adressage (direct, multiplexé, etc ...) permettant de la commander sélectivement. Dans la suite du texte, on utilise plutôt l'expression de "cellule élémentaire de modulation" pour désigner la structure minimale indispensable à l'obtention d'un point-image ou segment d'image conformément à l'invention et l'expression "dispositif élémentaire" pour désigner un dispositif comportant une cellule élémentaire unique et des composants ou constituants extrinsèques ou périphériques nécessaires à son fonctionnement soit comme dispositif unitaire, soit combiné à un ou plusieurs autres dispositifs élémentaires dans un dispositif composé ayant une pluralité de cellules associées. De tels constituants ou composants extrinsèques sont, par exemple, des connexions électriques associées aux électrodes ; des moyens de masquage de la périphérie de la cellule ; un substrat transparent pour l'électrode transparente.

"Dispositif autonome de modulation de la lumière" : Au moins un dispositif élémentaire de modulation ainsi que les autres composants spécifiques permettant d'utiliser le dispositif comme une unité autonome, parmi lesquels notamment : supports ou substrats mécaniques confiant au dispositif autonome une rigidité structurelle ; boitier ; encapsulation ; connexions électriques internes au dispositif autonome; connecteur(s) ou zone(s) de connexion auquel ou à laquelle sont raccordées, par le moyen des connexions électriques internes, les dispositifs élémentaires du dispositif autonome, permettant de relier aisément ce dernier à l'électronique de commande et d'adressage et à la source d'énergie électrique associée ; circuit imprimé pouvant éventuellement faire fonction, isolément ou en combinaison, notamment de support mécanique, de connecteur ou de support de connecteur, de support d'une partie de l'électronique associée. Un tel dispositif autonome peut être par exemple un dispositif communément appelé dispositif, panneau ou écran d'affichage ou plus généralement un quelconque dispositif électro-optique des plus divers.

"Surface d'écran d'un dispositif d'affichage" : La surface qui comprend, encadre et relie tous les points-image et/ou segments d'image du dispositif.

On entend également par point-image (ou segment d'image) et cellule élémentaire de modulation l'aire colorable, densifiable ou opacifiable et la cellule élémentaire correspondante, quelles que soient leur forme et leur taille, des dipositifs de modulation de la lumière qui ne sont pas des dispositifs d'affichage proprement dits, par exemple des dispositifs de transmission variable ou de réflexion variable de la lumière, et ne comportent souvent qu'une seule cellule élémentaire notamment et par exemple fenêtres, vitrines, écrans, pare-brise, lunettes, à transparence variable, valves de lumière, obturateurs, miroirs à réflexion variable, dispositifs d'amplification de la lumière.

"Consistance solide" : La consistance d'un matériau présentant, en l'absence de contraintes extérieures appliquées, l'aspect d'un solide. La consistance solide inclut de manière non restrictive la consistance d'un milieu pâteux de très haute viscosité, la consistance d'un fluide thixotrope à l'état de repos, la consistance d'un gel ou d'un milieu gélifié, la consistance d'une pellicule de polymère plastifié.

"Filmogène" : L'aptitude à former un feuil dans le système du mélange existant, qui comprend aussi les autres constituants du mélange.

"Primitivement hydrosoluble" : Hydrosoluble au moins avant incorporation dans le matériau électrolytique ou dans une composition formatrice de matériau électrolytique. Une fois le matériau électrolytique constitué, l'hydrosolubilité primitive de la résine peut être perdue partiellement ou totalement, réversiblement ou irréversiblement, par exemple, suite à une réticulation par un agent réticulant.

"Couche" : un feuillet pellicule ou film de matière homogène, hétérogène ou composite, présentant généralement une surface étendue par rapport à son épaisseur et préférentiellement mais non limitativement d'épaisseur au moins sensiblement constante. Une telle couche peut être simple ou composite lorsqu'elle comporte elle-même plusieurs couches. Une telle couche peut être d'étendue non fractionnée ou, au contraire, être fractionnée en portions de couche. Dans la suite du texte, on utilise le terme couche pour cette acception générale et l'une quelconque de celles de détail.

"Faible épaisseur" d'une couche du matériau électrolytique : Une épaisseur préférentiellement comprise entre quelques micromètres et plusieurs dizaines de micromètres.

"Faible épaisseur" d'une électrode : une épaisseur préférentiellement comprise entre quelques dizaines de nanomètres (centaines d'Angstroems) et plusieurs centaines de micromètres.

"Faible épaisseur" d'un dispositif de modulation : Une épaisseur petite devant sa surface, préférentiellement comprise entre quelques micromètres et plusieurs centaines de micromètres, l'épaisseur d'un substrat pouvant ne pas être comprise.

"Mélange homogène" : Mélange dont, à l'échelle macroscopique, les constituants sont indiscernables les uns des autres, la structure apparaissant comme continue.

"Alliage" : L'association ou combinaison de plusieurs espèces métalliques différentes, qu'il s'agisse d'une solution solide, d'un composé intermétallique, d'une juxtaposition de cristallites de chaque métal ou de toute autre forme d'association ou de combinaison, obtenue par codéposition de plusieurs métaux.

On a d'abord trouvé qu'on peut constituer une cellule élémentaire de modulation 1 (par réflexion ou par transmission) en disposant une première électrode ou électrode de travail 2, électroniquement conductrice, transparente, au contact d'une face d'au moins une couche (ou portion de couche) d'au moins un matériau électrolytique 3, notamment comprise entre de l'ordre de quelques micromètres et plusieurs dizaines de micromètres d'épaisseur , constitué par un mélange homogène de consistance solide d'au moins :

a) au moins un sel hydrosoluble ou un mélange hydrosoluble de sels d'au moins un métal cathodiquement déposable à partir d'une solution aqueuse d'un de ses ions simple ou complexe,

b) au moins une résine polymère filmogène primitivement hydrosoluble, préférentiellement dans la proportion d'une partie en poids pour 0.05 à 50 parties de sels anhydres,

c) de l'eau, et

d) un couple redox auxiliaire,

et une seconde électrode ou contre-électrode 4, au contact de l'autre face de la couche de matériau électrolytique 3 (figures 1A, 1B). On peut écrire un point-image ou un segment d'image 5, c'est-à-dire faire apparaître un accroissement de densité optique dans la région de l'interface entre l'électrode de travail 2 et la couche matériau électrolytique 3, en appliquant à l'électrode de travail 2 une tension électrique négative de l'ordre d'une fraction de Volt à quelques Volts par rapport à la contre-électrode 4 pendant une certaine durée (phase d'écriture) (figures 2A, 2B) ; on peut maintenir ce point-image ou segment d'image 5 ainsi écrit, c'est-à-dire l'accroissement de densité optique pendant au moins un certain temps en supprimant la tension électrique appliquée (suppression de la différence de pmotentiel appliquée extérieurement) (phase de maintien) (figures 3A, 3B); on peut également maintenir le point-image ou segment d'image écrit, généralement pendant une durée plus longue que précédemment, en appliquant une tension d'écriture proche de la force électromotrice que peut présenter la cellule élémentaire dans l'état écrit ; on peut également (phase d'effacement) effacer de partiellement à totalement le point-image ou segment d'image 5 écrit, c'est-à-dire que l'accroissement de densité optique obtenu pendant la phase d'écriture précédente est diminuée ou supprimée en faisant passer entre les électrodes 2, 4 un courant en sens opposé au courant de la phase d'écriture (figures 4A, 4B). On peut enfin maintenir le point-image ou segment d'image 5 effacé. On peut recommencer répétitivement les phases d'écriture, d'effacement et de maintien.

Outre sa caractéristique de constitution déjà mentionnée, le matériau électrolytique mis en oeuvre dans la cellule élémentaire a comme caractéristiques qu'il possède une conductivité ionique ; qu'il possède une déformabilité plastique ou viscoélastique ; qu'il est conformable en couche continue de faible épaisseur ; et qu'il a au moins pour fonctions non seulement de participer à l'écriture ou à l'effacement d'un point-image ou segment d'image, mais aussi de permettre le passage du courant électrique entre l'électrode de travail et la contre-électrode pendant l'écriture et pendant l'effacement et cela par réduction cathodique d'ions métalliques déposables qu'il contient, en combinaison avec l'électrode de travail, (phase d'écriture) ; par oxydation anodique et réincorporation dans l'état d'origine des ions métalliques produits par cette oxydation, en combinaison avec l'électrode de travail, (phase d'effacement) ; et enfin par transport dans chaque sens, respectivement, des charges électriques sous forme ionique, entre l'électrode de travail et la contre-éclectrode, en quantité égale aux charges électriques injectées sous forme électronique au matériau

EP 0 300 916 B1

électrolytique par l'électrode de travail pendant l'écriture ; et aux charges électriques retirées sous forme électronique du matériau électrolytique par l'électrode de travail pendant l'effacement.

Un procédé électrochromique de modulation de la lumière, par réflexion ou transmission mis en oeuvre par la cellule et le matériau ainsi décrit comporte la combinaison de phases suivantes : on réalise au moins un tel matériau électrolytique ; on réalise au moins une couche d'au moins un matériau électrolytique d'une épaisseur comprise entre notamment quelques micromètres et plusieurs dizaines de micromètres ; on dispose les électrodes de la cellule au contact des faces de ladite couche de matériau électrolytique ; pendant au moins une phase d'écriture, d'une certaine durée, on applique à l'électrode de travail une tension électrique négative par rapport à celle de la contre-électrode, de manière, que pendant cette phase d'écriture, soit écrit au moins un point-image ou un segment d'image ; pendant au moins une phase d'effacement, ultérieure à une phase d'écriture, on fait passer, entre les électrodes, un courant électrique dont le sens est opposé à celui du courant électrique de la phase d'écriture, de manière que, pendant cette phase d'effacement, le point-image ou le segment d'image précédemment écrit soit effacé ; le procédé étant répétitif et pouvant comporter plusieurs couples d'une phase d'écriture et d'une phase d'effacement.

De manière surprenante, le point-image ou segment d'image 5 écrit est d'une part une surface délimitée par un contour remarquablement net, correspondant à l'intersection des projections orthogonales, sur la surface d'écran de la cellule, des aires des deux électrodes 2, 4 et de la couche de matériau électrolytique 3, d'autre part, d'aspect sombre, mat et amorphe, très différent de celui d'un dépôt métallique classique : clair, brillant, et cristallin, proche de celui d'un "noir" de métal et pouvant aller jusqu'à avoir l'aspect d'un noir d'encre d'imprimerie, ainsi qu'il est décrit ci-dessous.

Par exemple, si la contre-électrode 4 possède une aire dont la projection est incluse dans celle de l'électrode de travail 2 et de la couche de matériau électrolytique 3, le point-image ou segment d'image 5 écrit reproduit exactement la forme de la contre-électrode 4, bien qu'il se forme à une certaine distance de cette dernière, sans qu'on observe de contour flou ou diffus comme on pourrait s'y attendre. En outre, le point-image ou segment-image 5, une fois écrit, ne diffuse pas au-delà de son contour et n'est pas dilué par la périphérie non colorée ou densifiée. Cette caractéristique est illustrée schématiquement par la figure 5.

L'obtention, dans de telles conditions, d'un contour net du point-image ou segment d'image 5 écrit est d'une grande importance. S'il est en effet connu dans les procédés électrochromiques de l'art antérieur d'obtenir des points-images ou des segments d'image à contour net en délimitant selon un tel contour l'électrode transparente ou encore le matériau électrochrome, dans les cas fréquents où ce dernier est une couche mince solide déposée sur l'électrode transparente, cette délimitation, par de tels moyens, rend la fabrication complexe et coûteuse et réduit la résoluton et le contraste moyen, notamment dans le cas d'un dispositif d'affichage dit matriciel qui comporte une matrice de points-image placés aux intersections d'un réseau de lignes conductrices horizontales et d'un réseau de colonnes conductrices verticales.

Selon l'invention, la délimitation du contour de chaque point-image ou segment d'image 5 qu'on peut ramener à l'intersection des aires d'une électrode transparente 2 et d'une contre-électrode 4 toutes deux allongées et de directions générales perpendiculaires entre elles, le matériau électrolytique 3 ayant une aire englobant au moins cette intersection, se prête à des constructions d'une extrême simplicité et permet d'obtenir des points-image ou segment-image 5 de très petite dimension ainsi que de réduire à une valeur minimum les intervalles entre les points-images ou segment d'images adjacents. Cette variante est représentée schématiquement sur la figure 9, dans le cas particulier ou le matériau électrolytique 3 est en forme de bandes coaxiales aux contre-électrodes 4 et débordant latéralement légèrement de celles-ci. Cette variante est destinée à des panneaux d'affichage dits matériels.

De manière surprenante, la densité optique du point-image ou segment d'image 5 est uniforme à l'intérieur de son contour jusqu'à des dimensions importantes de ce point-image ou segment-image, de l'ordre de un à plusieurs centimètres carrés, sans précautions spéciales. Au-delà, en raison de la résistivité de l'électrode de travail 2, une géométrie convenable des zones ou points d'amenée de prélèvement du courant, c'est à dire des zones d'amenées du courant, électrique respectivement 11 et 12 sur l'électrode de travail 2 et, éventuellement, sur la contre-électrode 4, est nécessaire pour assurer une densité de courant suffisamment uniforme pour obtenir une densité optique uniforme.

On peut obtenir une coloration ou densification du point-image ou segment d'image présentant par réflexion une densité optique très élevée, notamment un aspect noir d'encre d'imprimerie ou d'encre de Chine et une opacité totale en vision par transparence, c'est-à-dire en transmission. Mais, de façon surprenante, on peut, en outre, en faisant circuler une charge électrique plus faible que celle permettant d'obtenir la densité optique maximale ou l'opacité complète, obtenir une densité optique uniforme plus faible : coloration grise en vision par réflexion, et écran ou filtre gris réduisant uniformément la transmission de la lumière en vision par transparence. Plus précisément, on peut, dans les deux modes de vision (transmission, réflexion), produire, en modulant la charge électrique d'écriture, une échelle continue de gris allant de l'absence initiale de coloration ou densité optique en vision par réflexion, ou de la transparence initiale en vision par transmission, respectivement, à une densité optique élevée notamment un noir dense ou à l'opacité. L'obtention d'une telle échelle de gris est importante notamment pour l'affichage d'images de très haute qualité graphique.

Au contraire, selon le document FR 2 504 290, la marque obtenue avec un style inscripteur est toujours très dense par réflexion et opaque par transparence et le fait de faire varier la charge électrique lorsque le style inscripteur formant cathode est immobile pendant l'inscription d'un point, ou de faire varier la densité de courant lorsque le style se déplace pour l'inscription d'un trait, a pour seul effet de faire varier le diamètre du point ou la largeur du trait mais non d'affecter sa densité optique comme selon la présente invention.

On peut obtenir, à partir de l'état effacé, une augmentation de densité optique avec une durée d'application de la tension électrique d'écriture de quelques millisecondes seulement (phase d'écriture) et une disparition de cette densité optique avec une durée d'effacement du même ordre de grandeur (phase d'effacement).

Le procédé d'écriture peut être mis en oeuvre de façon à présenter un seuil de tension électrique bien défini et de valeur élevée, c'est-à-dire qu'en appliquant une tension électrique d'écriture inférieure à ce seuil à une cellule élémentaire 1, le point-image ou segment d'image 5 ne s'écrit pas. Un tel seuil de tension électrique d'écriture est indispensable pour l'adresage multiplexé d'un dispositif d'affichage matriciel.

L'effacement du point-image ou segment d'image 5 écrit (phase d'effacement) est obtenu en faisant circuler dans la cellule élémentaire 1 un courant de sens opposé à celui du courant d'écriture (phase d'écriture), ce qui est obtenu notamment généralement soit en appliquant aux électrodes 2, 4 une tension électrique de sens opposé à celui de la tension d'écriture ; soit, dans le cas où la cellule présente une force électromotrice, par simple court-circuit.

Le procédé de modulation ainsi décrit permet réversiblement et répétitivement d'écrire et d'effacer des points-images ou segments d'images, ce que ne prévoit pas le document FR 2 504 290, déjà mentionné.

Selon ce procédé, on écrit un point-image ou segment d'image 5 par réduction cathodique dans la région de l'interface électrode de travail 2-couche de matériau électrolytique 3, d'ions métalliques présents dans la couche de matériau électrolytique 3 en métal ou alliage métallique qui électrocristallise selon un mode particulier présentant des caractéristiques remarquables de densité optique, d'uniformité, de précision de contour, d'échelle de gris et d'absence de diffusion ou dilution, etc ... décrites plus haut. Et, on efface le point-image ou segment d'image 5 par oxydation anodique du dépôt de métal ou d'alliage métallique ainsi formé. Le matériau électrolytique est donc déjà caractérisé au moins par cette double fonction d'assurer cette écriture et de permettre cet effacement. De manière surprenante, on observe que le dépôt métallique formé dans la région interfaciale est susceptible d'être redissous par oxydation anodique, sans qu'il subsiste de dépôt résiduel et sans que la réinjection massive des ions métalliques produits par cette oxydation dans le matériau électrolytique ne produise de phénomènes ou processus parasites ou nuisibles (tels que par exemple une floculation ou un "salting out" local du polymère filmogène) comme on aurait pu s'y attendre.

Le dépôt cathodique de métal ou d'alliage selon le mode particulier d'électrocristallisation observé et sa dissolution par oxydation anodique s'obtiennent avec des couches de matériau électrolytique contenant, selon les cas, un métal seul ou plusieurs métaux pris parmi la plupart des métaux cathodiquement déposables seulsou codéposables à plusieurs ou encore non déposables seuls mais codéposables avec d'autres, à partir d'une solution aqueuse de leurs ions simples ou complexes ou d'une combinaison d'entre eux, notamment: zinc, cadmium plomb, argent, cuivre, fer, cobalt, nickel, étain, indium, platine, palladium, or, bismuth, antimoine, tellure, manganèse, thallium, sélénium, gallium, arsenic, mercure, chrome, tungstène, molybdène, associés à un grand nombre de résines polymères filmogènes hydrosolubles. La structure cristalline réelle du dépôt métallique développé, qui paraît imbriqué dans le réseau de la résine polymère pourrait être celle d'un état hautement divisé eu égard notamment à l'aspect et à la densité otpique, une des hypothèses étant celle d'une croissance multidendritique le long des chaînes moléculaires de la résine. Toutefois, l'invention n'est pas liée aux hypothèses et suppositions ainsi énoncées.

Le matériau électrolytique peut, sans inconvénient pour l'obtention de la densification optique du point-image ou segment d'image avec les caractéristiques mentionnées ci-dessus ainsi que sans inconvénient pour son effacement, contenir en plus des cations électrodéposables déjà mentionnées des cations de métaux non électrodéposables à partir d'une solution aqueuse notamment en proportion notable. Cette caractéristique procure une plus grande souplesse pour la formulation de matériaux électrolytiques répondant mieux aux spécifications d'applications particulières différentes.

Au contraire, selon le document FR 2 504 290, l'inscription des marques sur le support d'enregistrement est inhibée et remplacée par un dépôt métallique sur la cathode constituée par l'électrode inscriptrice et/ou par un dégagement d'hydrogène, lorsque la couche de matériau électrochrome contient une proportion notable de cations de métaux non électrodéposables à partir d'une solution aqueuse, tel que les alcalins (à l'exception de l'ion ammonium), les alcalino-terreux, notamment.

Dans le matériau utilisé dans l'invention, la présence d'une quantité notable de cations de métaux non électrodéposables n'a pas d'effet inhibiteur. Cela pourrait être lié en particulier au fait que, selon l'invention, les tensions nécessaires à l'écriture sont au maximum de quelques Volts (alors que selon le document FR 2.504.290, les tensions utilisées sont généralement comprises dans une gamme allant d'environ quelques Volts à plusieurs dizaines de Volts).

Une couche de matériau électrolytique utilisé dans l'invention est généralement une couche continue c'est-à-dire non granulaire, transparente ou substantiellement transparente. Suivant la nature des ions qu'elle contient, elle peut être incolore ou colorée. Dans le cas où la cellule élémentaire fonctionne en transmission, auquel cas la contre-électrode est aussi une électrode transparente, la couche de matériau électrolytique est laissée sous cette forme transparente ou substantiellement transparente et aussi faiblement colorée que possible, sauf si elle constitue aussi un filtre coloré, par exemple pour la réalisation de lucarnes colorées à transmission variable ou de dispositifs d'affichage en couleurs. Dans le cas où la cellule élémentaire fonctionne uniquement par réflexion, il est généralement nécessaire d'ajouter à la couche de matériau électrolytique un pigment masquant et/ou contrastant compatible avec les autres constituants du matériau électrolytique : un tel pigment a pour effet de masquer la contre-électrode si celle-ci ne constitue pas un fond de couleur et/ou de contraste satisfaisant, d'atténuer une possible teinte colorée du matériau électrolytique si une telle coloration existe du fait de la composition et n'est pas désirable et de constituer un fond offrant le contraste le plus souhaitable avec l'aspect noir du point-image ou segment d'image écrit. Un pigment blanc tel que le dioxide de titane, notamment sous les formes cristallines rutile et anatase, dispersé sous forme particulaire dans la couche de matériau électrolytique ou dans une fraction seulement de l'épaisseur de cette couche permet d'obtenir un fond particulièrement blanc. En vue d'obtenir un fond coloré particulier, ce qui peut présenter un intérêt notamment pour la réalisation de dispositifs d'affichage en couleurs, on peut utiliser des pigments colorés, seuls ou en mélange avec un pigment blanc.

De façon surprenante, la couleur d'un pigment coloré ou d'un colorant présent dans le matériau électrolytique s'éteint progressivement jusqu'au noir pratiquement sans coloration résiduelle lorsqu'on augmente progressivement la densité optique d'un point-image ou segment d'image. Tout se passe comme si le rayonnement coloré réfléchi ou transmis (suivant le cas) était filtré par l'écran gris neutre produit par le point-image ou segment d'image écrit. Cette particularité remarquable permet la réalisation de dispositifs d'affichage multi-couleurs par synthèse additive trichrome avec trois matériaux électrolytiques colorés chacun selon l'une des trois couleurs primaires.

Le matériau électrolytique utilisé dans l'invention peut comporter selon les cas les ions d'un métal seul ou de plusieurs métaux pris parmi la plupart des métaux cathodiquement déposables seuls ou codéposables à plusieurs. On peut ainsi selon les cas, changer les conditions d'obtention du dépôt d'un seul de ces métaux et/ou modifier les particularités d'écriture ou d'effacement et/ou l'aspect d'un tel dépôt ou encore obtenir par réduction cathodique un alliage pouvant présenter un aspect et/ou des caractéristiques d'écriture ou d'effacement et/ou des particularités combinant ceux des métaux déposés individuellement, mais aussi présenter un aspect et/ou des caractéristiques et/ou des particularités d'écriture et d'effacement complètement nouveaux, par exemple, en ce qui concerne la mémoire (c'est-à-dire la persistance de la coloration, densification ou opacification du point-image ou segment d'image en l'absence de tension électrique imposée à la cellule élémentaire).

Selon un mode de réalisation préféré du matériau électrolytique, le sel métallique hydrosoluble ou le mélange hydrosoluble de sels métalliques est hygroscopique et préférentiellement déliquescent en présence d'humidité atmosphérique. Selon ce mode préféré, une couche ou une pellicule de matériau électrolytique de quelques micromètres à plusieurs dizaines de micromètres d'épaisseur non enfermée dans une enceinte scellée conserve, en permanence, jusqu'à une humidité atmosphérique très basse, une conductivité électrique ionique élevée qui permet de faire fonctionner la cellule de modulation élémentaire ave une tension au maximum de quelques Volts. Cette conductivité électrique ionique élevée est due au fait qu'avec des sels hygroscopiques, la couche de matériau électrolytique, bien qu'elle ait l'aspect et la consistance solide d'une couche sèche, conserve une certaine quantité d'eau en équilibre avec l'humidité atmosphérique. Cette eau interne, dans laquelle les sels metalliques se trouvent dissous en concentration très élevée, assure à la couche de matériau électrolytique une conductivité ionique notable qui varie avec l'humidité atmosphérique mais reste élevée jusqu'à ses teneurs les plus basses, avec une valeur qui dépend du degré d'hygroscopicité ou déliquescence de la combinaison de sels choisie.

Selon ce mode préféré de composition du matériau électrolytique, on peut éviter de sceller de façon rigoureusement étanche la cellule élémentaire de modulation de la lumière, à la différence de la plupart des dispositifs d'affichage électrochromiques de l'art antérieur, ce qui représente une simplification considérable de la fabrication de la cellule ou du dispositif et une réduction de son coût. En effet, on peut tolérer dans une très large mesure l'effet d'une pénétration d'humidité atmosphérique dans la cellule et celui d'une perte d'eau contenue dans la couche de matériau électrolytique. De manière surprenante, on peut également tolérer l'effet d'une pénétration d'oxygène atmosphérique dans la cellule. On aurait pu craindre que, lors du fonctionnement d'une celule élémentaire de modulation de la lumière non scellée de façon rigoureusement étanche, les variations de l'humidité atmosphérique relative, pouvant entraîner des variations de la teneur en eau du matériau électrolytique, puissent produire des variations significatives d'impédance des cellules élémentaires entraînant des fluctuations correspondantes des caractéristiques électro-optiques. Mais, en fait, tout se passe comme si, avec les épaisseurs considérées pour la couche de matériau électrolytique, les variations d'impédance dues aux variations de résistivité du matériau électrolytique étaient, dans un large intervalle de variation de cette dernière, secondaires par rapport à l'impédance d'ensemble de la cellule, qui comprend notamment, comme autres facteurs contribuant à l'impédance de la cellule, les multiples polarisations correspondant aux divers processus électrochimiques intervenant à chaque électrode (polarisations d'activation électrochimique, polarisations de concentration, notamment). En tout état de cause, il est possible de compenser une variation sensible de l'impédance d'ensemble de la cellule par une modification de la tension électrique d'écriture.

Une isolation protectrice de la cellule ou du dispositif est souhaitable ou même nécessaire, en cas de fonctionnement de la cellule de modulation de la lumière dans des ambiances atmosphériques extrêmes et/ou agressives et/ou corrosives, en vue de limiter ou d'empêcher l'accès du milieu extérieur aux composants de la cellule ou du dispositif. Mais l'incidence sur la structure, les problèmes de fabrication et les coûts est très différente de celle de l'obligation d'avoir à assurer à chaque cellule ou groupe de cellules ou dispositif un scellement ou une protection rigoureusement étanche capable d'assurer et de conserver une isolation protectrice rigoureusement étanche malgré les contraintes thermiques ou mécaniques auxquelles la cellule ou dispositif peut être soumis.

Une couche de matériau électrolytique utilisé dans l'invention, qui possède une consistance solide en l'absence de contraintes extérieures appliquées, présente, sous l'effet de telles contraintes, un comportement plastique ou viscoélastique (dont les caractéristiques dépendent notamment de la nature de la résine polymère, du degré de réticulation). Ce comportement est d'une grande importance. Il permet d'une part à la couche de matériau électrolytique d'être conformée aux défauts de planéité de l'une et/ou l'autre électrode, ainsi qu'à un défaut de parallélisme entre les deux électrodes assurant un excellent contact physique et électrique malgré ces défauts. D'autre part, à l'interface électrode de travail ou contre-électrode - couche de matériau électrolytique, ces derniers restent liés et un bon contact physique et électrique reste assuré même si une déformation globale ou locale affecte la cellule ou le dispositif de modulation de la lumière grâce à la complaisance du matériau électrolytique. En outre, ce comportement plastique ou viscoélastique accroît la durée de vie, c'est-à-dire le nombre de cycles écriture-effacement accessible. Il est connu que les réactions d'écriture et d'effacement d'un dispositif électrochromique entraînent des déformations et contraintes locale dues aux changements morphologiques associés à ces réactions électrochimiques. A l'interface de deux solides susceptibles de ne présenter tous deux que des déformations élastiques dans les conditions considérées, notamment des solides fragiles, même de petites déformations peuvent entraîner de fortes contraintes dont la répétition cyclique est susceptible d'altérer la qualité du contact, spécialement du contact électrique, et de réduire la durée de vie du dispositif. Cet inconvénient, propre aux dispositifs électrochromiques de l'art antérieur où le matériau électrochrome et dans certains cas l'électrolyte sont des solides fragiles, n'affecte pas les dispositifs selon l'invention où la qualité du contact est maintenue à chaque interface électrode de travail ou contre-électrode - couche de matériau électrolytique, en raison de la complaisance de l'un au moins de ces solides.

Les propriétés physiques mentionnées ci-dessus du matériau électrolytique permettent de simplifier considérablement la construction d'une cellule ou dispositif de modulation de la lumière, de réduire les exigences vis-à-vis des matériaux constitutifs et composants et de permettre la réalisation en particulier de très grands panneaux d'affichage. En effet, il n'est pas nécessaire de prévoir un espaceur spécifique destiné à maintenir entre électrode de travail et contre-électrode un parallélisme rigoureux et un écartement précis. Une couche de matériau électrolytique déposée par des techniques industrielles d'application ou d'enduction connues en général en elles-mêmes telles que lame d'air, barreau à fil, raclette, extrusion, calandrage, sérigraphie, notamment suffit à constituer l'espaceur et à définir un écartement de précision suffisante. Le support des électrodes de travail transparentes peut être sans inconvénient, par exemple, un plaque de verre étiré. Des panneaux d'affichage de très grande surface (comprenant une multiplicité de cellules élémentaires d'affichage) peuvent être constitués sans que les déformations (mécaniques, thermiques, vibratoires) auxquelles sont susceptibles d'être sujettes des grandes surfaces puissent avoir un effet nocif sur l'intégrité physique et le fonctionnement de ces cellules élémentaires d'affichage.

Par un choix approprié de la résine polymère hydrosoluble filmogène et en tenant compte d'autres facteurs de composition, le matériau électrolytique utilisé dans l'invention présente des propriétés adhésives et plus spécifiquement un toucher collant (connu sous l'expression "tack") ou collant de contact (connu sous l'expression "pressure sensitive adhesion"). De telles résines peuvent être notamment et non limitativement l'hydroxyéthylcellulose, la polyvinylpyrrolidone, l'alcool polyvinylique, ou équivalent. En présence d'une concentration élevée d'un pigment contrastant, ou en cas d'utilisation d'une résine polymère hydrosoluble qui ne procure pas ce toucher collant, ou encore lorsque la résine polymère se trouve fortement réticulée dans le matériau électrolytique, le collant de surface peut se trouver fortement réduit ou inexistant ; dans ces cas, on constitue avantageusement la couche de matériau électrolytique de façon composite avec trois couches superposées dont les deux couches externes sont formulées à l'aide d'une résine adéquate et ne contiennent ni agent réticulant ni pigment contrastant, ou suffisamment peu pour ne pas affecter le toucher collant, la couche interne 7 pouvant être dépourvue de ce toucher collant (figure 6). L'existence d'un tel toucher collant ou collant de surface permet également de simplifier la fabrication des cellules et dispositif de modulation de lumière. En effet, la cohésion mécanique de chaque cellule peut être maintenue par les seules propriétés de collant de contact de la couche de matériau électrolytique adhérant à la fois à l'électrode de travail et à la contre-électrode , sans qu'il soit nécessaire de prévoir des moyens mécaniques additionnels extérieurs destinés à maintenir la cellule. En outre, l'adhésion du matériau électrolytique aux deux électrodes (de travail et contre-électrode) assure un excellent contact physique et électrique du conducteur électronique et du conducteur ionique à chaque interface sans qu'il soit nécessaire d'appliquer et de maintenir une pression sur la cellule et par conséquent sans qu'il soit nécessaire de prévoir des moyens mécaniques à cet effet. La combinaison d'un tel collant de contact et de la déformabilité plastique ou viscoélastique déjà mentionnée permet de réaliser des panneaux d'affichage de grandes dimensions pouvant avoir une structure très simple et qui ne sont pas affectés par les déformations thermiques et mécaniques et les vibrations auxquelles peuvent être soumises de tels panneaux.

Dans le fonctionnement d'une cellule élémentaire électrochromique, il se produit à la contre-électrode une réaction électrochimique conjuguée de celle qui se produit à l'électrode de travail : une oxydation anodique si l'autre est une réduction cathodique, et vice versa. Il doit donc exister à la contre-électrode un couple redox auxiliaire susceptible de passer réversiblement d'un de ses termes à l'autre par oxydo-réduction électrochimique ; faute d'un tel couple redox auxiliaire réversible, l'oxydation et la réduction à la contre-électrode peuvent impliquer la dégradation de matériaux constitutifs de la cellule et/ou la génération d'espèces gazeuses pertubatrices du fonctionnement.

Le matériau électrolytique utilisé dans l'invention contient déjà intrinsèquement au moins un premier couple redox auxiliaire qui est précisément le couple redox qui est mis en oeuvre à l'électrode de travail : le couple ion(s) métallique(s)-métal ou alliage. Cependant, avant fonctionnement de la cellule, le même terme du couple est présent à l'électrode de travail et à la contre-électrode, alors que le fonctionnement requiert la présence de termes conjugués. Toutefois, il suffit par exemple d'appliquer initialement une tension suffisante pendant quelques secondes pour créer la dissymétrie nécessaire pour que la cellule fonctionne correctement : tout se passe comme si la cellule contenait toujours une quantité suffisante d'espèces électroactives oxydables pour permettre sans dommages une telle dissymétrisation. Un couple redox auxiliaire de ce type permet un fonctionnement satisfaisant par réflexion si on incorpore au matériau électrolytique un pigment masquant qui dissimule la contre-électrode. Dans le fonctionnement par transmission (avec un matériau électrolytique resté transparent et une contre-électrode transparente) l'effacement du dépôt visible sur une des électrodes s'accompagne de la formation d'un dépôt visible sur l'autre électrode et la transmission maximale de la cellule est réduite.

Le matériau électrolytique utilisé dans l'invention peut aussi contenir, intrinsèquement, un second couple redox auxiliaire dont la forme réduite est d'une part hydrosoluble en présence des autres constituants hydrosolubles du matériau, et, d'autre part, incolore ou peu colorée aux concentrations utilisées. Un couple redox auxiliaire de ce type permet un fonctionnement satisfaisant aussi bien en transmission qu'en réflexion, évitant en transmission l'inconvénient mentionné plus haut. La présence intrinsèque de ce second couple redox auxiliaire dans le matériau électrolytique peut avoir deux origines : soit lorsqu'un ion métallique simple ou complexe cathodiquement réductible en métal, introduit comme tel dans le matériau électrolytique, peut passer réversiblement à un degré d'oxydation plus élevé ; c'est le cas, entre autres, du plomb, de l'argent, du cuivre, du fer, du mercure, de l'étain, notamment ; par exemple, Cu-(I), Fe(II), introduits pour créer respectivement les processus électrochromiques $Cu(I) \rightleftharpoons Cu(O)$, $Fe(II) \rightleftharpoons Fe$-

(O), crèent en même temps les couples redox auxiliaires Cu(I) $\rightleftarrows$ Cu(II) et Fe(II) $\rightleftarrows$ Fe(III); soit lorsqu'un des anions du mélange hydrosolubles de sels du matériau électrolytique peut passer réversiblement à un degré d'oxydation plus élevé ; c'est notamment le cas des anions halogénure : par exemple, la présence de l'anion chlorure ou de l'anion bromure crée en même temps des couples redox auxiliaires tels que $2Cl^- \rightleftarrows Cl_2$, $3Br^- \rightleftarrows Br_3^-$.

On peut aussi introduire extrinsèquement dans le matériau électrolytique utilisé dans l'invention, s'il n'en contient pas intrinsèquement, un couple redox auxiliaire du type précédent, c'est-à-dire dont la forme réduite est hydrosoluble en présence des autre constituants hydrosolubles du matériau et incolore ou peu colorée aux concentrations utilisées.

Une telle présence d'un couple redox auxiliaire dans le matériau électrolytique correspond à une composition préférée du matériau électrolytique particulièrement avantageuse : on trouve en effet qu'il suffit alors à la contre-électrode de présenter de simples propriétés de conduction électronique (et de transparence optique si la cellule est destinée à fonctionner par transmission) pour convenir, par opposition avec les contre-élecgtrodes de structure et composition complexes de beaucoup de dispositifs électrochromiques de l'art antérieur. De très nombreux matériaux, notamment des matériaux commercialement disponibles, peuvent ainsi directement convenir comme matériaux de contre-électrode.

Enfin, le matériau électrolytique peut être associé à une contre-électrode ayant elle-même des propriétés de couple redox par exemple une contre-électrode formée d'un métal anodiquement oxydable de façon réversible (tel que par exemple le plomb auquel correspond le couple redox $Pb \rightleftarrows PbO_2$), ou encore d'une contre-électrode recouverte d'une couche d'un oxyde ou composé solide capable d'évoluer réversiblement entre deux degrés d'oxydation différents.

Un matériau électrolytique utilisé dans l'invention est un matériau continu, c'est-à-dire non granulaire, transparent, contrastable et opacifiable dans sa masse, de consistance solide, possédant une déformabilité plastique ou viscoélastique, possédant une conductivité ionique permanente qu'il est susceptible de surcroît de conserver même s'il est exposé à l'atmosphère, et encore susceptible de présenter un collant de contact, lequel matériau, conformé en couche ou pellicule de faible épaisseur, préférentiellement de quelques micromètres à plusieurs dizaines de micromètres d'épaisseur, et placé au contact d'une première électrode ou élecrode de travail, transparente, par une face et d'une seconde électrode ou contre-électrode par la face opposée, constitue et comprend à la fois le matériau électrochrome, l'électrolyte et un couple redox auxiliaire de la cellule de modulation de lumière ainsi constituée, et éventuellement l'espaceur, des moyens de cohésion de la cellule et des moyens de maintien des contacts électriques internes. En tant que matériau électrochrome, il est susceptible de subir au contact de l'électrode transparente de travail un changement réversible de degré d'oxydation accompagné d'un changement réversible de coloration et/ou de densité optique. Par réduction cathodique, il se forme à l'interface un métal ou alliage métallique apparaissant ainsi comme un noircissement ou une opacification et constituant un point-image ou segment d'image présentant un ensemble remarquable de caractéristiques. Par oxydation anodique, le métal ou alliage est redissous en ions métalliques, reconstituant ainsi l'aspect initial du milieu. En tant qu'électrolyte, il possède une conductivité ionique élevée dû à sa nature de solution aqueuse très concentrée, conductivité qu'il conserve en permanence même sans scellement rigoureusement étanche dans un mode préféré de réalisation. En tant que couple redox auxiliaire, il permet que s'effectue réversiblement à la contre-électrode une réaction électrochimique conjuguée de celle qui se produit au même moment à l'électrode de travail.

Un tel matériau électrolytique utilise dans l'invention est constitué au moins par un mélange homogène de consistance solide comprenant un mélange d'au moins :

a) Au moins un sel hydrosoluble ou un mélange hydrosoluble de sels d'au moins un métal cathodiquement déposable à partir d'une solution aqueuse d'un de ses ions simples ou complexes ;

b) Au moins une résine polymère filmogène primitivement hydrosoluble préférentiellement dans la proportion de une partie en poids pour 0.05 à 50 parties de sels anhydres ;

c) de l'eau ; et

d) un couple redox auxiliaire

et pouvant comprendre, en outre en tant que de besoin et non limitativement : des cations non électro-déposables en solution aqueuse ; au moins un solide sous forme particulaire dispersée notamment un pigment contrastant et/ou masquant au moins un agent colorant ; au moins un acide ; au moins un agent de réticulation ; au moins un agent complexant; au moins un additif dissous ou dispersé, susceptible d'améliorer les propriétés et l'utilisation du matériau électrolytique; au moins un agent de formation et/ou d'application en couche ou pellicule du matériau électrolytique.

Selon une variante de réalisation de couches ou pellicules du matériau électrolytique, celles-ci peuvent être divisées en au moins deux couches superposées ou imbriquées contenant chacune un pourcentage différent de chaque constituant de l'ensemble.

Selon une autre variante de réalisation, on peut constituer une couche ou pellicule de matériau composite utilisé dans une cellule selon l'invention par superposition ou imbrication d'au moins deux matériaux électrolytiques différents. Par exemple, il peut être avantageux de constituer une couche composite comportant une pellicule non adhésive mais mécaniquement très solide, constituée par exemple avec une résine telle que de la carboxyméthylcellulose de sodium réticulée dans la pellicule, et une ou deux couches externes moins solides mécaniquement mais adhésives par contact, constituées par exemple avec de la polyvinylpyrrolidone ou de l'hydroxyéthylcellulose.

Selon une autre variante le matériau est constitué par au moins deux matériaux électrolytiques chacun tel que défini précédemment.

Les métaux utilisable ont été déjà mentionnés. On peut utiliser, selon le cas, un métal seul ou plusieurs métaux pris parmi les métaux cathodiquement déposables à partir d'une solution aqueuse et les métaux qui ne se déposent pas ou mal individuellement, mais co-déposent avec certains des métaux précédents: Tungstène, Molybdène, notamment.

Les sels métalliques utilisables sont des composés ioniques où le métal est présent sous forme de cation ou incorporé à un complexe cationique, les anions de ces composés et d'autres conditions, notamment de pH, étant choisis tels que les composés soient substantiellement complètement solubles dans un milieu aqueux. Des anions convenables peuvent être trouvés par exemple parmi les suivants : chlorure, nitrate, sulfate, borate, fluorure, iodure, bromure, fluoborate, fluosilicate, fluogallate, dihydrogenophosphate, chlorate, perchlorate, bromate, sélénate, thiosulfate, thiocyanate, formiate, acétate, butyrate, hexanoate, adipate, citrate, lactate, oléate, oxalate, propionate, salicylate, glycinate, glycocollate, glycérophosphate, tartrate, acétyl-acétonate, isopropylate, benzoate, malate, benzène sulfonate, 1 phénol-4 sulfonate, notamment.

Les sels utilisables peuvent aussi être des composés ioniques dans lesquels le métal forme un anion complexe à orbitale externe associé à un cation tel que, par exemple, l'ion ammonium. Des exemples de tels complexes anioniques sont l'ion chloropalladate, l'ion chloraurate, l'ion stannate, notamment.

En ce qui concerne la préparation de matériaux contenant un sel ou mélange de sels hygroscopique et préférentiellement déliquescent, la plupart des métaux ont certains de leurs sels hygroscopiques ou déliquescents, le plus souvent des halogénures, des nitrates, des perchlorates, des chlorates, des thiocyanates, notamment.

Un mélange déliquescent de sels est généralement obtenu à partir de sels individuellement déliquescents, mais des mélanges peuvent être déliquescents sans que tous leurs constituants le soient, et ils peuvent être plus déliquescents, c'est-à-dire cristalliser à une certaine humidité relative plus basse que le plus déliquescent d'entre eux.

On trouve particulièrement avantageuse la présence d'anions halogénure (chlorure, bromure, iodure, fluorure) dans le matériau électrolytique, lorsqu'une telle présence est compatible avec les autres constituants du matériau et les propriétés attendues. On trouve, en effet, que la présence d'anions halogénure est souvent avantageuse en ce qui concerne notamment la déliquescence, la fonction de couple redox auxiliaire, la solubilité des ions métalliques, la facilité d'électrodéposition et de redissolution du métal ou alliage métallique et la réversibilité du processus écriture-effacement.

L'emploi dans le matériau d'une association de sels de plusieurs métaux déposables offre des possibilités plus étendues que l'emploi d'un métal unique. Tout d'abord, certains sels métalliques qui ne sont pas ou sont difficilement utilisables seuls en concentration relative élevée le deviennent dans un mélange en faible proportion avec d'autres où leurs limitations spécifiques (par exemple solubilité, coloration, etc...) deviennent acceptables ou inapparentes. On peut aussi changer dans certains cas les conditions dans lesquelles se dépose un cation électrodéposable et/ou modifier les particularités d'écriture et d'effacement et/ou d'aspect par la présence d'autres cations. Enfin, par association de plusieurs ions métalliques différents, on peut obtenir, par réduction cathodique, le dépôt d'au moins deux métaux en un alliage dont les propriétés, l'aspect, la densité optique, le reflet peuvent être complètement différentes de ceux des métaux individuels. On peut aussi obtenir des particularités de l'ecriture et de l'effacement nouvelles et multiples, notamment en ce qui concerne la mémoire (c'est-à-dire la persistance du point-image ou segment d'image écrit après suppression de la tension d'écriture), l'existence et la valeur d'un seuil de tension, c'est-à-dire d'une tension minimale d'écriture, et plus généralement des caractéristiques non-linéaires diverses particulièrement intéressantes pour l'adressage matriciel sans perte de contraste ni diaphotie de dispositifs d'affichage comportant un grand nombre de points-image.

On trouve la présence, dans le matériau électrolytique, en association avec d'autres ions métalliques, d'ions cuivre même en très faible concentration relative, particulièrement avantageuse notamment en ce qui concerne la facilité d'électrodéposition et de redissolution, la réversibilité du processus écriture-effacement, l'aspect du dépôt.

On a trouvé avec surprise qu'un rapport élevé des sels hydrosolubles (anhydres) à l'eau contenue dans le matériau électrolytique, préférentiellement supérieure à 0.05 et plus préférentiellement encore supérieur à 1 avait un effet favorable sur diverses caractéristiques de fonctionnement de la cellule notamment aspect et densité optique du point-image ou segment d'image écrit, polarisations, réversibilité.

Les résines polymères filmogènes primitivement hydrosolubles utilisables, comprennent des résines capables de former des solutions aqueuses vraies et également des résines capables de former une dispersion colloïdale dans l'eau. On peut citer à titre d'exemples non limitatifs et purement indicatifs des polymères tels que le polyoxyéthylène, la polyvinylpyrrolidone, l'alcool polyvinylique, les éthers cellulosiques tels que, par exemple, l'hydroxyéthylcellulose et la carboxyméthylcellulose, l'alginate de sodium, l'acide polyacrylique et ses dérivés, la gélatine, la gomme arabique, l'acide polystyrène sulfonique, le polyacrylamide, notamment Plusieurs résines compatibles entre elles, c'est-à-dire ne coprécipitant pas, peuvent être utilisées en mélange. Préférentiellement, le poids moléculaire des résines est compris entre 10 000 et 10 000 000. Les qualités mécaniques de la couche de matériau électrolytique peuvent être améliorée, pour autant que cela soit souhaité, avec une résine ayant un poids moléculaire situé dans la partie supérieure de l'intervalle indiqué (vers 10 000 000). La résine polymère, outre ses fonctions dans la couche de matériau électrolytique, confère au matériau ou à une composition fluide formatrice une viscosité qui facilite l'application, en couches minces, viscosité qu'on peut ajuster de diverses manières.

En particulier, on peut employer des résines polymères qui confèrent au materiau électrolytique des propriétés d'adhésion de contact (toucher collant ou collant de contact), telles que, par exemple, de manière non limitative et purement indicative, l'hydroxyéthylcellulose, l'alcool polyvinylique, la polyvinylpyrrolidone, notamment

soit pour constituer une couche ou pellicule unique, soit pour constituer au moins une couche externe d'une pellicule composite.

L'eau est en quantité telle que d'une part le matériau électrolytique conserve sa consistance solide en l'absence de contraintes extérieures, d'autre part son rapport aux sels hydrosolubles soit ainsi qu'il a été indiqué précédemment.

Les cations de métaux non électrodéposables à partir d'une solution aqueuse peuvent être pris de façon non limitative et purement indicative parmi les alcalins, les alcalino-terreux, l'aluminium, le béryllium, la plupart des terres rares et, d'une manière générale, les cations des métaux très réducteurs non électrodéposables en solution aqueuse. Ils comprennent également les cations non réductibles en un métal, tels que par exemple l'ion ammonium, les ions ammonium quaternaires, notamment.Les sels hydrosolubles de ces cations doivent être entendus comme hydrosolubles en présence des autres sels hydrosolubles du matériau, c'est-à-dire choisis tels que le mélange de la totalité des sels présents dans le matériau soit hydrosoluble.

On a trouvé de façon inattendue que un ou plusieurs solide pouvait être dispersé de manière homogène dans le matériau électrolytique sous forme particulaire pour notamment améliorer ou modifier les propriétés mécaniques, l'aspect du point-image ou segment d'image écrit, la diffusion et la réflexion de la lumière. En particulier un tel solide est un pigment masquant et/ou contrastant ayant pour fonctions de : masquer la contre-électrode si celle-ci ne constitue pas un fond de couleur et/ou de contraste satisfaisants et constituer un fond offrant le contraste le plus souhaitable avec l'aspect noir du point-image ou segment d'image écrit (par exemple, masquer l'aspect noir d'une contre-électrode contenant du carbone et lui substituer un fond contrastant le plus souvent blanc) ; atténuer une possible teinte colorée parasite du matériau électrolytique en la noyant ; et créer éventuellement un fond contrastant coloré particulier, en vue de la réalisation de dispositifs de modulation de lumière colorés ; plus spécialement, créer trois fonds colorés, chacun selon l'une des trois couleurs fondamentales de la synthèse trichrome additive en vue de la réalisation de dispositifs d'affichage multi-couleurs.

De nombreux pigments minéraux et organiques blancs et colorés sont utilisables sous réserve de leur absence d'interaction chimique avec les autres constituants du matériau électrolytique. Un pigment blanc remarquablement stable dans la plupart des milieux électrolytiques selon l'invention et possédant un très grand pouvoir couvrant ainsi qu'un indice de blancheur élevé est le dioxyde de titane, principalement sous les formes cristallines rutile et anatase. Le pigment peut être utilisé en coopération avec un pigment coloré, soit en mélange, soit en superposition dans une couche composite de matériau électrolytique, ce qui permet de modifier la saturation de la couleur et/ou de bénéficier pour un fond coloré du pouvoir couvrant élevé du dioxyde de titane. De tels pigments colorés sont, par exemple, le chromate de zinc, le minium, le bleu de cobalt, l'oxyde de chrome, notamment. On peut, de même, associer le dioxyde de titane et un colorant soluble.

Suivant la nature du pigment, sa granulométrie, sa couleur, son pouvoir couvrant et l'effet désiré, le taux de pigment dispersé dans le matériau électrolytique peut varier dans de larges limites, de préférence entre 0,1 et 50 parties en poids de pigment pour une partie de résine polymère filmogène.

Si nécessaire ou désiré, dans le cas d'une cellule de modulation de la lumière fonctionnant par transmission, le matériau électrolytique peut comporter un ou plusieurs colorants dissous ou dispersés, en vue de réaliser des filtres colorés à transmission ou transparence variable pour des dispositifs de modulation tels que des lucarnes colorées à transmission ou transparence variable et des dispositifs d'affichage colorés ; plus spécialement en vue de réaliser trois filtres colorés chacun selon l'une des trois couleurs fondamentales de la synthèse trichrome additive pour la constitution de dispositifs d'affichage multicouleurs. De nombreux colorants, notamment du type de ceux utilisés pour les gouaches et les aquarelles, sont utilisables sous réserve de leur absence d'interaction chimique avec les autres constituants du matériau électrolytique.

Comme déjà indiqué, le matériau électrolytique peut comporter, si nécessaire, un ou des couples redox auxiliaires additionnels dont la forme réduite est d'une part hydrosoluble en présence des autres constituants hydrosolubles du matériau et, d'autre part, incolore ou peu coloré aux concentrations utilisées, ayant notamment pour fonctions de modifier le seuil de tension d'écriture, d'améliorer la réversibilité du processus d'écriture-effacement et d'augmenter le nombre de cycles possibles. On peut utiliser par exemple des espèces métalliques présentant deux degrés d'oxydation dont la forme réduite est soluble ou solubilisable par exemple par complexation en milieu aqueux.

Le matériau électrolytique peut comporter en outre un acide en quantité suffisante pour maintenir le pH à une valeur convenable et empêcher l'hydrolyse et/ou la précipitation des espèces métalliques présentes et/ou la gélification ou la synérèse ou la floculation de la résine dans le matériau électrolytique. On peut utiliser par exemple de manière non limitative et purement indicative l'acide chlorhydrique, l'acide bromhydrique, l'acide acétique, l'acide perchlorique, l'acide chlorique, l'acide formique, l'acide nitrique, ou équivalent.

Le matériau électrolytique peut comporter, en outre, un agent de réticulation de la résine polymère, en vue de renforcer ses qualités mécaniques, notamment la dureté et la cohésion, de la couche de matériau électrolytique. On peut utiliser à cet effet les agents de réticulation habituels des résines polymères, tels que des composés et résines polyfonctionnels, par exemple le glyoxal, la diméthylolurée, un composé époxy, un carbodiimide, un isoxazole, l'amidon dialdéhyde, noptamment. On peut aussi, dans le cas de résines possédant par exemple des groupes carboxyliques, comme la carboxyméthylcellulose de sodium, utiliser des cations polyvalents comme Zr(IV), Sn(IV), Al(III), notamment. Dans le cas par exemple de Al(III), le poids de cation peut varier préférentiellement entre 0,01 et 0,5 parties pour une partie de résine. Avec de nombreux ions métalliques polyvalents déposables utilisables selon l'invention, la réticulation est obtenue spontanément sans qu'il soit nécessaire de rajouter un agent réticulant supplémentaire. Les conditions de mise en oeuvre de l'agent de réticulation sont choisies de manière telles que la réticulation soit effectuée après constitution et application de la couche de matériau électrolytique. Par exemple, avec un cation polyvalent, une concentration suffisamment faible associée à la présence d'un acide volatil empêche la réticulation notable tant que l'acide n'a pas été éliminé par évaporation. La réticulation de la résine réduit la capacité d'adhésion par contact de la couche de matériau électrolytique. Selon une structure préférée de la couche de matériau électrolytique, on associe une couche réticulée, mécaniquement solide et cohérente, mais non adhésive, à une ou deux couches externes moins solides mais adhésives constituées avec une résine adéquate non réticulée.

Le matériau électrolytique peut comporter, en outre, un agent complexant (tel que, par exemple, l'acide tartrique, l'acide citrique, l'anion oxalate, notamment) qui peut aider à solubiliser certains sels métalliques et/ou faciliter le co-depôt de plusieurs ions en un alliage métallique.

Le matériau électrolytique peut comporter, en outre, un ou plusieurs composés, substances, constituants dissous ou dispersés susceptibles d'améliorer la stabilité du matériau électrolytique et/ou ses propriétés optiques, mécaniques, électriques et/ou l'aspect et/ou d'autres caractéristiques du point-image ou segment d'image, la réversibilité du processus écriture-effacement, le nombre de cycles accessible sans dégradation, les vitesses d'écriture et d'effacement, la mémoire, le seuil de tension électrique d'écriture et les caractéristiques électro-optiques.

Le matériau électrolytique peut comporter, en outre, un ou plusieurs agents d'application en couche de faible épaisseur du matériau électrolytique tels que, par exemple, des agents tensio-actifs, des substances plastifiantes, notamment.

Le matériau électrolytique peut éventuellement contenir des résidus d'agents de préparation, d'application ou de conservation propres à un mode particulier de fabrication ou d'application en couche ou pellicule du matériau électrolytique ou d'une composition formatrice du matériau électrolytique.

Un procédé particulier préféré, de fabrication du matériau électrolytique et de sa mise en oeuvre en couches ou pellicules de faible épaisseur dans des cellules élémentaires de modulation de la lumière, mais non limitatif, comporte la constitution d'une composition formatrice fluide comprenant au moins les constituants du matériau électrolytique et un supplément d'eau, cette dernière en quantité telle que la composition formatrice fluide présente une fluidité convenable pour l'application ou formation en couche sur au moins une des électrodes d'une cellule élémentaire de modulation de la lumière et le traitement - notamment séchage, traitement thermique-éventuel jusqu'à obtention de la consistance solide.

Par composition formatrice fluide, on entend une composition présentant, spontanément ou sous l'effet de contraintes extérieures appliquées, telles que celles nécessaires à son application en couche, les propriétés d'un matériau fluide, susceptible de constituer le matériau électrolytique dans sa consistance solide spontanément par interruption des contraintes extérieures, par évaporation d'un excès d'eau et/ou de substances volatiles ou encore par induction d'une consistance solide par des moyens et traitements divers. La composition formatrice fluide comprend aussi le matériau électrolytique dans sa composition finale tant qu'il reste déformable sans rupture de manière continue en présence de contraintes extérieures appliquées.

Une composition formatrice fluide du matériau électrolytique est obtenue par dissolution des constituants hydrosolubles et dispersion des constituants non solubles dans de l'eau, suivies éventuellement de l'évaporation d'une partie de cette eau ou, au contraire, de la dilution par un ajout d'eau jusqu'à obtention de la viscosité convenable. La composition formatrice peut contenir aussi des substances destinées à faciliter son application ou formation en couche, telles que par exemple des agents tensio-actifs, des substances plastifiantes. Elle peut contenir aussi des substances destinées à maintenir la stabilité de la composition formatrice et/ou permettre sa déformabilité continue, c'est-à-dire sans rupture : par exemple, en présence d'un agent de réticulation destiné à réticuler la résine dans la couche de matériau électrolytique, la composition formatrice fluide peut contenir des agents retardateurs de la réticulation, tels que par exemple de manière non limitative des complexants, notamment ; elle peut contenir, pour empêcher l'hydrolyse de sels solubles en cas de dilution poussée, par exemple des acides, en paticulier des acides volatils. De telles substances peuvent être éliminées partiellement ou totalement de la couche de matériau électrolytique, par exemple par évaporation si elles sont volatiles, ou au contraire subsister dans a couche dudit matériau.

Une caractéristique remarquable de ce mode possible de fabrication du matériau électrolytique est de permettre d'ajuster de façon commode la viscosité de la composition formatrice entre des limites extrêmes, allant de celle d'un liquide proche de l'eau à celle d'une pâte solide en l'absence de contraintes extérieures. On peut ainsi ajuster la viscosité à une valeur convenable pour le mode choisi d'application ou formation en couche de faible épaisseur, qu'on peut prendre parmi les techniques connues en elles-mêmes d'application ou formation en couches, telles que, par exemple : sérigraphie, lame d'air, barreau à fil (connue sous le nom de "coating bar"), raclette, extrusion, trempé, notamment, plus généralement l'ensemble des techniques dites de "films épais".

La composition formatrice est appliquée en couche d'épaisseur préférentiellement comprise entre quelques micromètres et plusieurs centaines de micromètres en fonction notamment de sa teneur en eau, de façon à obtenir une couche de matériau électrolytique d'épaisseur préférentiellement comprise entre quelques micromètres et plusieurs dizaines de micromètres, sur l'une au moins des électrodes de la cellule élémentaire de modulation de la lumière. Elle est éventuellement séchée (par air chaud, infra-rouges, exposition à l'atmosphère ambiante, notamment) jusqu'à obtention du matériau de consistance solide dans sa composition finale. Elle peut aussi faire l'objet, éventuellement d'un traitement additionnel, par exemple un traitement thermique, par exemple pour obtenir ou accélérer la réticulation de la résine.

La couche de matériau électrolytique peut être mise en oeuvre dans la cellule élémentaire de modulation de la lumière par application ou formation de cette couche au contact d'une des électrodes, suivie de l'application de l'autre électrode au contact de la face libre de la couche (figure 7A). Avec le mode préféré de réalisation du matériau électrolytique qui lui procure un toucher collant ou collant de contact ou superficiel, la cohésion de la cellule est assurée par la simple adhérence de la couche de matériau électrolytique à chacune des deux électrodes.

En plus de l'adhésion procurée par le collant de surface ou de contact du matériau électrolytique et même en son absence, la formation directe du matériau en couche sur un substrat tel qu'une des électrodes à partir d'une composition formatrice fluide enduite puis séchée peut procurer une adhérence naturelle à ce substrat qui peut être beaucoup plus forte que celle d'une couche de matériau qu'on forme d'abord indépendamment et qu'on fait adhérer ensuite.

La composition formatrice fluide peut être enduite ou appliquée sur une électrode en une seule couche ou en plusieurs couches consécutives avec séchages intermédiaires ou simultanés. Les différentes couches peuvent être identiques entre elles, mais on peut aussi constituer chaque couche avec un pourcentage différent des constituants totaux, l'ensemble les contenant tous. On peut aussi appliquer des couches de matériau électrolytique consécutives de compositions différentes. On obtient ainsi une couche de matériau électrolytique de structure composite. Par exemple, on peut constituer une couche inférieure, c'est-à-dire appliquée directement sur le substrat avec une résine hydrosoluble facilement réticulable telle que, par exemple, la carboxyméthylcellulose de sodium (et un agent de réticulation) et la couche supérieure avec une résine procurant un toucher collant ou collant de contact telle que, par exemple, l'hydroxyéthylcellulose, la polyvinylpyrrolidone, l'alcool polyvinylique, etc ... La couche composite de matériau électrolytique ainsi formée adhère à l'électrode sur laquelle on l'a formée, présente une solidité élevée et présente un collant de contact qui permet, dans mode possible de construction de la cellule élémentaire de modulation de constituer cette dernière en appliquant la seconde électrode sur la surface libre collante de la couche composite à laquelle elle adhère.

On peut aussi appliquer une première couche (simple ou composite) de matériau électrolytique sur une des électrodes et une seconde couche (simple ou composite) sur la seconde électrode, et constituer la cellule élémentaire par la réunion des deux couches en une couche composite unique en mettant en contact les deux couches par leur face libre. Avec au moins une des deux couches composées selon le mode qui lui procure un toucher collant ou collant de contact, la cohésion de la cellule est assurée par la seule adhérence des couches de matériaux aux électrodes et entre elles.

On peut aussi, au lieu de constituer des couches continues avec le matériau électrolytique, diviser celui-ci en grains ou particules et constituer les couches par juxtaposition de tels grains seuls ou maintenus, par exemple par le moyen d'un liant.

Dans un dispositif autonome principalement d'affichage, comportant une multiplicité de points-image et/ou segments d'image, la couche de matériau électrolytique peut, dans certaines constructions être commune à toutes les cellules élémentaires et occuper la totalité de la surface d'écran. Dans d'autres constructions du dispositif, elle peut être distribuée selon une configuration superficielle de portions de couche, c'est-à-dire fractionnée en portions de couche ou couches d'aire réduite indépendantes et réparties sur l'écran, propres chacune à une cellule élémentaire ou encore propres chacune à un groupe restreint particulier de cellules élémentaires (par exemple commune aux cellules d'une même ligne ou d'une même colonne dans un dispositif d'affichage matriciel). L'obtention de telles configurations avec de hautes résolutions est particulièrement aisée avec le présent mode de fabrication de couches de matériau électrolytique, en particulier grâce aux techniques de masques, stencils, écrans de soie, notamment, utilisés dans des procédés de dépôt dits de "films épais".

Il est également possible, dans une variante du procédé, de constituer la couche de matériau électrolytique sur un substrat provisoire, constitué d'un matériau anti-adhérent tel que le polytétrafluoréthylène, puis de la transférer sur l'une ou l'autre des deux électrodes.

Une cellule de modulation de la lumière comporte, au moins, en combinaison :

1º) Une première électrode (électrode de travail) transparente ou substantiellement transparente, et électroniquement conductrice ;

2º) Une seconde électrode (contre-électrode) écartée transversalement de l'électrode de travail et électroniquement conductrice.

3º) Au moins une couche (ou position de couche) du matériau électrolytique décrit précédemment interposée entre entre les deux électrodes et en contact avec elles dans la région d'un point-image ou d'un segment d'image.

4º) Des zones d'amenée du courant électrique sur l'électrode de travail et la contre-électrode, aptes notamment à permettre d'une part d'appliquer à l'électrode de travail une tension électrique négative par rapport à celle de la contre-électrode, et, d'autre aprt, de faire passer entre les électrodes un courant dont le sens est opposé à celui du courant électrique résultant de l'application de la tension précédente.,

Un dispositif élémentaire de modulation de la lumière comprend au moins :

. Une première électrode (électrode de travail) transparente ou substantiellement transparente,et électroniquement conductrice, éventuellement portée par un premier substrat, ou substrat frontal, transparent ;

. Une seconde électrode (contre-électrode) ou électrode auxiliaire écartée transversalement de l'électrode de travail et électroniquement conductrice, transparente ou substantiellement transparente si le dispositif élémentaire est destiné à fonctionner par transmission, sans exigence de transparence si le dispositif élémentaire n'est destiné à fonctionner que par réflexion, éventuellement portée par un second substrat, transparent si le dispositif élémentaire est destiné à fonctionner par transmission ;

. Au moins une couche (ou portion de couche) de matériau électrolytique tel que décrit précédemment interposée entre les deux électrodes et en contact avec elles dans la région d'un point-image ou d'un segment d'image.

. Des zones d'amenée du courant électrique sur les électrodes (c'est à dire une cellule de modulation) et

. Des amenées de courant électrique au contact des zones d'amenées du courant électrique ;

. Des connexions électriques prolongeant les amenées de courant ;

. Au moins un substrat mécanique, porteur de ce dispositif.

Un dispositif élémentaire peut comporter, en outre, des moyens de contraste et/ou de masquage de la périphérie de la zone optiquement densifiable (point-image ou segment d'image), si ces moyens ne sont pas déjà intrinsèquement créés par les composants du dispositif élémentaire. Il peut comporter, également, des moyens d'isolation et de protection des composants vis-à-vis de l'atmosphère ambiante et/ou des moyens de maintien de la cohésion du dispositif et/ou de la permanence des contacts électriques internes.

Un dispositif autonome de modulation de lumière comporte au moins un tel dispositif élémentaire et généralement une pluralité, (notamment dans le cas d'un dispositif d'affichage) et en outre la prolongation jusqu'à un ou plusieurs connecteurs ou une ou plusieurs zones de connexion électriques des dispositifs élémentaires et des moyens mécaniques porteurs conférant au dispositif une rigidité structurelle, le tout permettant d'utiliser ce dispositif comme une unité autonome. Les composant complémentaires du dispositif autonome sont notamment : support ou substrats mécaniques, boîtier, encapsulation, connexions internes, connecteur(s) ou zone(s) de connexion, circuit imprimé, ainsi qu'on l'a déjà décrit. Dans le cas particulier d'un dispositif autonome comportant une pluralité ou multiplicité de dispositifs élémentaires, les composants ou constituants extrinsèques des différents dispositifs élémentaires peuvent être confondus et/ou combinés.

Un tel dispositif autonome de modulation de la lumière, en particulier d'affichage, ne comprend que des matériaux solides, et, notamment en conséquence des propriétés précédemment exposées du matériau électrolytique. Il présente une simplicité remarquable de structure et de construction avec des exigences réduites vis-à-vis des matériaux constitutifs et composants et une très grande tolérance vis-à-vis des contraintes extérieures, ce qui permet la construction simple et bon marché de dispositifs de modulation de la lumière, et, notamment de dispositifs d'affichage les plus divers, à adressage direct ou matriciel, et en particulier la réalisation de très grands panneaux d'affichage (tels que, par exemple, pour des stades, des aéroports, etc ...).

En effet, il n'est pas nécessaire de maintenir entre l'électrode et la contre-électrode d'une cellule élémentaire d'affichage un parallélisme rigoureux et un écartement précis, ni par conséquent nécessaire de prévoir un espaceur spécifique ; une couche de matériau électrolytique telle que déposée par des techniques industrielles connues d'enduction ou d'application suffit à constituer l'espaceur et à définir un écartement de précision et de parallélisme suffisants.

Il n'est pas non plus nécessaire d'utiliser une électrode de travail et une contre-électrode d'une planéité sans défauts : la déformabilité ou complaisance plastique ou viscoélastique du matériau électrolytique lui permet d'épouser une courbure générale, si elle existe, ainsi que des défauts locaux, et d'assurer l'excellent contact physique et électrique nécessaire au fonctionnement. C'est ainsi, par exemple, que des électrodes transparentes déposées sur une plaque de verre étiré ordinaire, conviennent à la réalisation de dispositifs d'affichage.

Il n'est pas non plus nécessaire, avec le mode de réalisation du matériau électrolytique utilisé dans l'invention qui lui procure un toucher collant ou collant de contact, de prévoir des moyens mécaniques spécifiques pour maintenir la cohésion de la cellule élémentaire d'affichage, ni des moyens mécaniques pour appliquer et maintenir une pression sur la cellule en vue d'assurer et de conserver l'excellent contact physique et électrique nécessaire à chaque interface conducteur électronique - conducteur ionique pour un bon fonctionnement : l'adhérence de la couche de matériau électrolytique à chaque électrode suffit à maintenir la cohésion de la cellule élémentaire et la qualité et la permanence du contact électrique.

Enfin, avec le mode réalisation du matériau électrolytique qui lui maintient une conductivité permanente même en contact avec l'atmosphère ambiante, il n'est pas nécessaire de prévoir des moyens de scellement rigoureusement étanche de la cellule élémentaire ou dispositif destinés à interdire complètement l'entrée d'air et/ou d'humidité atmosphériques et la sortie d'humidité contenue dans la couche de matériau électrolytique ; une isolation protectrice du dispositif est souhaitable en général ou même nécessaire en cas de fonctionnement dans des ambiances atmosphériques extrêmes, corrosives ou agressives, pour limiter ou empêcher les contaminants et agents de corrosion éventuels présents dans le milieu extérieur d'accéder aux composants du dispositif y compris à ceux extérieurs aux cellules tels que par exemple, les conducteurs de connexion et de raccordement , mais généralement sans avoir à aller aux contraintes d'un scellement rigoureusement étanche de chaque cellule.

En ce qui concerne les dispositifs tels que les panneaux d'affichage de très grande surface, on sait que ceux-ci peuvent se trouver naturellement soumis à un ensemble de contraintes capables d'affecter leur intégrité physique et leur bon fonctionnement : en raison de cette grande taille, des dilatations thermiques différentielles (telles que résultant par exemple de l'exposition unilatérale ou partielle au soleil ou de la proximité asymétrique d'une source de chaleur), des flexions (telles que résultant par exemple de l'effet du vent ou de contraintes mécaniques imposées par l'architecture de soutien ou d'encadrement), des vibrations (induites par exemple par la circulation de véhicules ou par des chocs), etc ..., entraînent des contraintes et déformations locales qui peuvent être considérables, et qui sont susceptibles d'altérer l'intégrité physique des cellules de modulation, de dégrader la qualité du contact électrique aux interfaces et d'altérer l'étanchéité des scellements indispensables dans les dispositifs d'affichage de l'art antérieur, en particulier dans les dispositifs électrochromiques de l'art antérieur. En revanche, dans les dispositifs selon l'invention, la combinaison des propriétés de déformabilité plastique ou viscoélastique, de collant de contact du matériau électrolytique et d'absence de nécessité de scellement rigoureusement étanche, permet aux grands panneaux de ne pas être affectés dans leur intégrité ni dans leur fonctionnement par les contraintes thermiques et mécaniques mentionnées.

On décrit maintenant plus en détail un tel dispositif ainsi généralement décrit.

L'électrode de travail est constituée d'un matériau présentant à la fois des priorités de conduction électrique et de substantielle transparence optique, tel que par exemple, une couche mince, généralement de quelques nanomètres à quelques centaines de nanomètres (quelques dizaines à quelques milliers d'Angströms) d'épaisseur, d'or, d'oxyde d'étain ("TO"), d'oxyde d'indium, d'oxyde mixte d'étain et d'indium ("ITO"), ou équivalent, cette liste n'étant pas limitative et seulement indicative. Une telle couche est généralement déposée sur un substrat transparent tel qu'une plaque de verre ou une feuille de matière plastique qui peut constituer alors un substrat frontal du dispositif élémentaire, et peut même constituer un substrat frontal unique de l'ensemble des électrodes de travail individuelles d'un dispositif autonome lorsque celui-ci comprend une multiplicité de points-image et/ou segments d'image. Dans ce cas, les électrodes de travail individuelles sont constituées par une configuration de portions de couche mince conductrice transparente déposées sur un tel substrat frontal unique ou sont configurées par attaque sélective d'une couche unique. Le verre "NESA" de PPG INDUSTRIES, constitué d'une couche mince d'oxyde d'étain déposée sur une plaque de verre, est un exemple d'électrode transparente et de substrat utilisables dans l'invention.

La contre-électrode est constituée comme l'électrode de travail d'un matériau conducteur et transparent si le dispositif de modulation de la lumière est destiné à fonctionner par transmission ou transparence. S'il s'agit d'une couche mince déposée sur un substrat transparent de verre ou de matière plastique, ce dernier peut constituer un substrat dorsal unique de l'ensemble des contre-électrodes d'un dispositif de modulation lorsque celui-ci comprend une multiplicité de points-image et/ou segments d'image. Dans ce cas, de la même manière que les électrodes de travail individuelles, les contre-électrodes individuelles sont constituées par une configuration de portions de couche mince conductrice transparente déposées sur un tel substrat dorsal unique ou sont configurées par attaque sélective d'une couche unique. Cependant, si le dispositif de modulation comprend déjà un substrat frontal unique susceptible de former un support mécanique pour le dispositif, il peut être avantageux, notamment pour ne pas introduire une éventuelle rigidité additionnelle, d'avoir des contre-électrodes mécaniquement indépendantes les unes des autres et par conséquent, de ne pas constituer de substrat dorsal unique.

La contre-électrode n'a pas besoin d'être transparente si le dispositif de modulation de la lumière est destiné à fonctionner par réflexion. Il lui suffit alors de présenter des propriétés de conduction électronique. Un très grand nombre de matériaux homogènes ou composites présentant une conduction électronique sont susceptibles de convenir. On utilise avantageusement des matériaux de contre-électrode se présentant sous forme de feuilles et de couches de faible épaisseur, et préférentiellement présentant sous cette forme une certaine souplesse ou déformabilité.

On entend par matériau de contre-électrode, un matériau, homogène ou composite, à partir duquel il est possible de constituer une configuration superficielle de contre-électrodes. Un tel matériau peut être par exemple une feuille souple de graphite pyrolytique, une matière plastique chargée de particules de carbone ou de métal, une pâte conductrice pour sérigraphie, une feuille de matière plastique ou de verre dont une face est recouverte d'une couche mince d'un oxyde semi-conduceur transparent.

On peut utiliser par exemple comme matériau de contre-électrode des feuilles métalliques minces, des feuilles souples de graphite pur (feuilles flexibles de graphite "Grafoil" de Union Carbide ou "Papyex" du Carbone-Lorraine, etc ...), des tissus ou toiles de graphite ou de carbone (feutres de carbone "RVC" et de graphite "RVG", tissus de carbone "TCM" et de graphite "TGM" du Carbone-Lorraine, etc ...), cette liste n'étant pas limitative et seulemnt indicative.

On peut aussi utiliser des matériaux conducteurs composites tels que des feuilles de matières plastiques ou d'élastomères (chlorure de polyvinyl, polyoléfines, silicones, etc ...) chargées avec des particules, fibres ou paillettes de substances ayant une conductivité électronique, par exemple, des métaux : cuivre, argent, nickel, notamment (telles que les feuilles "Conmax" de Tecknit chargé avec du nickel, notamment), des semi-conducteurs : oxyde d'étain, oxyde d'indium, notamment, du graphite ou du carbone (telles que les feuilles "Condulon" de Pervel Industries, "Cabelec" de Cabot, "Abbey 100" de Abbey Plastics Corporation, notamment). Cette liste étant également non limitative et purement indicative.

On peut encore utiliser comme matériau de contre-électrode une composition conductrice originellement fluide, composée généralement d'une résine et d'une charge conductrice électronique particulaire et éventuellement d'un solvant, déposée sur un substrat puis séchée ou polymérisée, par exemple une encre ou pâte conductrice sérigraphiable (telle que "Electrodag 423 SS" à base de graphite d'Acheson, "ACP-020J" à base du cuivre et "TU-40S" à base de graphite de Asahi Chemical, etc ...), ou encore par exemple, un vernis conducteur ou peinture conductrice (tel que "Copalex 100" à base de cuivre de Showa Denko, "Electrodag 440AS" à base de nickel et "Electrodag 5513" à base de graphite de Acheson, "Acrylic-1" à base d'argent et "Latex 1000" à base de carbone de Tecknit, etc ...) déposés en couche de faible épaisseur par les techniques connues de sérigraphie, de projection au pistolet, d'enduction par lame d'air ou barreau à fil hélicoïdal, de trempé, etc ... (On entend par techniques dite de "films épais" l'ensemble de ces techniques et des techniques diverses de formation d'un film ou couche solide dans des épaisseurs de l'ordre de celles définies précédemment comme étant de "faible épaisseur" à partir d'un matériau fluide).

On peut dans ce cas utiliser comme substrat un des matériaux conducteurs en forme de feuille cités précédemment, et constituer ainsi des contre-électrodes de structure composite fournies par l'association, par exemple, en couches superposées, de plusieurs matériaux de contre-électrodes différents, association susceptible de combiner éventuellement de manière avantageuse leurs caractéristiques. On peut aussi dans ce cas utiliser un substrat isolant électriquement, imperméable ou encore poreux ou encore perforé par exemple, une feuille mince de matière plastique isolante électriquement imperméable ou perforée ou une feuille d'un non tissé en fibres synthétiques. Cette disposition peut avantageusement être mise en oeuvre dans un dispositif d'affichage comportant une multiplicité de points-image et/ou segments d'image. Elle permet sur un substrat dorsal isolant unique, de préférence en forme de feuille mince souple, de réaliser de façon simple et économique l'ensemble de la configuration des contre-électrodes à l'aide des techniques de films épais mentionnées plus haut. Ce substrat dorsal isolant unique peut être permanent, c'est-à-dire constituer un composant définitif du dispositif d'affichage. Il peut aussi, par un choix approprié comme substrat d'une feuille de matière plastique non adhésive et/ou d'une feuille recouverte d'une couche de substance anti-adhérente, n'être présent qu'à titre temporaire, pour être retiré une fois le dispositif terminé. Dans ce cas, il ne constitue qu'un moyen intermédiaire commode de fabrication permettant une réalisation avantageuse de la configuration de contre-électrodes.

On peut également, dans un autre mode de réalisation d'une contre-électrode d'un dispositif, déposer une composition conductrice originellement fluide à l'aide des techniques de films épais directement sur la couche de matériau électrolytique, elle-même éventuellement déjà préalablement appliquée sur l'électrode de travail. Dans un dispositif d'affichage comportant une multiplicité de points-image et/ou segments d'image, on peut ainsi directement appliquer, à l'aide des techniques de films épais et un utilisant des écrans, stencils et/ou masques appropriés, une configuration voulue de portions de couche formant des contre-électrodes sur une configuration conjuguée de portions de couche de matériau électrolytique, elle-même déjà appliquée sur une autre configuration conjuguée d'électrodes de travail déposées sur un substrat transparent pouvant constituer un support mécanique de l'ensemble du dispositif d'affichage et susceptible même de constituer l'unique support mécanique du dispositif. Les portions de couche précédentes ou couches d'aires réduites formant contre-électrode, sont des portions de couche indépendantes entre elles qui peuvent être, selon le cas, propres chacune à une cellule élémentaire ou commune chacune à un groupe restreint particulier de cellules élémentaires, par exemple commune aux cellules d'une même ligne ou d'une même colonne.

La couche de matériau électrolytique peut être mise en oeuvre dans le dispositif de modulation de la lumière par application ou formation d'une couche 3 au contact d'une des deux électrodes selon l'un des procédés décrits, suivie de l'application de l'autre électrode au contact de la face libre de la couche du matériau. Ainsi qu'on l'a déjà indiqué, avec le mode préféré de réalisation du matériau électrolytique qui lui procure un toucher collant ou collant de contact ou superficiel, il n'est pas indispensable de prévoir des moyens mécaniques spécifiques pour maintenir la cohésion de la cellule élémentaire ainsi constituée, ni pour assurer et conserver un excellent contact physique et électrique à chaque interface électrode - couche de matériau électrolytique, l'adhérence de la couche de matériau électrolytique à chaque électrode étant suffisante à cet effet. Avec ce mode de réalisation du matériau électrolytique, celui-ci peut être également mis en oeuvre par application ou formation d'une première couche au contact de l'un des deux électrodes et d'une seconde couche au contact de l'autre électrode, suivie de la réunion des deux couches en une couche composite unique par mise en contact et adhésion des deux couches par leur face libre.

Dans un dispositif d'affichage comportant une multiplicité de points-image et/ou segments d'image, la couche de matériau électrolytique peut être commune à toutes les cellules élémentaires d'affichage et occuper la totalité de la surface d'écran. Elle peut être aussi distribuée selon une configuration superficielle, c'est-à-dire fractionnée en portions de couche ou couches d'aires réduites indépendantes et réparties sur l'écran, propres chacune à une cellule élémentaire ou communes chacune seulement à un nombre restreint de cellules élémentaires (par exemple commune aux cellules d'une même ligne ou d'une même colonne dans un dispositif d'affichage matriciel). L'obtention de telles configurations superficielles est particulièrement aisée avec le matériau électrolytique décrit grâce aux techniques de masques, stencils, écrans, etc ... utilisées dans les procédés de dépôt dits de "films épais".

Les moyens de connexion électrique internes au dispositif autonome peuvent être pris parmi tous les conducteurs et procédés de liaison ou connexion électrique utilisables.

On entend par matériau de connexion électrique un matériau, homogène ou composite, à partir duquel il est possible de constituer une ou plusieurs configurations superficielles de connexions électriques reliant les cellules élémentaires aux connecteur(s) ou zone(s) de connexion au(x)quel(s) doivent être reliés les alimentations et circuits électroniques de commande et d'adressage. Un tel matériau peut être par exemple une pâte à l'argent ou au cuivre pour sérigraphie, une laque conductrice, un ruban de cuivre autocollant, un conducteur de circuit imprimé, notamment, la liste n'étant pas limitative et seulement indicative.

On peut notamment utiliser avantageusement les encres, pâtes ou laques conductrices, en particulier à base d'argent particulaire (telles que par exemple "Electrodag 1415" et "Electrodag 427 SS" de Acheson, "CON/RTV-I" de Tecknit, "LS-408" de Asahi Chemical, "L 2003" et "L 2030" de Demetron, etc ...), lesquelles, mises en oeuvre par les techniques de film épais, permettent commodément d'établir un contact électrique de très bonne qualité ausi bien avec l'électrode de travail qu'avec la contre-électrode et d'établir une liaison ("bond") ou "soudure" électrique -c'est-à-dire un moyen d'amenée du courant électrique- entre l'une ou l'autre électrode et un conducteur de connexion interne tel qu'un fil métallique ou un ruban de cuivre ou un élément de circuit imprimé ou une encre ou pâte conductrice. Cette dernière permet plus spécifiquement de constituer un conducteur de connexion pouvant être conformé à un relief et à un parcours quelconques tels que ceux imposés par la surface dorsale d'un dispositif d'affichage comportant une multiplicité de points-image et/ou segments d'image sur laquelle il est avantageux de l'appliquer, et pouvant au surplus par un choix approprié de l'encre être déformable sans rupture ; de tels conducteurs de connexion permettent de relier de manière très pratique chaque électrode à un conducteur métallique ou à un ensemble rigide de conducteurs métalliques tel qu'un circuit imprimé écarté des électrodes à connecter ou encore de relier chaque électrode à un connecteur ou zone de connexion du dispositif par exemple, à un bord, à partir duquel il peut être plus commode de relier électriquement le dispositif à l'électronique d'adressage et de commande.

Les moyens de masquage de la périphérie du point-image ou du segment d'image, c'est-à-dire, dans le cas d'un dispositif d'affichage comportant une multiplicité de points-image et/ou segments d'image, de l'espace interstitiel remplissant toute la surface d'écran à l'exception des points-image et/ou segments d'image eux-mêmes, peuvent être nécessaires pour dissimuler les conducteurs de connexion interne et tous autres éléments de la structure du dispositif d'affichage qui pourraient être visibles. Ils peuvent être également nécessaire, en tant que moyens simultanés de contraste, pour contribuer au contraste des points-image et/ou segments d'image écrits par rapport à la partie restante de l'écran, partie restante qui comprend les points-image et/ou segments d'image non écrits et cet espace interstitiel.

Dans le cas, par exemple, d'un dispositif d'affichage fonctionnant uniquement par réflexion, le point-image et/ou segment d'image apparaît noir quand il est écrit et par exemple blanc (grâce, par exemple à un pigment contrastant blanc présent dans le matériau électrolytique) quand il est effacé (c'est-à-dire non écrit). Il est alors souhaitable, dans un premier mode d'affichage -qu'on peut qualifier sommairement d'affichage d'images noires sur fond blanc- que les moyens de masquage de la périphérie du point-image ou segment d'image présentent un aspect blanc aussi proche que possible du blanc des points-image et/ou segments d'image non écrits ce qui contribue à faire ressortir le noir des points-image et/ou segments d'image écrits par rapport à leur environnement constitué par l'ensemble des points-image et/ou segments d'image non-écrits et par l'espace périphérique interstitiel et maximise le contraste. Dans un second mode d'affichage qu'on peut qualifier sommairement d'affichage d'images blanches sur fond noir -il est à l'opposé souhaitable que les moyens de masquage de la périphérie présentent un aspect noir aussi proche que possible du noir des points-image et/ou segments d'image écrits, contribuant à faire ressortir le blanc des points-image et/ou segments d'image non écrits par rapport à leur environnement constitué par l'ensemble des points-image et/ou segments d'image écrits et par l'espace périphérique interstitiel, maximisant là encore le contraste. Dans le cas d'un dispositif d'affichage fonctionnant par transmission, c'est-à-dire éclairé par l'arrière, il est en général préférable de minimiser la réflexion de la lumière ambiante par la périphérie du point-image ou segment d'image qui dégrade le contraste, et par conséquent, de donner à cette périphérie un aspect noir ou tout au moins sombre et aussi peu réfléchissant que possible.

Dans le cas d'un dispositif d'affichage utilisant un procédé de fabrication objet de l'invention fonctionnant par réflexion, les moyens de masquage et de contraste de la périphérie du point-image et/ou segment d'image sont déjà intrinsèquement créés lorsqu'on donne à la couche de matériau électrolytique l'étendue de la totalité de la surface d'écran : le pigment masquant et contrastant présent dans la couche de matériau électrolytique exerce son action sur la totalité de la surface d'écran.

Si l'on ne souhaite pas ou si l'on ne peut pas, pour un dispositif fonctionnant par réflexion, donner à la couche de matériau électrolytique une étendue couvrant la totalité de la surface d'écran, par exemple à la suite du choix d'une méthode de fabrication du dispositif qui ne le permet pas, ou encore si le dispositif est destiné à fonctionner par transmission et donc utilise un matériau électrolytique transparent, il convient de mettre en oeuvre des moyens spécifiques de masquage et de contraste de la périphérie du point-image ou segment d'image. De tels moyens peuvent comprendre par exemple l'application, sur cette périphérie, avant la mise en place des moyens de connexion et de tous les composants qu'il s'agit de masques, d'une couche d'un matériau masquant et contrastant telle qu'une couche d'une peinture, d'une encre, d'un vernis ou d'un polymère ou élastomère contenant des pigments et/ou des colorants en quantité telle qu'une couche d'épaisseur suffisante constitue un masque opaque présentant la couleur voulue. De très nombreux matériaux de ces catégories peuvent convenir, notamment ceux susceptibles de sécher ou durcir ou réticuler à température ordinaire ou peu élevée, par exemple, des peintures, laques et vernis cellulosiques, vinyliques, acryliques, notamment des encres et pâtes colorées pour sérigraphie, des élastomères silicones pigmentés monocomposants réticulants à température ambiante (telles que les "Rhodorsil CAF" de Rhône-Poulenc, notamment) des mélanges pigmentés bi-composants résine-durcisseur ou résine catalyseur (epoxy, silicones, notamment) polymérisant ou vulcanisant à température ambiante ou voisine, notamment ; De tels matériaux sont commercialement disponibles sous forme de suspensions et/ou solutions dans un solvant adéquat ou encore sous forme monomère fluide non réticulée en un seul composant ou en deux composants à mélanger peu avant l'emploi. Ils peuvent être appliqués en couche régulière sur le verso du dispositif , à travers une configuration convenable de masques, écrans, stencils, etc ... destinés à ménager les zones qui ne doivent pas être recouvertes (par exemple les points, lignes ou zones des électrodes de travail et des contre-électrodes où doivent être pris les contacts électriques au cas où les connexions électriques sont établies après masquage) ou qui ne doivent pas être masquées (par exemple les contre-électrodes transparentes sur la portion de leur surface correspondant au point-image ou segment d'image dans le cas d'un dispositif fonctionnant par transmission), notamment à l'aide de toutes les techniques d'application appropriées telles que celles connues en soi: projection au pistolet, sérigraphie, trempé, enduction au rouleau, techniques d'imprimerie, notamment).

Des moyens d'isolation et de protection des composants du dispositif vis-à-vis de l'ambiance extérieure sont généralement souhaitables ou même nécessaires pour empêcher l'accès à ces composants de contaminants et/ou agents de corrosion présents dans l'ambiance atmosphérique extérieure, et éventuellement les protéger de la pluie, du brouillard et de projections accidentelles diverses et possiblement des chocs. Dans des cas extrêmes, on peut être amené à donner, à ces moyens d'isolation et de protection une qualité d'étanchéité rigoureuse aux liquides, aux gaz, à tout autre corps dont on ne souhaite pas le pénétration ou la sortie du dispositif. De tels moyens d'isolation ou de protection peuvent par exemple comprendre une couche additionnelle de peinture, vernis, résine, notamment telle que décrite précédemment comme moyen de masquage et de contraste, appliquée à l'aide des techniques précitées sur l'ensemble de la face arrière du dispositif si une telle couche présente une imperméabilité suffisante aux liquides et aux gaz. De tels moyens peuvent, plus généralement, comprendre le revêtement, l'enrobage ou l'imprégnation du dispositif à protéger et, notamment, de sa face arrière par un polymère ou un élastomère disponible sous forme d'un monomère fluide additionné d'un durcisseur ou d'un catalyseur de réticulation, d'une suspension ou d'une solution de résine dans un liquide ou un solvant adéquat, pouvant (non nécessairement) comporter une charge. On peut en particulier avantageusement recouvrir, noyer ou imprégner l'arrière du dispositif à partir de ses bords dans une résine d'enrobage ou de scellement du type de celles utilisées pour enrober des circuits imprimés, par exemple des résines adhérentes et de préférence souples une fois réticulées, telles que des élastomères silicones (par exemple les "RTV" de General Electric", etc ...). Un tel polymère est préférentiellement incolore et transparent si le dispositif est destiné à fonctionner par transmission (par exemple le caoutchouc silicone "RTV 615" de General Electric). Une telle résine transparente et possédant de bonnes propriétés optiques peut d'ailleurs servir à enrober totalement un tel dispositif , qu'il fonctionne par transmission ou par réflexion, lui conférant une protection maximale.

Bien que des moyens spécifiques de cohésion des cellules ne soient pas indispensables dans le cas où cette cohésion est assurée par les propriétés de collant de contact du matériau électrolytique, les moyens de masquage et les moyens d'isolation et de protection précédents peuvent contribuer à cette cohésion.

Un point-image ou segment d'image est déterminé en forme, taille et position par l'intersection des projections orthogonales, sur la surface d'écran, d'aires données à la première électrode, à la contre-électrode et à la couche de matériau électrolytique de chaque cellule élémentaire d'affichage.

La possibilité de définir un point-image ou segment d'image simplement par une telle intersection résulte de la mise en évidence faite précédemment de ce que dans le procédé de modulation de la lumière décrit, et avec des composants ayant les épaisseurs indiquées, le point-image ou segment d'image est la surface correspondant à une telle intersection, délimitée par un contour remarquablement net bien que cette surface se forme à une distance de la contre-électrode égale à l'épaisseur de la couche de matériau électrolytique, alors qu'on aurait pu s'attendre à un contour flou ou diffus, au moins pour la portion de contour déterminée par la contre-électrode, et de ce que l'accroissement de densité optique, une fois formé, ne diffuse ni ne se dilue dans la périphérie du point-image ou segment d'image.

Cette possibilité est mise à profit pour la construction, avec une très grande économie de moyens de dispositifs d'affichage selon un mode possible de réalisation comportant une multiplicité de points-image et/ou segments d'image, et, notamment, des dispositifs à matrices de points-image ou matriciels présentant une très haute résolution. (Ce mode de réalisation est désigné, par la suite, sous l'appellation "panneau matriciel")

Selon ce mode de réalisation, chacune des cellules élémentaires d'affichage se présente principalement comme la superposition de trois couches ou pellicules (électrode, couche de matériau électrolytique, contre-électrode), chacun de ces trois composants principaux pouvant servir à définir une portion ou la totalité du contour de chaque point-image ou segment d'image sans qu'il soit nécessaire de faire appel à d'autres moyens et/ou à d'autres composants. Chaque composant d'une telle cellule élémentaire ne fonctionne ou n'opère qu'à l'intérieur du contour du point-image ou segment d'image. Toute extension de ce composant au-delà de ce contour peut, le cas échéant, servir à une autre cellule élémentaire adjacente sans qu'il soit nécessaire de prévoir un intervalle substantiel entre les deux zones du composant autre que celui correspondant à la géométrie relative de ces deux points-image adjacents. Il n'est pas indispensable de limiter la dimension minimale du point-image ou segment d'image pour tenir compte d'un contour diffus ou flou et ménager l'existence d'une zone suffisante de densité optique maximale. Chaque point-image ou segment d'image peut être aussi petit que le permettent les techniques d'application ou de configuration ("patterning") des pellicules ou couches constituant les composants. Il n'est pas indispensable de prévoir une séparation ou intervalle minimal substantiel entre points-image ou segments d'image adjacents pour éviter une interpénétration de ces points-image ou segments d'image due à un contour diffus ou flou qui aurait pour effet de réduire la résolution et le contraste. Il n'est pas non plus indispensable de prévoir une séparation ou intervalle minimal substantiel entre points-image ou segments d'image adjacents pour éviter une interpénétration de ces points-image ou segment d'image qui serait due à la diffusion ou à la dilution de la densification optique d'un point-image ou segment d'image dans sa périphérie, c'est-à-dire dans les points-image ou segments d'image adjacents. Enfin, il n'est pas non plus indispensable de prévoir, pour maintenir la densification optique d'un point-image ou segment d'image dans son contour, des moyens particuliers additionnels de confinement du point-image ou segment d'image dans un contour déterminé qui accroîtraient la surface occupée par la cellule individuelle et par conséquent accroîtraient l'intervalle entre points-image ou segments d'image adjacents et, en outre, accroîtraient la complexité et le coût du dispositif d'affichage.

Sur la surface d'écran d'un dispositif d'affichage comprenant une multiplicité de points-image et/ou segments d'image, on entend par "configuration superficielle" des points-image et/ou des segments d'image, la configuration géométrique superficielle des points-image et/ou segments d'image individuellement adressables, voulue telle que la densification optique c'est-à-dire le noircissement ou l'opacification de combinaisons sélectives de ces points-image et/ou segments d'image puisse représenter les caractères alphanumériques, images et autres arrangements graphiques qu'on se propose d'afficher.

A une configuration superficielle des points-image et/ou des segments d'image d'un dispositif d'affichage correspond une distribution spatiale, dans le dispositif , de cellules élémentaires d'affichage dont les composants sont, dans les dispositifs d'affichage décrits, des couches ou pellicules superposées de forme et d'aire définies dont la projection orthogonale sur la surface d'écran est telle qu'elle inclut au moins le point-image ou segment d'image. Chaque cellule élémentaire peut comporter ses propres composants individualisés. Mais, il est possible que des composants homologues d'un type donné soient des zones distinctes d'un composant unique commun à une partie ou à la totalité des cellules élémentaires. C'est ainsi que dans un dispositif d'affichage de type matriciel, les électrodes transparentes d'une même colonne de points-image peuvent faire partie d'une unique électrode conductrice transparente en forme de bande, commune à toutes les cellules élémentaires de la colonne.

Sur un écran de dispositif d'affichage comprenant une multiplicité de points-image et/ou segments d'image, on entend par configuration superficielle de composants de même type la configuration géométrique formée par l'ensemble des composants des cellules élémentaires d'affichage appartenant à ce même type de composant, de tels composants pouvant être chacun propre à une cellule ou commun à un groupe de cellules.

On entend par intersection de plusieurs configurations superficielles superposées la configuration géométrique formée par les aires communes aux projections orthogonales sur la surface d'écran des diverses configurations superficielles considérées.

Par commodité de langage, on convient que l'expression "commun à un groupe de cellules ou dispositifs élémentaires et appliquée au terme électrode de travail ou contre-électrode ou couche de matériau (ou portions de chacune d'elles) s'applique lorsque les électrodes de travail, les contre-électrodes, les couches de matériau, respectivement, du groupe de cellules ou dispositifs considérés sont des zones distinctes entre elles du composant qualifié de commun à ce groupe.

On entend par "configurations superficielles conjuguées" de composants d'un dispositif d'affichage des configurations superficielles superposées de composants de chaque type telles que l'association des composants détermine autant de cellules élémentaires d'affichage complètes que le dispositif d'affichage doit comporter de points-image et/ou de segments d'image, et telles que la distribution spatiale et la taille de ces cellules élémentaires soient compatibles avec les localisations et les dimensions voulues des points-image et/ou segments d'image sur l'écran du dispositif.

Pour construire, selon ce mode de réalisation, un dispositif d'affichage comportant une multiplicité de points-image et/ou segments d'image, on associe en les superposant, sans mettre en oeuvre d'autres moyens pour aider à la délimitation ou à la séparation des points-image et/ou segments d'image, trois configurations superficielles de composants (c'est-à-dire une configuration superficielle d'électrodes de travail transparentes, une configuration superficielle de portions de couche de matériau électrolytique et une configuration superficielle de contre-électrodes, dans cet ordre) configurées et conjuguées de telle façon que leur intersection définisse la configuration superficielle voulue de points-image et/ou de segments d'image individuellement adressables.

Par convention, on réserve dans la suite de la description l'expression "configuration" à tous les cas possibles à l'exception de ceux où le composant concerné est unique et commun à toutes les cellules élémentaires du dispositif, auxquels cas on utilise l'expression qualificative "unique commun à tout l'écran", appliquée au composant considéré.

Selon ce mode de réalisation d'un dispositif d'affichage comportant une multiplicité de points-image et/ou de segments d'image, on dispose de possibilités multiples de structure et de construction. Chaque composant de type différent peut servir à définir une portion ou la totalité du contour d'un point-image et/ou segment d'image comme on l'a décrit précédemment. On peut choisir, pour un dispositif d'affichage donné, la combinaison la plus avantageuse de configurations du point de vue de la simplicité de fabrication des cellules élémentaires et des connexions électriques internes au dispositif. Selon les types de composants qu'on choisit de distribuer sur l'écran selon une configuration superficielle et ceux qu'on choisit de maintenir comme composant unique commun à toutes les cellules élémentaires de l'écran, on dispose notamment des combinaisons suivantes :

Première variante :

Electrodes de travail 2 seules distribuées selon une configuration superficielle, contre-électrode 4 et couche de matériau électrolytique 3 unique commune à tout l'ecran : disposition utilisable notamment pour des dispositifs à adressage direct (figure 8A).

Deuxième variante :

Contre-électrodes 4 seules distribuées selon une configuration superficielle, électrode de travail 2 et couche de matériau électrolytique 3 unique commune à tout l'écran : disposition utilisable notamment pour des dispositifs à adressage direct (figure 8B).

Troisième variante :

Electrodes de travail 2 et portions de couche de matériau électrolytique 3 distribuées selon des configurations superficielles conjuguées, contre-électrode 4 unique commune à tout l'ecran : disposition utilisable notamment pour des dispositifs à adressage direct (figure 8C).

Quatrième variante :

Contre-électrodes 4 et portions de couche de matériau électrolytique 3 distribuées selon des configurations superficielles conjuguées, électrode de travail 2 unique commune à tout l'écran : disposition utilisable notamment pour des dispositifs à adressage direct (figure 8D).

Cinquième variante :

Electrodes de travail 2 et contre-électrodes 4 distribuées selon des configurations superficielles conjuguées, couche de matériau électrolytique 3 unique commune à tout l'écran : disposition utilisable notamment pour des dispositifs à adressage direct ou pour des dispositifs à adressage matriciel (figure 8E).

Sixième variante :

Electrode de travail 2, contre-électrodes 4 et portions de couche de matériau électrolytique 3 distribuées selon trois configurations superficielles conjuguées : disposition utilisable notamment pour des dispositifs à adressage direct ou pour des dispositifs à adressage matriciel (figure 8F).

En outre, dans les quatre dernières variantes, les configurations superficielles de deux types de composants peuvent avantageusement être identiques ou sensiblement identiques, c'est-à-dire confondues ou sensiblement confondues, dans de nombreux cas où cette confusion est susceptible de constituer un avantage, par exemple du point de vue de la fabrication. On peut ainsi considérer les possibilités suivantes :

Sous-variante de la troisième variante :

Configurations confondues des électrodes de travail 2 et des portions de couche de materiau électrolytique 3, contre-électrode 4 unique commune à tout l'écran.

Sous-variante de la quatrième variante :

Configurations confondues des contre-électrodes 4 et des portions de couche de matériau électrolytique 3, électrode de travail 2 unique commune à tout l'écran.

Sous-variante de la cinquième variante :

Configurations confondues des électrodes de travail 2 et des contre-électrodes 4, couche de matériau électrolytique 3 commune à tout l'écran.

Première sous-variante de la sixième variante :

Configurations confondues des contre-électrodes 4 et des portions de couche de matériau électrolytique 3, configuration différente conjuguée des électrodes de travail (figure 8G).

Deuxième sous-variante de la sixième variante :

Configurations confondues des électrodes de travail 2 et des couches de matériau électrolytique 3, configuration différente conjuguée des contre-électrodes 4 (figure 8H).

Troisième sous-variante de la sixième variante :

Configurations confondues des électrodes de travail 2 et des contre-électrodes 4, configuration différente conjuguée des portions de couche de matériau électrolytique 3 (figure 8I).

Quatrième sous-variante de la sixième variante :

Configurations confondues des trois types de composants (figure 8F).

Toutes ces variantes de combinaisons particulières de structures sont réalisables par le premier procédé de fabrication décrit ultérieurement. Les sous-variantes de la quatrième variante et les première et quatrième sous-variante de la sixième variante sont en outre réalisables par le deuxième procédé de fabrication également décrit.

On entend par "configuration associée" d'un matériau, composant ou constituant, une configuration géométrique appropriée et convenablement associée, reliée ou combinée aux composants des cellules élémentaires d'un dispositif de modulation de la lumière comportant une pluralité de ces cellules, d'un matériau, composant ou constituant périphérique, extrinsèque ou spécifique nécessaire au fonctionnement des cellules élémentaires et/ou permettant d'utiliser le dispositif comme une unité autonome.

Un premier procédé possible de fabrication d'un dispositif de modulation de la lumière comportant une multiplicité de points-image et/ou de segments d'image, notamment applicable à la structure préférée, qui se prête à une fabrication industrielle à bas prix de revient, comporte l'application, à l'aide des techniques connues en soi et dites de "films épais" telles qu'en particulier les techniques de sérigraphie, d'une couche de matériau électrolytique et d'une couche de matériau de contre-électrode, chacune fractionnée en portions de couche définies et distribuées selon des configurations superficielles conjuguées à une configuration superficielle d'électrodes transparentes, de manière en particulier que l'intersection des aires définie par les trois configurations détermine la configuration superficielle voulue de points-image et/ou de segments d'image. Il comporte, également, l'application éventuelle, à l'aide des mêmes techniques de films épais, de configurations associées de matériaux de connexion et/ou de matériaux isolants susceptibles d'être mis en oeuvre par les techniques précitées et formant le réseau de connexions électriques internes du dispositif ou une partie au moins de celui-ci. Il comporte, également, l'application éventuelle, à l'aide des mêmes techniques de films épais, de configurations associées de matériau masquant et contrastant, de matériau d'isolation, protection, imprégnation ou enrobage, ainsi que de tout autre matériau entrant dans la constitution d'un dispositif de modulation de la lumière et susceptible d'être mis en oeuvre par ces techniques.

L'emploi de couches de matériau électrolytique mises en oeuvre par les techniques de film épais telles qu'en particulier les techniques de sérigraphie, combiné à l'emploi d'encres, pâtes, laques, vernis, résines, notamment, conductrices, isolantes, pigmentées, notamment, mises en oeuvre par les mêmes techniques pour réaliser les contre-électrodes, amenées de courant, connexions électriques, masques contrastants, enductions, enrobages ou imprégnations de protection, isolation, permet la mise en oeuvre du premier procédé de fabrication de dispositifs d'affichage comportant une multiplicité de points-image et/ou segments d'image. Selon ce procédé, on forme, sur des supports ou substrats convenables, à l'aide des techniques de films épais et en utilisant des écrans, stencils, et/ou masques appropriés, des configurations superficielles conjuguées et des configurations associées des divers composants, matériaux et constituants sus-mentionnés, et, par ces moyens, on fabrique une partie au moins du dispositif autonome comprenant au moins la totalité des cellules élémentaires de modulation de la lumière et éventuellement une partie au moins des composants et constituants périphériques et extrinsèques des cellules et des composants et constituants spécifiques du dispositif autonome.

Selon une première variante de ce premier procédé de fabrication, on réalise une partie au moins du dispositif d'affichage en appliquant en superposition à l'aide des techniques de films épais sur un substrat transparent formant support mécanique et comportant une configuration superficielle d'électrodes de travail transparentes au moins : une configuration conjuguée de portions de couche de matériau électrolytique ; une configuration conjuguée aux précédentes de portions de couche de matériau de contre-électrode, ces trois configurations étant en particulier telles que leur intersection détermine la configuration voulue de points-image et/ou segments d'image ; et, éventuellement : une configuration associée de matériau de contraste ou masquage périphérique ; des configurations associées d'amenées de courant, de conducteurs de connexion et de couches d'isolation constituant une partie au moins du réseau des connexions internes au dispositif reliant les électrodes de travail et les contre-électrodes des cellules élémentaires à une zone(s) de connexion ou à un connecteur(s), ces configurations étant combinées de telle façon que les différents conducteurs soient isolés les uns des autres ainsi que des électrodes de travail et des contre-électrodes qu'ils n'ont pas à raccorder ; des configurations associées de couches ou applications de matériaux de protection, isolation, imprégnation ou enrobage, l'ordre des applications pouvant être différent de l'ordre décrit ci-dessus.

Selon une seconde variante de ce premier procédé de fabrication d'un dispositif de modulation de lumière de faible épaisseur, on réalise au moins une partie du dispositif d'affichage en appliquant en superposition, sur un premier substrat, à l'aide des techniques de films épais telles qu'en particulier les techniques de sérigraphie, au moins une couche de matériau de contre-électrode et une couche de matériau électrolytique, chacune fractionnée en portions ou zones définies et distribuées selon des configurations suuperficielles conjuguées, et éventuellement des configurations associées d'amenées de courant, de conducteurs de connexion et de couches d'isolation constituant une partie au moins du réseau des connexions internes au dispositif, des configurations associées de matériau masquant et contrastant, de matériaux d'isolation, imprégnation protection ou enrobage, ainsi que de tout autre matériau susceptible d'entrer dans la constitution d'un dispositif de modulation de la lumière et susceptible d'être mis en oeuvre par les techniques précitées, et en appliquant d'un seul mouvement ou progressivement par zones suivant les cas ce premier substrat au moins déjà revêtu d'une partie de ses couches sur un second substrat transparent et de préférence rigide ou substantiellement rigide muni d'une configuration superficielle d'électrodes transparentes conjuguée aux deux précédentes configuration conjuguées, ces trois configurations étant en particulier telles que leur intersection détermine la configuration voulue de points-image et/ou segments d'image, application faite de façon à permettre de maintenir par pression ou par adhésion par collant de contact au moins l'ensemble des couches du premier substrat au contact du second substrat.

Selon cette seconde variante on réalise au moins une partie du dispositif d'affichage en appliquant sur un premier substrat à l'aide des techniques de films épais, au moins : une configuration de portions de couche de matériau électrolytique ; une configuration conjuguée à la précédente de portions de couche de matériau de contre-électrode, les trois configurations étant en particulier telles que leur intersection détermine la configuration voulue de points-image et/ou segments d'image ; et, éventuellement : une configuration associée de matériau de contraste ou masquage périphérique ; des configurations associées d'amenées de courant, de conducteurs de connexion et de couches d'isolation constituant une partie au moins du réseau des connexions internes au dispositif reliant les électrodes de travail et les contre-électrodes des cellules élémentaires à une zone(s) de connexion ou un connecteur(s), ces configurations étant combinées de telle façon que les différents conducteurs soient isolés les uns des autres ainsi que des électrodes de travail et des contre-électrodes qu'ils n'ont pas à raccorder ; des configurations associées de couches ou applications de matériaux de protection, isolation, imprégnation ou enrobage, l'ordre des applications pouvant être différent de l'ordre décrit ci-dessus, et en appliquant le premier substrat revêtu au moins d'une partie des diverses configurations ci-dessus décrites sur un second substrat transparent formant support mécanique et comportant une configuration superficielle d'électrodes de travail transparentes conjuguée à celles des couches de matériau électrolytique et des contre-électrodes, ces trois configurations étant en particulier telles que leur intersection détermine la configuration voulue de points-image et/ou segments d'image, l'application du premier substrat sur le second étant faite de manière à permettre de maintenir au contact du second substrat, par pression ou par collant de contact, l'ensemble formé par les configurations appliquées sur le premier substrat.

On peut, dans une première sous-variante de cette seconde variante du premier procédé dans laquelle le premier substrat est préférentiellement choisi dans un matériau ayant des propriétés anti-adhérentes ou revêtu d'un revêtement anti-adhérent, réaliser le transfert sur le second substrat des configurations enduites ou appliquées sur le premier substrat et le faire suivre du retrait de celui-ci. Un tel premier substrat approprié peut par exemple être une feuille mince souple ayant un état de surface anti-adhérent qu'on peut, une fois enduite, c'est-à-dire revêtue des ses configurations, appliquer complètement sur le second substrat d'un seul mouvement ou en la déroulant, puis retirer en la séparant progressivement de l'ensemble formé par les configurations superposées à partir d'un bord ou d'un coin, cet ensemble étant maintenu au contact du second substrat de préférence au moyen de propriétés de collant de contact de sa face concernée, propriétés en particulier résultant du collant de contact du matériau électrolytique dans une composition préférée. Il peut aussi être par exemple un cylindre rigide qui transfère l'ensemble de ses configurations enduites ou appliquées sur le second substrat généralement plan lorsqu'on le fait rouler sur ce dernier.

On peut aussi, dans une deuxième sous-variante dans laquelle le premier substrat est préférentiellement une feuille mince souple isolante ou isolée n'ayant pas d'état de surface anti-adhérent, laisser, une fois ce premier substrat enduit et appliqué sur le second substrat, subsister en place ce premier substrat qui devient alors un composant permanent du dispositif. Un tel premier substrat approprié peut par exemple être une feuille mince souple imperméable de matière plastique.

On peut aussi, dans une troisième sous-variante de la seconde variante du premier procédé de fabrication dans laquelle le premier substrat est préférentiellement une feuille mince souple n'ayant pas d'état de surface anit-adhérent qui présente une certain porosité répartie ou localisée selon une distribution discrète, appliquer une partie des enductions au recto, c'est-à-dire sur la face devant s'appliquer sur le second substrat, et une autre partie au verso de ce premier substrat, les éventuelles liaisons électriques nécessaires entre les couches situées de part et d'autre du premier substrat s'effectuant à travers la porosité. Un tel premier substrat approprié peut être, par exemple, une toile ou un non-tissé en fibres synthétiques, une feuille de matière plastique imperméable dans laquelle ont été pratiquées des perforations selon une distribution particulière. Les couches devant être appliquées au verso du premier substrat, ou une partie au moins d'entre elles, peuvent l'être avant ou après application de ce premier substrat déjà revêtu des couches du recto sur le second substrat. Dans un autre mode de mise en oeuvre de la présente sous-variante, les couches devant être appliquées au verso du premier substrat, ou une partie au moins d'entre elles peuvent l'être après application de ce premier substrat déjà revêtu des couches du recto sur le second substrat. Ce dernier mode est particulièrement avantageux lorsque le dispositif comporte une multiplicité d'amenées de courant électrique aux électrodes de travail, réparties sur la surface du second substrat : on peut aisément, par application par exemple d'une seule couche convenablement distribuée en portions appropriées formant une configuration associée d'un matériau de connexion électrique tel qu'une encre ou pâte conductrice ou équivalent sur le verso du premier substrat, à la fois constituer les amenées de courant en contact avec les électrodes de travail à travers la porosité de ce premier substrat et les connecter électriquement au réseau de connexions électriques internes du dispositif de modulation de la lumière.

Selon une troisième variante du premier procédé de fabrication, on combine entre elles les deux premières variantes, c'est-à-dire qu'on applique une partie des couches ou enductions constitutives des diverses configurations concernées selon la première variante et une autre partie selon la seconde variante, le premier substrat de la première variante devant alors être considéré comme confondu avec le second substrat de la seconde variante.

Le premier procédé ainsi décrit met donc en oeuvre les techniques des films épais, techniques qui sont connues en elles-mêmes de l'homme de l'art de ces techniques. Pour cette raison, ce techniques ne sont pas décrites davantage ici, l'invention consistant essentiellement à appliquer ces techniques des films épais aux cellules et dispositifs de modulation.

Un second procédé possible de fabrication d'un dispositif de modulation de la lumière comportant une multiplicité de points-image et/ou segments d'image, notamment applicable à la structure préférée, qui se prête à une fabrication industrielle à bas prix de revient, comporte l'application, sur un unique substrat transparent comportant une configuration superficielle d'électrodes transparentes, d'une configuration superficielle conjuguée de points, segments ou bandes comprenant associées en une pellicule composite unique au moins une couche de matériau électrolytique selon l'invention et une contre-électrode (par exemple pelliculaire).

Ce second procédé de fabrication d'un dispositif de modulation de la lumière notamment un dispositif d'affichage comporte la fabrication, selon les techniques connues en soi notamment d'extrusion, laminage, calandrage, enduction, ou équivalent, d'une pellicule, feuille ou bande composite formée au moins d'une couche de matériau électrolytique appliquée sur une contre-électrode en forme de pellicule, feuille, bande ou équivalent préférentiellement souple, et éventuellement d'une couche de matériau de connexion électrique appliquée sur la face extérieure de la pellicule de contre-électrode. Il comporte également la découpe, dans cette pellicule ou feuille composite, à l'aide des techniques connues en soi de poinçonnage, découpe à l'emporte-pièces, découpe au laser, notamment, d'éléments en forme de points, segments ou bandes.

Dans ce second procédé de fabrication, on réalise au moins une partie du dispositif de modulation de la lumière : en constituant une pellicule ou feuille composite unique formée d'au moins une couche de matériau électrolytique utilisé dans une cellule selon l'invention et d'une contre-électrode en forme de pellicule ou feuille, de préférence souple, sur laquelle la couche de matériau électrolytique est appliquée, et éventuellement d'une couche de matériau de connexion électrique appliquée sur la face externe de la contre-électrode ; en découpant dans cette pellicule ou feuille composite des éléments en forme de points, segments ou bandes; en distribuant ces éléments selon une configuration sur un substrat transparent muni d'une configuration superficielle conjuguée d'électrodes transparentes, ces configurations étant en particulier telles que leur intersection détermine la configuration voulue de points-image et/ou de segments d'image ; en fixant ces éléments sur ce substrat par pression ou par collage par contact ; et, éventuellement en appliquant : une configuration associée de matériau de contraste ou masquage périphérique ; des configurations associés d'amenées de courant, de conducteurs de connexion et de couches d'isolation constituant une partie au moins du réseau des connexions internes du dispositif reliant les électrodes de travail et des contre-électrodes des cellules élémentaires à une zone(s) de connexion ou à un connecteur-(s), ces configurations étant combinées de telle façon que les conducteurs soient isolés les uns des autres et des électrodes transparentes et des contre-électrodes qu'ils n'ont pas à raccorder ; des configurations associées de couches ou applications de matériaux de protection, isolation, imprégnation ou enrobage, l'ordre de ces applications pouvant être différent de l'ordre ainsi décrit ci-dessus.

Selon ce second procédé, la contre-électrode en forme de feuille ou pellicule ou équivalent mince peut être une quelconque des contre-électrodes en matériau homogène, en matériau composite, de structure simple ou de structure composite décrites précédemment, préférentiellement souples et déformables sans dommages, d'épaisseur préférentiellement située entre une dizaine de micromètres et quelques millimètres, plus préférentiellement encore située entre une dizaine et plusieurs centaines de microns. La couche de matériau de connexion électrique éventuellement appliquée sur sa face externe peut, le cas échéant, constituer une amenée de courant électrique de la contre-électrode. La couche de matériau électrolytique présente, préférentiellement, le collant de contact obtenu dans une composition préférée et permet alors d'obtenir la cohésion des cellules élémentaires du dispositif par la simple application sur le substrat des points, segments ou bandes découpés dans la pellicule ou feuille composite.

Le second procédé ainsi décrit met donc en oeuvre les techniques mentionnées d'extrusion, laminage, calandrage, enduction ou équivalent, découpe au laser, poinçonnage, découpe à l'emporte-pièce, techniques qui sont connues en elles-mêmes de l'homme de l'art de ces techniques. Pour cette raison, ces techniques ne sont pas décrites davantage ici, l'invention consistant essentiellement à appliquer ces techniques aux cellules et dispositifs de modulation.

Enfin, le second procédé permet la réalisation de pellicules composites ainsi décrites qui se présente sous la forme d'une pellicule, feuille ou bande comprenant au moins une couche de matériau électrolytique appliquée sur une pellicule, feuille ou bande conductrice électronique et, le cas échéant une couche de matériau de connexion électrique appliquée sur la face externe de la pellicule, feuille ou bande conductrice électronique.

EXEMPLES

Exemple 1

On prépare une composition formatrice fluide suivante :

| | |
|---|---|
| Bromure de zinc | 6,0 parties en poids |
| Chlorure cuivrique | 0,1 " " " |
| Chlorure de calcium | 1,6 " " " |
| Acide chlorhydrique | 0,2 " " " |
| Triton X 100 | 0,2 " " " |
| Hydroxyéthylcellulose "Natrosol 250 HHRR" de "Hercules" | 1,6 " " " |
| Eau | 90,5 " " " |

qui correspond au matériau électrolytique dont la composition en équilibre avec une humidité relative atmosphérique de 50% est :

| | |
|---|---|
| Bromure de zinc | 43,2 parties en poids |
| Chlorure cuivrique | 0,7 " " " |
| Chlorure de calcium | 11,5 " " " |
| Acide chlorhydrique | < 0,1 " " " |
| Triton X100 | 1,4 " " " |
| Hydroxyéthylcellulose | 11,5 " " " |
| Eau | 31,6 " " " |

(où le rapport entre le poids des sels hydrosolubles et celui de l'eau est 1,75 et dont le pH est environ 1,7) On prépare la composition formatrice fluide précédente en dissolvant les cinq premiers constituants dans la moitié de l'eau totale. On y ajoute, sous agitation, l'hydroxyéthylcellulose préalablement dissoute dans le reste de l'eau. Cette composition formatrice fluide, dont le pH est de 1,6 présente une viscosité convenable pour être enduite au rouleau à fil hélicoïdal. Sur une électrode transparente 2 de dioxyde d'étain adhérant à une plaque de verre 13 (verre "NESA" de PPG INDUSTRIES), on applique successivement plusieurs couches, avec séchages intermédiaires à l'air chaud jusqu'à consistance solide, jusqu'à obtention d'une couche de matériau électrolytique de vingt micromètres environ d'épaisseur total ; on limite l'étendue de cette couche, qui est transparente et pratiquement incolore, à un disque 3 d'environ 1 cm$^2$ de diamètre. Sur la face libre de cette couche de matériau électrolytique qui présente un collant de surface ("tack"), on applique une deuxième électrode 4 transparente de dioxyde d'étain adhérant elle aussi à une plaque de verre 14 (deuxième plaque de verre "NESA"), de dimensions supérieures à celles du disque de matériau électrolytique. (Figure 10).

La cellule de modulation de lumière 1 par transmission ainsi obtenue, dont la cohésion est assurée par les seules propriétés adhésives de la couche de matériau électrolytique, présente dans la zone définie par le disque 3 de matériau électrolytique une transmission optique plus élevée que dans la zône périphérique qui ne comporte que les deux plaques de verre "NESA" 13, 14 ; cette transmission plus élevée est très certainement due à de moindres pertes par réflexion aux interfaces électrode-matériau électrolytique qu'aux interfaces électrode-air.

On applique entre les électrodes transparentes une différence de potentiel de 2,5 Volts : on observe par transmission une augmentation progressive uniforme de la densité optique de la cellule sur une surface exactement délimitée par le disque 3 de matériau électrolytique. En inversant le sens de la différence de potentiel, on observe un éclaircissement de la zone densifiée jusqu'à restauration de la transmission ou transparence initiale ; arrivé à ce stade, il faut supprimer la tension d'effacement qui deviendrait une tension d'écriture et amorcerait une nouvelle densification de la cellule. On peut également effacer, mais plus lentement, simplement en mettant la cellule 1 en court-circuit ; on peut encore combiner un effacement partiel par application limitée dans le temps d'une tension inverse avec l'effacement de la densité optique résiduelle par mise en court-circuit.

La cellule 1 à transmission variable de la lumière ainsi obtenue fonctionne comme un filtre gris dont on peut faire varier la densité optique de manière continue depuis la transmission ou transparence initiale en contrôlant la durée pendant laquelle on fait passer le courant.

On observe qu'il existe un seuil de tension d'environ 1,8 Volt en-dessous duquel on ne densifie pas la cellule 1. Un tel seuil permet d'éclaircir la cellule 1 avec une tension d'effacement inférieure à ce seuil qu'on peut maintenir au-delà de l'effacement complet sans crainte de réamorcer une augmentation de la densité optique malgré ce maintien.

Dans une variante de réalisation et de constitution de la cellule 1, on applique une couche de matériau électrolytique sur une des électrodes transparentes 2 supportée par son substrat de verre et 13 une seconde couche de matériau électrolytique sur la seconde électrode transparente 4 supportée par son substrat de verre 14, et on forme la cellule en réunissant les deux demi-cellules par application des deux faces libres du matériau électrolytique l'une contre l'autre ; l'adhérence des deux couches entre elles suffit à assurer la cohésion structurelle de la cellule 1.

On répète les mêmes essais avec des électrodes transparentes 2, 4 constituées par une couche d'oxyde mixte d'étain et d'indium adhérant à une plaque de verre ("ITO coated glass" de Donnelly) à la place des électrodes transparentes précédentes : l'aspect et le comportement sont sensiblement voisins.

Exemple 2

On prépare la composition formatrice fluide suivante :

```
Bromure de zinc          6,0 parties en poids
Chlorure cuivrique       0,1    "    "     "
```

| Chlorure de calcium | 1,6 | " | " | " |
|---|---|---|---|---|
| Chlorure d'aluminium | 0,2 | " | " | " |
| Acide chlorhydrique | 0,2 | " | " | " |
| Triton X 100 | 0,2 | " | " | " |
| Carboxyméthylcellulose de sodium "7 HOF" de "Hercules" | 1,6 | " | " | " |
| Eau | 90,1 | " | " | " |

qui correspond au matériau électrolytique dont la composition en équilibre avec une humidité relative atmosphérique de 50% est :

| Bromure de zinc | 42,9 | parties | en | poids |
|---|---|---|---|---|
| Chlorure cuivrique | 0,7 | " | " | " |
| Chlorure de calcium | 11,4 | " | " | " |
| Chlorure d'aluminium | 1,4 | " | " | " |
| Acide chlorhydrique | < 0,1 | " | " | " |
| Triton X 100 | 1,4 | " | " | " |
| Carboxyméthylcellulose de sodium | 11,4 | " | " | " |
| Eau | 30,7 | " | " | " |

Lors du séchage de la composition formatrice fluide, la carboxyméthylcellulose de sodium est progressivement réticulée par le cation trivalent Al(III) et se trouve donc réticulée dans la couche de matériau électrolytique constitué. Cette couche adhère à la surface sur laquelle on la forme mais sa surface libre ne présente pas de collant de contact.

Sur deux plaques de verre recouvertes chacune d'une électrode transparente, on applique comme dans l'exemple 1 une couche du matériau électrolytique ci-dessus : chaque couche adhère à l'électrode transparente correspondante, mais ne présente pas de toucher collant sur sa face libre. On applique alors sur la face libre d'une de ces deux couches une très mince couche de la composition formatrice fluide de l'exemple 1, qu'on sèche, et on réunit les deux moitiés de la cellule dont la cohésion se maintient alors grâce au collant de contact de la dernière couche appliquée. Les propriétés de la cellule de transmission ainsi formée sont sensiblement les mêmes que celles de l'exemple 1, mais sa solidité mécanique est plus grande.

Exemple 3

On modifie les compositions formatrices fluides et des matériaux électrolytiques, en partant de ceux décrits dans les exemples 1 et 2, et ceci de la manière suivante :
a) On substitue aux mélanges de sels utilisés dans les exemples 1 et 2, les mélanges suivants, exprimés en poids relatifs de leurs constituants :

variante 3.1.1                                        Poids relatifs

Chlorure de zinc                         120

Chlorure de nickel (II)                   30

Chlorure cuivrique                         1

variante 3.1.2

Nitrate de cadmium                         2

Chlorure de calcium                        1

variante 3.1.3

Perchlorate de zinc                       60

Perchlorate de cuivre (II)                 1

Chlorure de nickel (II)                   30

variante 3.1.4

Bromure de zinc                           60

Chlorure ferrique                          1

b) On substitue aux résines polymères filmogènes hydrosolubles utilisées dans les exemples 1 et 2 les résines suivantes :

variante 3.2.1 Alcool polyvinylique ("Poval 224" de Kuraray) variante 3.2.2 Polyvinylpyrrolidone ("K 90" de GAF Corporation)

c) On modifie le rapport (poids de mélange de sels hydrosolubles /(poids de résine polymère) utilisé d'environ 5 dans les exemples 1 et 2 pour l'amener aux valeurs 50 et à 0,5.

Les substitutions et modifications ainsi mentionnées peuvent être combinées entre elles, c'est-à-dire que les variantes décrites peuvent être combinées.

On réalise avec chacune des combinaisons réalisées des cellules à transmission variable de la lumière de la même manière que dans les exemples 1 et 2 précédents.

Exemple 4

On prépare la composition formatrice fluide suivante :

```
Bromure de zinc              6,0 parties en poids
Chlorure cuivrique           0,1    "    "    "
Chlorure de calcium          1,6    "    "    "
Acide chlorhydrique          0,2    "    "    "
Triton X 100                 0,2    "    "    "
Hydroxyéthylcellulose        1,0    "    "    "
"Natrosol 250 HHXR" de
"Hercules"
Dioxyde de titane "RL75" de 16,0    "    "    "
"Titafrance"
Eau                         74,9    "    "    "
```

correspondant au matériau électrolytique dont la composition en équilibre avec une humidité relative atmosphérique de 50% est :

```
Bromure de zinc             20,0  parties en poids
Chlorure cuivrique           0,3    "    "    "
Chlorure de calcium          5,3    "    "    "
Acide chlorhydrique        < 0,1    "    "    "


Triton X 100                 0,7    "    "    "
Hydroxyéthylcellulose        3,3    "    "    "
Dioxyde de titane           53,3    "    "    "
Eau                         17,0    "    "    "
```

On applique à l'aide d'un barreau à fil hélicoïdal des couches successives, suivies de séchages, de la composition formatrice fluide sur l'électrode transparente 2 d'une plaque de verre "NESA" 15 jusqu'à obtention d'une couche du matériau électrolytique 3 correspondant d'une épaisseur totale d'une centaine de micromètres recouvrant la totalité de l'électrode transparente à l'exception d'une bande périphérique 16 ; cette couche est blanche et opaque.

On découpe un disque de 6mm de diamètre dans les contre-électrodes 4 en forme de feuille mince et flexible suivantes :
variante 4.1 Contre-électrodes en matériau homogène :
sous-variante 4.1.1 :    Feuille souple de graphite pur "Grafoil" de Union Carbide,
sous-variante 4.1.2 :    Feuille souple de graphite pur "Papyex" du Carbone-Lorraine,
variante 4.2 Contre-électrodes en matériau composite :
sous-variante 4.2.1 :    Feuille de matière plastique chargée de carbone particulaire "Condulon" de
                         Pervel Industries,

36

variante 4.3 Contre-électrodes composites avec substrat conducteur :

sous-variante 4.3.1 :     Feuille de graphite "Papyex" recouverte d'une couche d'encre à base de graphite pour sérigraphie "Electrodag 423 SS" de Acheson,

sous-variante 4.3.2 :     Feuille de graphite "Papyex" recouverte d'une couche de pâte à base de graphite pour sérigraphie "TU20S" de Asahi Chemical,

sous-variante 4.3.3 :     Feuille de graphyte "Papyex" recouverte d'une couche de pâte à base de cuivre pour sérigraphie "ACP-020J" de Asahi Chemical,

sous-variante 4.3.4 :     Feuille de graphite "Papyex" recouverte d'une couche de vernis conducteur à base de nickel "Condulon 245" de Pervel Industries.

variante 4.4 Contre-électrodes composites avec substrat isolant :

sous-variantes 4.4.1, 4.4.2, 4.4.3, et 4.4.4 respectivement identiques aux sous-variantes 4.3.1, 4.3.2, 4.3.3. et 4.3.4, sauf que la feuille flexible de graphite "Papyex" est remplacée par une feuille de non-tissé "Paratherm" de polypropylène de 30 micromètres d'épaisseur.

On dépose au verso de chacun des disques de contre-électrode, à l'opposé du matériau électrolytique une couche 17 de laque d'argent "200" de Demetron. Ces disques 4, 17 sont alors appliqués (avec un intervalle entre eux) sur la couche de matériau électrolytique 3. Enfin, on relie le verso de chaque disque 4, 17 à un bord 18 de la plaque de verre 15 à l'aide d'un ruban de cuivre 19 autocollant "EZ" de Bishop reposant sur un ruban de polyester 20 autocollant qui l'isole de la couche de matériau électrolytique 3 et de l'électrode transparente 2; ce ruban de cuivre 19, qu'on peut connecter facilement à partir du bord 18 de la plaque à une source extérieure de tension, est solidarisé électriquement avec la contre-électrode 4 à l'aide d'une goutte 21 de laque d'argent "200". Enfin, on applique sur la périphérie de l'électrode transparente un cordon périphérique de laque d'argent 22 qui permet de connecter l'électrode transparente 2 à la source extérieure de tension. Ni les contre-électrodes ni les connexions ne sont visibles ou perceptibles à travers la couche blanche opaque de matériau électrolytique. (figures 11 et 12).

Les disques 4, 17 ainsi appliqués présentent une certaine adhérence à la couche de matériau électrolytique 3, mais cette adhérence est variable d'un disque à l'autre et irrégulière d'un point à un autre d'un même disque (ce qui se traduit en fonctionnement par des hétérogénéités des densité optique). On exerce alors une pression sur chaque disque pour obtenir et maintenir un contact électrique satisfaisant.

On applique alors une différence de potentiel de 1,5 Volt entre chaque contre-électrode en forme de disque 4, 17 et l'électrode transparente 2, cette dernière étant polarisée négativement par rapport à la contre-électrode 4 : on observe par réflexion un noircissement de chaque cellule 1 selon une aire exactement délimitée par la projection du disque 4, 17 constituant la contre-électrode. La densité optique est uniforme à l'intérieur de chaque aire et on peut la faire varier selon une échelle continue de gris en modulant la durée selon laquelle on fait passer le courant électrique. En appliquant une différence de potentiel de sens opposé également de 1,5 volt, on efface la densité optique créée et on restitue l'aspect blanc initial. On observe qu'on peut prolonger l'application de la tension d'effacement au-delà de l'effacement total sans inconvénient visible.

La densité obtenue pour une même durée d'application de la tension d'écriture varie selon la contre-électrode, ce qui indique des différences probables d'impédance.

On constate que toutes les cellules à l'exception de celles formées avec les contre-électrodes des sous-variantes 4.3.3, 4.3.4, 4.4.3 et 4.4.4 présentent un seuil d'écriture d'environ 1,25 Volts, c'est-à-dire qu'on n'observe aucun noircissement avec une tension inférieure. En revanche, les cellules formées avec les quatre contre-électrodes précitées n'ont pas de seuil.

Exemple 5

On répète les essais de l'exemple 4, mais en appliquant sur le recto (c'est-à-dire sur la face destinée à être en contact avec le matériau électrolytique) de chaque contre-électrode, avant découpe des disques, une couche d'une dizaine de micromètres du matériau électrolytique de l'exemple 1, selon la procédure de cet exemple 1.

On applique alors les disques ainsi enduits sur la couche de matériau électrolytique de l'exemple 4 recouvrant l'électrode transparente sur son substrat de verre : cette fois-ci, les disques restent collés et la cohésion des cellules se maintient sans qu'il soit nécessaire d'appliquer une pression ; de même, sans pression extérieure appliquée, le fonctionnement de chaque cellule est uniforme.

Exemple 6

On répète les essais de l'exemple 5 avec les différences suivantes :

1) on n'applique aucune couche de matériau électrolytique sur l'électrode transparente 2 fixée sur son substrat de verre 15 :

2) on applique sur le recto de chaque contre-électrode 4 une couche du matériau électrolytique 3 de l'exemple 4 d'une épaisseur d'environ cent micromètres (selon la procédure d'application décrite dans l'exemple 4) ;

3) on découpe dans les feuilles composites (contre-électrode - matériau électrolytique) ainsi réalisées des disques composites 23 qu'on applique chacun sur l'électrode transparente 2 : ici, à la différence de ce qu'on observait dans l'exemple 4, et probablement grâce à l'uni de la surface de l'électrode transparente 2 opposée à la surface généralement irrégulière des feuilles de matériau de contre-électrode, l'adhérence est uniforme et satisfaisante, malgré le collant de surface plus faible de ce matériau que celui du matériau électrolytique de l'exemple 1 ; les cellules individuelles ne nécessitent pas l'application d'une pression pour maintenir leur cohésion structurelle ni pour assurer de bons contacts électriques. (figure 13).

Le fonctionnement de chaque cellule est comparable à celui des cellules de l'exemple 5 ; la densité optique est uniforme à l'intérieur du disque composite.

Exemple 7

On applique une couche du matériau électrolytique 3 de l'exemple 4 sur une électrode transparente 2 portée par un substrat de verre 24. Sur cette couche 3, on dépose par sérigraphie des portions de couche en forme de carrés 25 de 3,5mm de côté de l'encre à base de graphite "Electrodag 423 SS". Sur ces carrés 25, après traitement thermique, on dépose également par sérigraphie des portions de couche en forme de carrés 26 de 2,5mm de côté d'encre à base d'argent "429 SS" de Acheson pour sérigraphie. On applique enfin toujours par sérigraphie une couche du vernis isolant 27 "432 SS" de Acheson pour sérigraphie recouvrant la totalité de la surface de la plaque à l'exception des carrés d'encre argentée ainsi que d'une bande 28 à la périphérie de l'électrode transparente 2.

On dépose par projection au pistolet à travers un masque des cordons 29 de laque d'argent "200" connectant et reliant chaque carré d'encre à l'argent 26 à un bord 29 de la plaque de verre 24 à partir duquel il est plus aisé d'effectuer une liaison électrique avec une alimentation extérieure ; on dépose en même temps un cordon périphérique 30 de laque d'argent permettant également de connecter l'électrode transparente à l'alimentation extérieure. (figures 14 et 15).

L'aspect et les caractéristiques de chaque cellule sont semblables à ceux des exemples 4 et 5. En particulier, la densification est uniforme à l'intérieur d'une aire exactement délimitée par la projection orthogonale du carré 25 d'encre graphitée.

Exemple 8

On procède comme dans l'exemple 7 sauf que l'on dépose sur l'électrode transparente, au lieu d'une couche continue du matériau électrolytique considéré des portions de couche de ce matériau en forme de carrés de 3,7mm de côté par sérigraphie, la composition formatrice fluide de l'exemple 4 ayant été ramenée par évaporation d'eau à la viscosité convenable pour cette application. En outre, au lieu du vernis isolant transparent de l'exemple 7, on applique selon la même géométrie, en ménageant les mêmes ouvertures, une couche de quelques centaines de micromètres d'élastomère silicone blanc "Rhodorsil CAF 730" de Rhône-Poulenc qui vulcanise par séjour à l'air en quelques heures. L'aspect obtenu est le même que celui des cellules de l'exemple 7 avec une légère différence de teinte entre le blanc des carrés de matériau électrolytique et celui de l'élastomère silicone blanc, différence qui n'existe pas dans les dispositifs de l'exemple 7. Le noircissement s'effectue selon une aire qui est la projection orthogonale des carrés d'encre graphitée (et non pas l'aire des portions de matériau électrolytique).

Exemple 9

Sur une feuille souple de polyester de 50 micromètres d'épaisseur, on applique successivement avec séchages et/ou traitements thermiques intermédiaires :

1) Des portions de couche d'encre à l'argent pour sérigraphie en forme de carrés de 2,5mm de côté prolongés par un cordon continu jusqu'à un bord de la feuille ;

2) une couche de vernis isolant avec des ouvertures de 2,5mm de côté correspondant aux carrés précédents ;

3) des portions de couche d'encre graphitée pour sérigraphie en forme de carrés de 3,5mm de large centrés sur les carrés d'encre à l'argent;

4) une couche du matériau électrolytique de l'exemple 4.

On applique en la déroulant la feuille composite flexible ainsi obtenue sur une plaque de verre comportant une électrode transparente (verre "NESA") munie d'une bande périphérique assurant le contact sur l'électrode transparente. La feuille composite déborde de la plaque de verre de façon à permettre l'accès aux extrémités des cordons d'encre à l'argent.

La feuille composite adhère à la plaque de verre "NESA" grâce au collant de surface du matériau électrolytique et la cohésion structurelle du panneau d'affichage ainsi réalisé se trouve assurée sans autre moyen.

Chaque cellule est individuellement adressable en appliquant une tension entre l'électrode transparente et chaque bande d'encre à l'argent reliant chaque contre-électrode. Le noircissement de chaque point-image paraît exactement délimité par la projection orthogonale de l'aire du carré d'encre graphitée.

Selon une variante de réalisation du présent dispositif, la feuille plastique servant de substrat primaire est une feuille enduite d'une couche anti-adhésive présentant une très faible adhérence aux couches qu'on dépose sur elle. Après achèvement du panneau, cette feuille est retirée et n'a donc servi que d'intermédiaire commode de réalisation du panneau d'affichage.

Exemple 10

Sur une feuille souple de polyester de 50 microns d'épaisseur, on applique successivement avec séchages et/ou traitements thermiques intermédiaires :

1) Des portions de couche d'encre à l'argent pour sérigraphie en forme de bandes parallèles de 0,3mm de large ;

2) des bandes de vernis isolant pour sérigraphie remplissant les intervalles entre les bandes d'encre à l'argent précédentes ;

3) des portions de couche d'encre graphitée en forme de bandes parallèles de 0,4mm de large centrées sur les bandes d'encre à l'argent ;

4) Des portions de couche du matériau électrolytique de l'exemple 4 en forme de bandes de 0,45mm de large centrées sur les bandes précédentes.

On applique en la déroulant la feuille composite ainsi obtenue sur une plaque de verre revêtue d'une couche transparente conductrice de dioxyde d'étain configurée en bandes parallèles indépendantes de 3,5mm de côté séparées par un intervalle de 0,1mm de diamètre, l'orientation de la feuille composite par rapport à la plaque étant telle que les bandes d'électrode transparente soient perpendiculaires aux bandes de la feuille composite. La feuille composite déborde de la plaque de verre de façon à ce que les extrémités de ses bandes soient accessibles pour connexion à l'électronique d'adressage et de commande.

La feuille composite adhère à la plaque de verre revêtue de ses électrodes transparentes grâce au collant de surface du matériau électrolytique et la cohésion structurelle du panneau d'affichage ainsi réalisé se trouve assurée sans autre moyen.

Les colonnes constituées par les bandes d'électrodes conductrices sont reliées par leurs extrémités à une électronique d'adressage et de commande à laquelle sont également reliées les extrémités des bandes d'encre à l'argent constituant les conducteurs de lignes du panneau.

L'écriture matricielle du panneau peut s'effectuer ligne après ligne : une tension d'écriture est appliquée entre d'une part toutes les colonnes sélectionnées et d'autre part une ligne donnée : on noircit ainsi les points-image sélectionnés de la ligne considérée sans noircir les points-image non sélectionnés de la même ligne ni ceux des lignes précédentes et suivantes, ceci résultant de la valeur élevée du seuil de tension par rapport à la tension d'écriture ainsi que de caractéristiques favorables de la mémoire.

Selon une variante de réalisation du présent dispositif, la feuille plastique servant de substrat primaire est une feuille enduite d'une couche de résine hydrofugeante siliconée présentant une faible adhérence aux couches qu'on dépose sur elle. Après achèvement du panneau, cette feuille est retirée et n'a donc servi que d'intermédiaire commode de réalisation du panneau d'affichage.

Exemple 11

Cet exemple concerne un panneau d'affichage à adressage direct destiné à un caractère alphanumérique à sept segments (figures 16, 17, 18, 19, 20).

Un tel panneau permet de réaliser l'un des dix chiffres 0 à 9 respectivement, à partir de sept segments linéaires juxtaposés 31A, 31B, 31C, 31D, 31E, 31F et 31G, cette disposition étant connue en soi et comportant quatre segments répartis deux à deux bout à bout sur deux lignes longitudinales parallèles et trois segments transversaux respectivement supérieur 31E, inférieur 31F et médian 31G.

Ce panneau comporte de la partie frontale tournée vers le lecteur à la partie arrière, une plaque de verre 32 et sur la face arrière de celle-ci, une couche ou un revêtement mince et transparent conducteur electronique, par exemple d'oxyde d'étain formant l'électrode de travail 2. Dans une première variante (figures 18 et 19), des portions de couche de matériau électrolytique 3 tel que celui précédemment décrit et des portions de couche de la contre-électrode 4 également telle que celle précédemment décrite sont superposées, en regard l'une de l'autre, en étant agencées pour constituer les segments 31A à 31G mentionnés précédemment. Selon la structure générale déjà décrite précédemment, la couche de matériau électrolytique 3 est en contact avec l'électrode de travail 2, tandis qu'une contre-électrode 4 est en contact avec sur le matériau 3. Les différents segments 31A à 31G sont séparés les uns des autres par des espaces 33 pouvant être très faibles par exemple, un écartement de l'ordre de 0,5mm pour un caractère de l'ordre de 12cm de haut. Dans une seconde variante (figure 11c), la couche de matériau électrolytique 3 occupe la presque totalité de la surface de la couche transparente conductrice électrode de travail 2 à l'exception d'une bande périphérique 34.

Dans ces deux formes de réalisation décrites, sont prévus des conducteur de l'électricité filiformes formant amenées de courant électrique à l'électrode transparente 2 constitué avec une pâte ou encre conductrice ou équivalent décrite précédemment. Plus précisément, et dans le cas d'un caractère alphanumérique à sept segments 31A à 31G, il est prévu trois conducteurs filiformes ou longilignes 35A, 35B, 35C entourant les segments 31A à 31G, respectivement à l'extérieur et à l'intérieur, ainsi qu'il est représenté sur la figure 16 à laquelle on se réfère expressément. Cette disposition permet une amenée et une distribution de l'énergie électrique aussi régulière et satisfaisante que possible pour les différents segments. Le mode de réalisation du matériau connecteur électrique formant les conducteurs filiformes ou longilignes 35A, 35B, 35C, de même que leur association à la plaque 32 du côté de la couche et formant électrode de travail 2 ont été déjà décrits précédemment et ne sont pas décrits de nouveau ici.

Par ailleurs, sont prévus des conducteurs de l'électricité en forme de bandes 36 chacune propre et appliquée au contact d'un segment 31A à 31G et de forme semblable mais de dimensions inférieures à celles du segment 31A à 31G concerné constitué avec une pâte ou encre conductrice ou équivalent également décrite précédemment formant amenée de courant aux contre-électrodes 4 des segments 31A à 31G. En effet, en général, dans ce genre d'application, la surface disponible pour l'application de ce matériau conducteur sur la contre-électrode 4 est plus important que celle possible sur l'électrode 2, et, de surcroît, les bandes 35 ne sont pas visibles depuis la face frontale du panneau. Dans cette application, qui fonctionne par réflexion, et dans la structure indiquée, il est nécessaire de prévoir un matériau de masquage 37 constituant un fond pour le panneau, ce matériau de masquage 37 étant agencé en couche et laissant toutefois apparaître, naturellement, les conducteurs filiformes ou longilignes 35A, 35B, 35C et les portions de couche de matériau 3. Un tel matériau de masquage 37 a également été décrit précédemment et n'est pas de nouveau décrit ici. Ce matériau de masquage recouvre les chants des portions de couches de matériau électrolytique 3 et des contre-électrodes 4 et partiellement le verso de ces dernières contribuant à la cohésion du panneau et assurant une isolation des cellules ainsi constituées.

Les moyens de connexion électrique et de support mécanique complémentaire du panneau sont constituées par une plaque arrière 38, parallèle à la plaque de verre 32 et pouvant être associée à celle-ci, notamment par ses bords, par un joint d'association 39, notamment en élastomère silicone, un tel joint 39 ayant la capacité d'absorber des différences de mouvement entre la plaque arrière 38 et la plaque de verre 32.

Dans une forme de réalisation illustrée plus spécialement par la figure 18, la plaque 38 est une plaque de circuit imprimé et comporte, au droit d'une bande, 36, un trou 40 dans lequel peut être engagé un cavalier 41 électriquement conducteur qui, par son extrémité interne 42 vient au contact électronique de la bande 36 et, par son extrémité externe rabattue 43, vient sur la face extérieure 44 de la plaque 38 être appliqué et au contact d'un conducteur 45 plat de la plaque 38 sur lequel il peut être maintenu et associé électriquement au moyen d'une encre ou pâte conductrice ou équivalente 46. Les différents conducteurs 45 (en l'occurence sept) correspondant aux différents segments 31A à 31G sont associés électriquement à un connecteur embrochable 47 se trouvant sur un bord de la plaque 38. Ce connecteur embrochable 47 comporte huit positions dont sept 48 correspondent aux sept contre électrodes 4 des segments 31A à 31G via les conducteurs 45 et les cavaliers 41 et un, 49 correspond à l'électrode 2 via d'autres cavaliers 50, traversant d'autres trous 51 au droit des conducteurs filiformes ou longilignes 35A, 35B, 35C, les cavaliers 50 étant agencé sur un conducteur 52 de la plaque 38, ce conducteur 52 étant constitué par la face arrière électriquement conductrice de cette plaque à l'exception des conducteurs 45, les différents conducteurs 45 et 52 étant isolés les uns des autres.

Selon une autre variante (figure 19), des manchons de connexion électrique 53 prolongeant les conducteurs 45 et 52 sont prévus dans les trous 40 et 51 et on coule dans chacun de ces manchons une goutte de matériau de connexion électrique 54 telle qu'une encre ou pâte conductrice ou équivalent qui vient au contact des bandes 36 ou des conducteurs 35A, 35B, 35Cet y assure une "soudure" électrique.

Les deux variantes de réalisation objet des figures 18 et 19 correspondent à la troisième variante, objet de la figure 8C précédemment décrite.

Le panneau peut également faire l'objet d'une réalisation conforme à la première variante de la figure 8A également décrite (figure 20). A cet effet, le matériau électrolytique forme une couche 3 continue et non plus une couche fractionnée en segments. Cela permet également que la couche de matériau 3 forme un fond contrastant pour les segments d'image 31A à 31G. Les contre-électrodes 4 sont réalisées comme précédemment, de même que les amenées de courant et connexions électriques en ce qui concerne les contre-électrodes 4. Dans ce cas, le contour des contre-électrodes 4 définit la forme des segments d'image 31A à 31G. Les amenées de courant de l'électrode de travail 2 sont réalisées soit au moyen d'un conducteur filiforme entourant la plaque 32 sur sa face interne, à la périphérie, c'est-à-dire, sur la couche constituant l'électrode 2 et à l'extérieur de la couche de matériau électrolyte 3 c'est-à-dire dans la bande périphérique 34, soit par points, ces points étant répartis de façon appropriée pour assurer une distribution convenable de l'énergie électrique.

Selon un détail de réalisation objet de la figure 21, on peut associer aux amenées de courant réalisées en un premier matériau 55 électroniquement conducteur tel qu'une encre ou pâte conductrice ou équivalent précédemment décrit une bande ou fil 56 en un second matériau plus conducteur, par exemple, une bande ou un fil de cuivre, ce second matériau 56 faiblement résistif étant en liaison électrique avec les amenées de courant précédentes 55par recouvrement ou enrobage partiel au moyen d'un complément 57 du premier matériau.

Exemple 12

Sur la figure 22 est répresentée une autre variante de réalisation d'un panneau d'affichage comportant plusieurs - en particulier trois en l'occurrence - caractères 58A, 58B, 58C à sept segments chacun, chacun comme décrit précédemment. Ces trois caractères 58A, 58B, 58C permettent alors d'afficher un nombre compris entre 000 et 999. Les trois caractères 58A, 58B, 58C sont juxtaposés et le panneau est partagé en trois zones respectivement 59A, 59B, 59C sur chacune desquelles se trouve un des trois caractères respectivement 58A, 58B, 58C. A cet effet, l'électrode de travail 2 et, en particulier, la couche conductrice sur la plaque de verre 32 est elle-même distribuée en trois portions électriquement distinctes et juxtaposées, séparées l'une de l'autre par un espace minimal tel que 60 qui peut atteindre une dizaine de microns de largeur. La couche de matériau électrolytique 3, de couleur blanche, est distribuée en portions de couches ayant la forme, la dimension et l'emplacement des segments constituant chaque caractère 58A, 58B, 58C. L'espace 61 extérieur aux segments est recouvert d'une couche de matériau masquant et contrastant blanc.

Dans une première forme de mise en oeuvre, les contre-électrodes 4 des segments identiques des trois caractères 58A, 58B, 58C peuvent être connectés entre eux, en parallèle. De plus, dans cette même première forme de mise en oeuvre, chacune des portions de couche, en ce qui concerne l'électrode de travail 2, est alimentée séparément. Le panneau ainsi constitué comporte un connecteur embrochable 62 à dix sorties, à savoir sept sorties 63 pour les sept contre-électrodes 4 de segments homologues des trois caractères 58A, 58B, 58C et trois sorties 64pour les trois portions de l'électrode de travail 2 transparente. Le nombre de connexions électriques est limité tout en permettant de commander l'écriture des différents caractères en temps partagé. La réalisation particulière de chaque caractère, peut être conforme à ce qui a été décrit précédemment dans le cas d'un caractère unique de l'exemple 11. Selon une variante de réalisation, (figure 22) l'amenée de courant électrique relative à l'électrode 2 peut être faite sous forme d'une pluralité de points, tels que 65, au lieu de conducteurs filiformes et longilignes tels que ceux précédemment décrits dans l'exemple 11. Ces points sont distribués autour des caractères 58A, 58B, 58C de manière à assurer une répartition de l'énergie électrique aussi convenable que possible. Egalement, en variante, le matériau masquant est noir au lieu d'être blanc, et les points 65, sont noirs. En variante (figure 23), la distribution électrique concernant l'électrode 2 peut être réalisée non par des amenées de courant ponctuelles telles que 65, ainsi qu'il vient d'être décrit, mais par des bandes longitudinales 66, ménagées sur les bords du panneau à un endroit où il n'y a pas de matériau électrolytique 3. Cette variante autorise les différentes combinaisons de configurations conjuguées précédemment décrites en relation avec les schémas des figures 8. En particulier, la couche de matériau électrolytique 3 peut être continue, ce qui permet d'éviter la présence d'un matériau de masquage.

Une second forme de mise en oeuvre (non représentée) diffère essentiellement de celle qui vient d'être décrite par le fait que d'une part l'électrode de travail transparente conductrice est commune à tous les caractères, c'est-à-dire commune à toutes les cellules élémentaires du dispositif; et que, d'autre part, l'électrode de travail et chaque contre-électrode individuellement sont reliées électriquement soit à une ou plusieurs zones de connexion situées au verso du panneau constitué par le substrat de verre et les composants du dispositif mentionnés précédemment, soit à un connecteur solidaire d'une plaque de circuit imprimé appliqué au verso du panneau, soit au moyen de contacts situés au droit des électrodes et portés par le bâti du dispositif auquel est intégré le panneau d'affichage. Dans le cas considéré qui comporte trois caractères à sept segments chacun, la liaison électrique avec l'électronique d'alimentation et de commande extérieure est réalisée au moyen de vingt-deux conducteurs indépendants. Dans le cas de l'emploi d'une plaque de circuit imprimé, la liaison électrique entre chaque amenée de courant et le conducteur correspondant de la plaque peut être réalisé ainsi qu'il est décrit dans l'exemple 11.

Exemple 13

On décrit maintenant un autre exemple de réalisation concernant un panneau d'affichage matriciel (figures 24 à 27) permettant d'afficher par exemple des caractères alphanumériques. Un tel panneau comporte des points-image agencés aux intersections de plusieurs lignes 67 et plusieurs colonnes 68, juxtaposés les uns aux autres, identiques les uns aux autres, en constituant ainsi une matrice permettant, selon la commande qui est faite, une écriture d'un caractère alphanumérique, d'un signe, d'une figure souhaitée. Dans cet exemple, le panneau comporte une plaque de verre 69 frontale sur la face arrière duquel sont réalisées des bandes 70 transparentes et électroniquement conductrices, constituant des d'électrodes 2 communes chacune à toutes les cellules d'une même colonne 68. Les bandes 70 peuvent être très proches les unes des autres, séparées par des intervalles juste nécessaires pour éviter le contact électrique entre elles selon la technique utilisée. Dans cet exemple, les portions de couche de matériau électrolytique 3 et les contre-électrodes 4 sont superposées, de même forme et de mêmes dimensions, et localisées à l'endroit de chaque noeud de ligne 67 et colonne 68, de manière à déterminer chacun des points-image, dont la plus grande dimension, dans le sens des lignes est légèrement inférieure à la largeur des bandes 70, en étant situés en totalité au droit et à l'intérieur d'une de ces bandes 70.

Au verso de chaque contre-électrode 4, une amenée de courant est réalisée au moyen d'un matériau de connexion déjà décrit pour de telles amenées.

Sur chacune des lignes, un conducteur électrique 71 tel qu'un ruban de cuivre, relie électriquement entre elles les différentes contre-électrodes 4 d'une même ligne 67 sur leur verso. L'association et le contact entre ce conducteur 71 et les amenées de courant des contre-électrodes 4 est réalisé au moyen du complément 72 de même matériau recouvrant ou enrobant que l'amenée elle-même. Un isolant électrique sépare le conducteur 71 des autres composants conducteurs du panneau dans les intervalles situés entre les points-image.

Dans la forme de réalisation dans laquelle les points-image sont de petites dimensions par exemple celles des points-image d'un écran d'ordinateur, il est en général suffisant de prévoir des amenées de courant pour les électrodes de travail 2 seulement aux extrémités des bandes 70.

Dans la forme de réalisation représentée dans laquelle les points-image ont une aire unitaire importante la conductivité généralement modeste des électrodes de travail 2 peut entraîner une alimentation électrique non uniforme des cellules élémentaires, il est prévu un mode de distribution du courant électrique sur une bande 72 comprenant des amenées de courant 73 agencées en tronçons de lignes filiformes parallèlement aux lignes 67 et placées entre les points-image tout en étant isolées du matériau électrolytique et des contre-électrodes 4. En variante, les amenées peuvent être distribuées en points. De plus, les amenées de courant 473d'une même bande 70 sont connectées entre elles à l'aide d'un conducteur-collecteur 74, par exemple un ruban de cuivre ou une bande de laque d'argent agencé selon la colonne 68 correspondante et relié aux amenées 73 de cette colonne correspondante, par un complément 75 de matériau d'amenée réalisant l'enrobage partiel ou le recouvrement.

Un isolant électrique sépare le conducteur-collecteur 74 de tous les autres composants conducteurs du panneau.

De plus, est prévu un matériau de masquage 76 en couche recouvrant la face arrière de la plaque de verre 69 à l'exception des zones ou se trouve le matériau électrolytique, ainsi que les zones réservées aux amenées de courant aux électrodes. Cette disposition est telle que les conducteurs-collecteurs 74 sont masqués par le matériau de masquage 76 et peuvent, sans préjudice, être placés à tout endroit souhaite, pourvu que le conducteur-conducteur 74 d'une colonne 68 ne soit pas au contact électrique des amenées de courant 73 de la colonne 68 voisine. A cet effet et à défaut d'isolant électrique intermédiaire, la longueur (dans le sens des lignes 67) des amenées 73 est suffisante sans être excessive pour ne pas interférer avec le conducteur-collectuer 74 de la colonne 68 voisine. Dans ce mode de réalisation, les conducteurs électriques 71 croisent les conducteurs-collecteurs 74, sans contact électrique par exemple à l'aide d'un isolant intercalaire. Dans le cas les conducteurs-collecteurs 74 sont des bandes de cuivre suffisamment rigides, il n'y a pas contact électrique avec les conducteurs 71 entre eux, étant donné qu'ils se trouvent les uns et les autres dans deux plans distincts séparés l'un de l'autre par un intervalle égal à l'épaisseur de la cellule, l'air formant isolant. En effet, les conducteurs-collecteurs 74 sont placés au voisinage du plan de la face arrière de la plaque 69, alors que les conducteurs électriques 71 sont placés dans un autre plan écarté correspondant à la surface libre arrière des contre-électrodes 4.

Un tel panneau peut être également associé, vers l'arrière, à une plaque de circuit imprimé 77 assurant les contacts électriques avec les conducteurs 71 de chaque ligne 67 et les conducteurs-collecteurs 74 de chaque colonne 68. Dans le cas de figure représenté, dans lequel le panneau comporte cinq lignes 67 et cinq colonnes 68, la plaque de circuit imprimé 77 comporte dix conducteurs 78 isolés les uns des autres pouvant être reliés à un connecteur latéral embrochable 79 à dix positions comme décrit dans l'exemple 11. Dès lors, en appliquant la différence de tension électrique requise entre un conducteur électrique 71 et un conducteur-collecteur 74 via le connecteur embrochable 79 et les conducteurs 78, on permet l'écriture du point-image correspondant à l'intersection des ligne et colonne 67 et 68, correspondant à ces conducteurs 71 et 74. De plus, il est possible d'appliquer la tension électrique d'écriture entre un unique conducteur électrique 46 et plusieurs conducteurs-collecteurs 74 ou, inversement, entre un unique conducteur-collecteur 74 et plusieurs conducteurs 71.

Ce mode de réalisation peut faire lui-même l'objet de très nombreuses variantes. En ce qui concerne tout d'abord la taille même des points-images, ceux-ci peuvent varier du très petit (tels que le point-image d'un écran d'ordinateur) au très grand (par exemple, des points-image ayant un encombrement de l'ordre du centimètre ou même plus) notamment dans le cas d'un panneau d'affichage public. Les variantes concernent ensuite la conjugaison des configurations constitutives du panneau. Dans la forme de réalisation décrite, les électrodes de travail en forme de bande 70 sont communes à chaque colonne 68 et séparées entre les colonnes 68. Les portions de couche de matériau électrolytique 3 et les contre-électrodes 4 sont distinctes et propres à chaque cellule élémentaire. Mais, dans d'autres variantes de réalisation, on peut concevoir d'autres combinaisons de conjugaison de configuration, ainsi qu'il a déjà été décrit en référence aux figures 8. Les variantes peuvent concerner également les connexions électriques internes au dispositif d'affichage, notamment conformément à ce qui a été mentionné dans les exemples précédents. Enfin, les variantes peuvent concerner le procédé de fabrication même d'un tel panneau ainsi qu'il a été décrit précédemment.

**Revendications**

**1.** Cellule (1) de modulation de la lumière étant capable d'écrire au moins un point-image ou segment d'image (5), de maintenir dans l'état écrit d'un tel point-image ou segment d'image (5), reversiblement, d'effacer d'un tel point-image ou segment d'image (5), et de maintenir dans l'état effacé de ce point-image ou segment d'image (5), l'écriture d'un point-image ou segment d'image (5) étant défini comme l'accroissement local de densité optique et l'effacement d'un point-image ou segment d'image (5) étant défini comme la diminution ou la disparition de l'accroissement de densité optique obtenu lors de l'écriture, ladite cellule comportant, au moins, en combinaison :

1°) Une première électrode (1) dite électrode de travail, transparente ou substantiellement transparente et électroniquement conductrice ;

2°) Une seconde électrode (4) dite contre-électrode, écartée transversalement de l'électrode de travail (2) et électroniquement conductrice ;

3°) Au moins une couche ou portion de couche de matériau (3) possédant une conductivité ionique interposée entre les deux électrodes (2, 4) et en contact avec elles dans la région d'un point-image ou d'un segment d'image (5),

4°) Des zones d'amenée du courant électrique sur l'électrode de travail (2) et sur la contre-électrode (4), aptes notamment à permettre d'une part d'appliquer à l'électrode de travail (2) une tension électrique négative par rapport à celle de la contre-électrode (4) et, d'autre part, de faire passer entre les électrodes (2, 4) un courant dont le sens est opposé à celui du courant électrique résultant de l'application de la tension précédente, caractérisé en ce que ledit matériau

1. est constitué par un mélange homogène, de consistance solide, comportant les constituants suivants :

(a) Au moins un sel hydrosoluble ou un mélange hydrosoluble de sels d'au moins un métal cathodiquement déposable à partir d'une solution aqueuse d'un de ses ions simple ou complexe ;

(b) Au moins une résine polymère filmogène primitivement hydrosoluble ;

(c) de l'eau ; et

(d) un couple redox auxiliaire, ledit mélange étant capable de, réversiblement, (1) développer des dépôts de métal ou d'alliage par réduction cathodique d'au moins un ion métallique déposable présent dans le mélange, et (2) effacer, par oxydation anodique, les dépôts et réincorporer dans l'état d'origine l'ion ou les ions métalliques produits par cette oxydation ; les constituants (a), (b), (c) et (d) étant choisis afin de permettre une déformabilité plastique ou viscoélastique ;

2. est conformable en couche continue d'une épaisseur comprise entre notamment quelques micromètres et plusieurs dizaine de micromètres.

2. Cellule (1) de modulation de la lumière, selon la revendication 1, caractérisée en ce que la contre-électrode (4) est transparente ou substantiellement transparente de manière que la cellule puisse fonctionner notamment par transmission.

3. Cellule de modulation de la lumière, selon la revendication 1, caractérisée en ce que la contre-électrode (4) est opaque, la cellule fonctionnant par réflexion.

4. Cellule de modulation de la lumière, selon la revendication 3, caractérisée en ce qu'elle comporte, en outre, un élément réfléchissant et/ou masquant et/ou diffusant placé entre l'électrode de travail (2) et la contre-électrode (4).

5. Cellule de modulation de la lumière, selon l'une quelconque des revendications 1 à 4, caractérisée en ce qu'une électrode de travail (2) et/ou une contre-électrode (4) possède une structure auto-portante ou est supporté par un substrat auto-portant.

6. Cellule (1) de modulation de la lumière, selon la revendication 5, caractérisée en ce que le substrat est transparent lorsque l'électrode qui lui est associée est elle-même transparente ou substantiellement transparente.

7. Cellule (1) de modulation de la lumière selon l'une quelconque des revendications 1 à 6, caractérisée en ce que ladite couche de matériau (3) présente des propriétés adhésives notamment un toucher collant ou un collant de contact.

8. Cellule (1) de modulation de la lumière selon l'une quelconque des revendications 1 à 7, caractérisée en ce qu'il comporte au moins deux desdites couches de matériaux (3) distinctes, combinées, notamment superposées et/ou juxtaposées.

9. Cellule (1) de modulation de la lumière selon la revendication 8, caractérisée en ce que lesdites deux matériaux (3) constituant deux couches sont différents.

10. Cellule (1) de modulation de la lumière selon la revendication 8, caractérisée en ce que chaque couche contient un pourcentage différent des constituants totaux d'un même matériau (3), l'ensemble des couches les contenant tous.

11. Cellule (1) de modulation de la lumière selon l'une quelconque des revendications 1 à 10, caractérisée en ce que les électrodes (2, 4) présentent une courbure d'ensemble ou des reliefs localisés, ceux-ci étant conférés à la cellule (1) elle-même.

12. Cellule (1) de modulation de la lumière selon l'une quelconque des revendications 1 à 11, caractérisée en ce qu'une desdites couches de matériau (3) est continue.

**13.** Cellule (1) de modulation de la lumière selon l'une quelconque des revendications 1 à 11, caractérisée en ce qu'une desdites couches d'au moins un matériau (3) est en grains ou particules juxtaposées maintenus par eux-mêmes ou au moyen d'un liant.

**14.** Cellule (1) de modulation de la lumière, selon l'une quelconque des revendications 1 à 13, caractérisée en ce qu'elle comporte, en outre, des moyens supplémentaires spécifiques de maintien de sa cohésion, de la permanence des contacts électriques ; et/ou des moyens supplémentaires spécifiques d'isolation et de protection de ses éléments constitutifs par rapport à l'atmosphère ambiante ; et/ou un espaceur spécifique.

**15.** Cellule (1) de modulation de la lumière, selon l'une quelconque des revendications 1 à 14, caractérisée en ce que, en combinaison, ladite couche de matériau (3) est substantiellement rigide et que la cellule (1) est dépourvue d'espaceur spécifique entre les deux électrodes (2, 4).

**16.** Cellule (1) de modulation de la lumière, selon l'une quelconque des revendications 1 à 15, caractérisée en ce que, en combinaison, d'une part, ladite couche de matériau (3) présente un toucher collant ou collant de contact et, d'autre part, la cellule (1) est dépourvue de moyens supplémentaires spécifiques de maintien de la cohésion.

**17.** Cellule (1) de modulation de la lumière, selon l'une quelconque des revendications 1 à 16, caractérisée en ce que, en combinaison, d'une part, ladite couche de matériau (3) a une conductivité ionique permanente, y compris en contact avec l'atmosphère ambiante extérieure et, d'autre part, la cellule (1) est dépourvue de moyens spécifiques assurant son étanchéité à l'humidité.

**18.** Cellule (1) de modulation de la lumière, selon l'une quelconque des revendications 1 à 17, caractérisée en ce qu'un point-image ou segment d'image (5) est déterminé en forme, taille et position exclusivement par l'intersection des projections orthogonales, sur une surface d'écran, d'aires données à l'électrode de travail (2), à la contre-électrode (4) et à ladite couche de matériau (3).

**19.** Cellule (1) de modulation de la lumière, selon la revendication 18, caractérisée en ce que l'aire, de électrode de travail (2), de la contre-électrode (4) ou de la couche de matériau (3) est déterminée en forme taille et position par l'intersection des projections orthogonales, sur une surface d'écran des aires des deux autres composants.

**20.** Cellule (1) de modulation de la lumière, selon la revendication 18, caractérisée en ce que les aires de deux composants électrode de travail (2), contre-électrode (4), couche de matériau (3) sont identiques et superposés et leur projection orthogonale commune sur le troisième composant est incluse dans l'aire de ce dernier.

**21.** Procédé de fabrication d'une cellule (1) de modulation de la lumière, selon l'une quelconque des revendications 1 à 20, caractérisé en ce qu'il comporte au moins les étapes consistant à :
1°) Constituer d'abord au moins une composition formatrice fluide comportant au moins les constituants du matériau (3) tels qu'indiqués dans la revendication 1 et un supplément d'eau en quantité telle que cette composition formatrice fluide ait la viscosité nécessaire pour son application en couche ;
2°) former une couche d'une composition formatrice fluide sur une des deux électrodes ;
3°) donner à ladite couche sa consistance solide.
    et
4°) appliquer l'autre électrode au contact de la face libre de ladite couche.

**22.** Procédé de fabrication d'une cellule (1) de modulation de la lumière selon la revendication 21, caractérisé en ce que l'on forme d'abord une couche sur au moins une électrode et on donne ensuite à cette couche sa consistance solide, notamment par évaporation, traitement thermique, réticulation, vulcanisation.

**23.** Procédé de fabrication d'une cellule (1) de modulation de la lumière selon la revendication 21, caractérisé en ce que l'on donne d'abord à la couche sa consistance solide notamment par évaporation, traitement thermique et on forme ensuite la couche sur au moins une électrode.

**EP 0 300 916 B1**

24. Procédé de fabrication d'une cellule (1) de modulation de la lumière selon l'une quelconque des revendications 21 à 23, caractérisé en ce qu'il comporte une étape consistant à former au moins une couche de matériau (3) sur une des deux électrodes (2, 4) et une autre étape, ultérieure, consistant à appliquer cette couche, par sa face libre, sur l'autre électrode.

25. Procédé de fabrication d'une cellule (1) de modulation de la lumière selon l'une quelconque des revendications 21 à 23, caractérisé en ce qu'il comporte une étape consistant à former au moins une première couche de matériau électrolytique sur une des deux électrodes, une autre étape consistant à former au moins une seconde couche sur l'autre électrode et une autre étape ultérieure consistant à réunir les première et seconde couches par leurs faces libres.

26. Procédé de fabrication d'une cellule (1) de modulation de la lumière selon l'une quelconque des revendications 21 à 25, caractérisé en ce que l'on forme ladite couche en une passe unique dans le cas d'une couche simple ou en plusieurs passes dans le cas d'une couche composite desdites compositions formatrices identiques ou différentes de façon successive ou non.

27. Procédé de fabrication d'une cellule (1) de modulation de la lumière selon l'une quelconque des revendications 21 à 26, caractérisé en ce que pour former ladite couche de matériau (3) adhérant à une électrode, on confère à la couche de matériau (3) un collant de surface ou de contact.

28. Procédé de fabrication d'une cellule (1) de modulation de la lumière selon l'une quelconque des revendications 21 à 27, caractérisé en ce que pour former ladite couche de matériau (3) sur une électrode soit on applique directement le matériau (3) et l'électrode au contact l'un de l'autre ; soit on applique d'abord le matériau (3) sur un substrat intermédiaire et provisoire notamment d'état de surface anti-adhérent et on transfère ensuite la couche de matériau (3) du substrat à l'électrode considérée.

29. Procédé de fabrication d'une cellule (1) de modulation de la lumière selon l'une quelconque des revendications 21 à 28, caractérisé en ce que la composition formatrice est appliquée en une ou plusieurs couches d'épaisseur totale préférentiellement comprise entre quelques micromètres et plusieurs centaines de micromètres.

30. Procédé de fabrication d'une cellule (1) de modulation de la lumière selon l'une quelconque des revendications 21 à 29, caractérisé en ce que la composition formatrice comprend au moins les constituants dudit matériau (3) et un supplément d'eau, et éventuellement des agents de maintien de la stabilité et/ou de la conservation et/ou facilitant l'application en couche de la composition formatrice.

31. Procédé de fabrication d'une cellule (1) de modulation de la lumière selon l'une quelconque des revendications 21 à 30, caractérisé en ce que l'on ajuste la viscosité de la composition formatrice fluide à une valeur convenable pour un procédé particulier de formation et/ou d'application en couche par évaporation d'une partie de son eau ou par ajout d'un supplément d'eau.

32. Cellule (1) de modulation de la lumière selon l'une quelconque des revendications 1 à 20, caractérisée par le fait que les zones d'amenée du courant électrique sont réparties de manière à obtenir une densité de courant aussi uniforme que possible à l'intérieur du point image ou segment d'image (5).

**Claims**

1. A Light-modulating cell (1), enabling writing at least one image point or image segment (5), maintaining such a written image point or image segment (5), reversibly, erasure of such an image point or image segment (5), and maintaining the erased state of the image point or image segment (5), the writing of an image point or image segment (5) being defined as a local increase in optical density, and the erasure of an image point or image segment (5) being defined as a reduction or disappearance of the increase in the optical density obtained during writing, said cell comprising, at least, in combination:

   1) a first electrode (2) called working electrode, transparent or substantially transparent and electronically conducting;
   2) a second electrode (4) called counter-electrode, spaced transversely from the working electrode (2) and electronically conducting;

46

3) at least one layer or portion of layer of material (3) having ionic electroconductivity, in contact with and interposed between the two electrodes (2, 4) in the region of an image point or image segment (5);

4) electrical connection zones for conducting electrical current to the working electrode (2)and counter-electrode (4), capable in particular of enabling on the one hand, application to the working electrode (2) of an electrical voltage which is negative with respect to that of the counter-electrode (4) and, on the other hand, allowing flow between the electrodes (2, 4) of a current whose direction is opposite to that of the electrical current resulting from application of the previous voltage, characterized in that said material

1) comprises a homogeneous mixture of solid consistency, comprising the following constituents :
a) a hydrosoluble salt or a hydrosoluble mixture of salts of at least one metal which can be cathodically deposited from an aqueous solution of one of its simple or complex ions;
b) at least one initially hydrosoluble film-forming polymer resin;
c) water; and
d) an auxiliary redox couple, said mixture is able to reversibly (1) develop metal or metal alloy deposits by cathodic reduction of at least one depositable metal ion present within the mixture, and (2) by anodic oxidation, dissolve the deposits and reincorporate into their original state the metal ion or ions produced by this oxidation; the constituents (a), (b), (c) and (d) being selected so as to allow plastic or viscoelastic deformability;

2) can be formed in a continuous layer of a thickness, in particular, of between a few microns and a few tens of microns.

2. The light-modulating cell according to Claim 1, characterized in that the counter-electrode (4) is transparent or substantially transparent such that the cell can function in particular by transmission.

3. The light-modulating cell according to Claim 1, characterized in that the counter-electrode (4) is opaque, the cell functioning by reflection.

4. The light-modulating cell according to Claim 3, characterized in that it further comprises a reflecting and/or masking and/or diffusing element located between the working electrode (2) and the counter-electrode (4).

5. The light-modulating cell according to any one of Claims 1 to 4, characterized in that a working electrode (2) and/or a counter-electrode (4) includes a self-supporting structure or is supported by a self-supporting substrate.

6. The light-modulating cell according to Claim 5, characterized in that the substrate is transparent or substantially transparent when the electrode which is associated with it is itself transparent or substantially transparent.

7. The light-modulating cell according to any one of Claims 1 to 6, characterized in that said layer of material (3) has adhesive properties, in particular, a tacky touch or a sticky contact.

8. The light-modulating cell according to any one of Claims 1 to 7, characterized in that it comprises at least two of said layers of material (3) which are separate, combined and, in particular, superimposed and/or juxtaposed.

9. The light-modulating cell according to Claim 8, characterized in that said two materials (3) constituting two layers are different.

10. The light-modulating cell according to Claim 8, characterized in that each layer contains a different percentage of the total constituents of a same material (3), the layers together containing them all.

11. The light-modulating cell according to any one of claims 1 to 10, characterized in that the electrodes (2, 4) have an overall curvature or localized reliefs, the latter being applied to the cell itself.

12. The light-modulating cell according to any one of claims 1 to 11, characterized in that one of said layers of material (3) is continuous.

**13.** The light-modulating cell according to any one of Claims 1 to 11, characterized in that one of said layers of at least one material (3) is of juxtaposed granules or particles held by themselves or by a binder.

**14.** The light-modulating cell according to any one of claims 1 to 13, characterized in that it further comprises specific supplementary means for maintaining its cohesion, the permanence of the electrical contacts; and/or specific supplementary means of isolation and protection of its constituent elements from the ambient atmosphere; and/or a specific spacer.

**15.** The light-modulating cell according to any one of claims 1 to 14, characterized in that, in combination, said layer of material (3) is substantially rigid and that the cell (1) has no specific spacer between the two electrodes (2, 4).

**16.** The light-modulating cell according to any one of Claims 1 to 15, characterized in that, in combination, on the one hand, said layer of material (3) has a tacky touch or a sticky contact and, on the other hand, the cell has no specific supplementary means for maintaining its cohesion.

**17.** The light-modulating cell according to any one of Claims 1 to 16, characterized in that, in combination, on the one hand, said layer of material (3) has a permanent ionic conductivity, including when in contact with external ambient atmosphere and on the other hand, the cell has no specific means ensuring its leak-tightness.

**18.** The light-modulating cell according to any one of Claims 1 to 17, characterized in that an image point or image segment (5) is determined in shape, size and position exclusively by intersection of orthogonal projections on a screen surface, of the areas of the working electrode (2), counter-electrode (4) and said layer of material (3).

**19.** The light-modulating cell according to Claim 18, characterized in that the area of the working electrode (2), counter-electrode (4), layer of material (3) is determined in shape, size and position by intersection of orthogonal projections, on a screen surface of the areas of the other two components.

**20.** The light-modulating cell according to Claim 18, characterized in that the areas of two components, working electrode (2), counter-electrode (4), layer of material (3) are identical and superimposed and their common orthogonal projection on the third component is included in the area of the latter.

**21.** A process for manufacturing a light-modulating cell (1), according to any one of Claims 1 to 20, characterized in that it comprises at least the steps consisting in :
1) First fabricating a fluid formative composition comprising at least the constituents of the material (3) as mentioned in Claim 1 and additional water in quantities such that this fluid formative composition has the desired viscosity for its application in layer;
2) Forming one layer of a fluid formative composition on one of the two electrodes;
3) Giving said layer its solid consistency; and
4) Applying the other electrode to the free face of said layer.

**22.** The process for manufacturing a light-modulating cell (1) according to Claim 21, characterized in that there is firstly formed a layer on at least one electrode and that this layer is then treated, in particular by evaporation, heat treatment, cross-linking or vulcanization to obtain its solid consistency.

**23.** The process for manufacturing a light-modulating cell (1) according to Claim 21, characterized in that the layer is firstly treated in particular by evaporation or heat treatment to obtain its solid consistency and that the layer is then formed on at least one electrode.

**24.** The process for manufacturing a light-modulating cell (1) according to any one of Claims 21 to 23, characterized in that it comprises a step consisting in forming at least one layer of material (3) on one of the two electrodes (2, 4) and another subsequent step consisting in applying this layer, by its free face, to the other electrode.

48

**25.** The process for manufacturing a light-modulating cell (1) according to any one of Claims 21 to 23, characterized in that it comprises a step consisting in forming at least a first layer of material on one of the two electrodes, another step consisting in forming at least a second layer on the other electrode and another subsequent step consisting in joining the first and second layers by their free faces.

**26.** The process for manufacturing a light-modulating cell (1) according to any one of Claims 21 to 25, characterized in that said layer is formed in one pass in the case of simple layer or in several successive or non-successive passes in the case of composite layer of formative compositions which may be identical or different.

**27.** The process for manufacturing a light-modulating cell (1) according to any one of claims 21 to 26, characterized in that in order to form said layer of material (3) adhering to an electrode, a surface or contact adhesive properties are given to the layer of material (3).

**28.** The process for manufacturing a light-modulating cell (1) according to any one of Claims 21 to 27, characterized in that in order to form said layer of material (3) on an electrode, the material (3) and the electrode are either directly applied in contact with each other, or the material (3) is first applied to a temporary, intermediate substrate, particularly one having a non-adhering surface, and the layer of material (3) is then transferred from the substrate to the electrode concerned.

**29.** The process for manufacturing a light-modulating cell (1) according to any one of Claims 21 to 28, characterized in that the formative composition is applied in one or more layers of total thickness preferably between a few microns and a few hundred microns.

**30.** The process for manufacturing a light-modulating cell (1) according to any one of Claims 21 to 29, characterized in that the formative composition comprises at least the constituents of said material (3) and additional water, and possibly agents for maintaining the stability and/or conservation and/or facilitating the application in layers of the formative composition.

**31.** The process for manufacturing a light-modulating cell (1) according to any one of Claims 21 to 30, characterized in that the viscosity of the fluid formative composition is adjusted to a suitable value for a particular method of formation and/or application in layers by evaporation of part of its water or by addition of additional water.

**32.** Light-modulating cell (1) according to any one of Claims 1 to 20, characterized in that the electrical connection zones are distributed in such a way as to obtain a current density which is as uniform as possible inside the image point or image segment (5).

**Patentansprüche**

**1.** Zelle (1) zum Modulieren von Licht, die die Möglichkeit bietet, mindestens einen Bildpunkt bzw. ein Bildsegment (5) zu schreiben, einen solchen Bildpunkt bzw. ein solches Bildsegment (5) im geschriebenen Zustand beizubehalten und umgekehrt einen Bildpunkt bzw. ein Bildsegment (5) zu löschen und einen solchen Bildpunkt bzw. ein solches Bildsegment (5) im gelöschtem Zustand beizubehalten, wobei unter Schreiben eines Bildpunktes bzw. Bildsegmentes (5) eine örtliche Zunahme der optischen Dichte und unter Löschen eines Bildpunktes bzw. Bildsegmentes (5) ein Verringern bzw. Verschwinden der beim Schreiben erzielten örtliche Zunahme der optischen Dichte zu verstehen ist und die Zelle (1) mindestens folgende Teile besitzt:
1°) eine transparente oder weitgehend transparente, elektronisch leitende erste Elektrode (2) als Arbeitselektrode;
2°) eine in Querrichtung von der Arbeitselektrode (2) entfernte, elektronisch leitende zweite Elektrode als Gegenelektrode;
3°) mindestens eine Schicht oder einen Teil einer Schicht aus einem ionenleitfähigen Material (3), das zwischen den beiden Elektroden (2, 4) angebracht und mit diesen im Bereich eines Bildpunkts bzw. Bildsegmentes (5) in Berührung steht;
4°) Bereiche zum Zuführen von elektrischem Strom auf die Arbeitselektrode (2) und die Gegenelektrode (4), die insbesondere in der Lage sind, einerseits eine gegenüber der Gegenelektrode (4) negative elektrische Spannung an der Arbeitselektrode (2) anzulegen und andererseits zwischen den beiden Elektroden (2, 4), einen Strom anzulegen, der in umgekehrter Richtung zu dem beim Anlegen der vorhergehenden Spannung erzeugten Strom fließt, **dadurch gekennzeichnet, daß** das Material (3)

1. aus einer einheitlichen Mischung fester Beschaffenheit mit einem Bestandteil aus jeder der nachfolgenden Kategorien besteht:

a) einem wasserlöslichen Salz oder einer wasserlöslichen Salzmischung mindesten eines in einer wäßrigen Lösung eines seiner einfachen oder komplexen Ionen kathodisch niederschlagbaren Metalls,

b) mindestens einem ursprünglich wasserlöslichen, filmbildenden Polymer-Kunstharz,

c) Wasser, sowie

d) einem Redox-Hilfselement diese Mischung in der Lage ist, umkehrbar (1.) Metall- oder Legierungsablagerungen durch Kathodenreduktion mindestens eines niederschlagbaren, in der Mischung vorhandenen Ions zu entwickeln und (2.) durch anodische Oxidation die Niederschläge zu beseitigen und das bzw. die bei dieser Oxidation erzeugten Metallionen in den ursprünglichen Zustand zurück zu versetzen;

wobei die bestandteile a), b), c) und d) so gewählt werden, daß eine elastische bzw. viskoelastische Verformung möglich ist;

2. mit einer Stärke zwischen einigen wenigen Mikrometern und mehreren Dutzend Mikrometern herstellbar ist;

2. Zelle (1) zum Modulieren von Licht nach Patentanspruch 1, dadurch gekennzeichnet, daß die Gegenelektrode (4) transparent oder weitgehend transparent ist, sodaß die Elektrode insbesondere durch Transmission betrieben werden kann.

3. Zelle (1) zum Modulieren von Licht nach Patentanspruch 1, dadurch gekennzeichnet, daß die Gegenelektrode (4) undurchsichtig ist, wobei die Zelle durch Reflexion betrieben wird.

4. Zelle (1) zum Modulieren von Licht nach Patentanspruch 3, dadurch gekennzeichnet, daß sie zusätzlich ein reflektierendes und/oder abdeckendes und/oder streuendes Teil zwischen Arbeitselektrode (2) und Gegenelektrode (4) besitzt.

5. Zelle (1) zum Modulieren von Licht nach Patentanspruch 1 bis 4, dadurch gekennzeichnet, daß eine Arbeitselektrode (2) und/oder Gegenelektrode (4) einen selbsttragenden Rahmen besitzt oder von einem selbsttragenden Substrat gehalten wird.

6. Zelle (1) zum Modulieren von Licht nach Patentanspruch 5, dadurch gekennzeichnet, daß das Substrat transparent ist, wenn die ihm zugeordnete Elektrode ebenfalls transparent oder weitgehend transparent ist.

7. Zelle (1) zum Modulieren von Licht nach Patentanspruch 1 bis 6, dadurch gekennzeichnet, daß die Materialschicht (3) haftende Eigenschaften, insbesondere Kleb- oder Kontakthafteigenschaften besitzt.

8. Zelle (1) zum Modulieren von Licht nach Patentanspruch 1 bis 7, dadurch gekennzeichnet, daß sie mindestens zwei getrennte Materialschichten (3) in kombinierter, insbesondere über- oder nebeneinanderliegender Form besitzt.

9. Zelle (1) zum Modulieren von Licht nach Patentanspruch 8, dadurch gekennzeichnet, daß die beiden Materialschichten aus unterschiedlichem Material (3) bestehen.

10. Zelle (1) zum Modulieren von Licht nach Patentanspruch 8, dadurch gekennzeichnet, daß jede Materialschicht einen unterschiedlichen Anteil an Bestandteilen ein und desselben Materials (3) besitzen, wobei sämtliche Bestandteile in den Schichten zusammen vorhanden sind.

11. Zelle (1) zum Modulieren von Licht nach Patentanspruch 1 bis 10, dadurch gekennzeichnet, daß die Elektroden (2, 4) eine gemeinsame Krümmung oder örtliche Reliefs bilden, welche der Zelle (1) selbst zugeordnet sind.

**12.** Zelle (1) zum Modulieren von Licht nach Patentanspruch 1 bis 11, dadurch gekennzeichnet, daß eine der Materialschichten (3) durchgehend ist.

**13.** Zelle (1) zum Modulieren von Licht nach Patentanspruch 1 bis 11, dadurch gekennzeichnet, daß bei mindestens einer der Schichten das Material (3) aus gegenüberliegenden Körnern bzw. Partikeln besteht, die von selbst oder mit Hilfe eines Bindemittels anhaften.

**14.** Zelle (1) zum Modulieren von Licht nach Patentanspruch 1 bis 13, dadurch gekennzeichnet, daß sie über zusätzliche Mittel zum Aufrechterhalten der Kohäsion und des ständigen elektrischen Kontaktes und/oder über spezifische zusätzliche Mittel zur Isolierung und zum Schutz ihrer Bestandteile vor der Umgebungsatmosphäre und/oder einen spezifischen Abstandhalter besitzt.

**15.** Zelle (1) zum Modulieren von Licht nach Patentanspruch 1 bis 14, dadurch gekennzeichnet, daß die Materialschicht (3) weitgehend starr ist und die Zelle (1) keinen spezifischen Abstandhalter zwischen den beiden Elektroden (2,4) besitzt.

**16.** Zelle (1) zum Modulieren von Licht nach Patentanspruch 1 bis 15, dadurch gekennzeichnet, daß in kombinierter Form einerseits die Materialschicht (3) Kleb- oder Kontakthafteigenschaften aufweist und andererseits die Zelle (1) über keine zusätzlichen Mittel zur Aufrechterhaltung der Bindekraft verfügt.

**17.** Zelle (1) zum Modulieren von Licht nach Patentanspruch 1 bis 16, dadurch gekennzeichnet, daß in kombinierter Form einerseits die Materialschicht (3) eine durchgehende, d.h. auch bei Kontakt mit der Außenatmosphäre bestehende Ionenleitfähigkeit aufweist und andererseits die Zelle (1) über keine spezifischen Mittel zur Gewährleistung ihrer Dichtigkeit gegenüber Feuchtigkeit verfügt.

**18.** Zelle (1) zum Modulieren von Licht nach Patentanspruch 1 bis 17, dadurch gekennzeichnet, daß ein Bildpunkt bzw. Bildsegment (5) hinsichtlich Form, Größe und Lage ausschließlich durch den Schnittpunkt senkrecht zueinander verlaufender Projektionen auf eine Bildschirmoberfläche sowie durch der Arbeitselektrode (2), der Gegenelektrode (4) und der Materialschicht (3) zugeordnete Flächen bestimmt wird.

**19.** Zelle (1) zum Modulieren von Licht nach Patentanspruch 18, dadurch gekennzeichnet, daß die jeweils der Arbeitselektrode (2), der Gegenelektrode (4) und der Materialschicht (3) zugeordnete Fläche hinsichtlich Form, Größe und Lage durch den Schnittpunkt senkrecht zueinander verlaufender Projektionen der Flächen der beiden anderen Bauteile auf eine Bildschirmfläche bestimmt wird.

**20.** Zelle (1) zum Modulieren von Licht nach Patentanspruch 18, dadurch gekennzeichnet, daß die Flächen von zwei der Bauteile Arbeitselektrode (2), Gegenelektrode (4) und Materialschicht (3) gleich groß sind und übereinanderliegen und daß ihre senkrechte Projektion auf das dritte Bauteil in dessen Fläche eingeschlossen ist.

**21.** Verfahren zum Herstellen einer Zelle (1) zum Modulieren von Licht nach Patentanspruch 1 bis 20, dadurch gekennzeichnet, daß es aus mindestens folgenden Arbeitsschritten besteht:
1°) Herstellen mindestens einer flüssigen Grundmischung mit mindestens den in Patentanspruch 1 aufgeführten Bestandteilen sowie einer Menge Wasser, die so bemessen ist, daß die flüssige Grundmischung die zu ihrem Auftragen als Materialschicht erforderliche Viskosität besitzt;
2°) Bilden einer Materialschicht aus der o.a. Grundmischung auf einer der beiden Elektroden;
3°) Versetzen der o.a. Materialschicht in den festen Zustand;
4°) Aufbringen der anderen Elektrode auf die freie Fläche der Materialschicht.

**22.** Verfahren zum Herstellen einer Zelle (1) zum Modulieren von Licht nach Patentanspruch 21, dadurch gekennzeichnet, daß zuerst eine Materialschicht auf mindestens einer Elektrode aufgetragen und danach diese Schicht insbesondere durch Verdampfen, Wärmebehandlung, Vernetzen oder Vulkanisieren verfestigt wird.

**23.** Verfahren zum Herstellen einer Zelle (1) zum Modulieren von Licht nach Patentanspruch 21, dadurch gekennzeichnet, daß zuerst eine Materialschicht insbesondere durch Verdampfen, Wärmebehandlung, Vernetzen oder Vulkanisieren verfestigt und danach auf mindestens einer Elektrode aufgetragen wird.

**24.** Verfahren zum Herstellen einer Zelle (1) zum Modulieren von Licht nach Patentanspruch 21 bis 23, dadurch gekennzeichnet, daß es aus einem ersten Arbeitsschritt, bei dem mindestens eine Materialschicht (3) auf einer der beiden Elektroden (2,4) gebildet wird, und einem zweiten Arbeitsschritt, bei dem diese Materialschicht mit ihrer freien Seite auf die andere Elektrode aufgebracht wird, besteht.

**25.** Verfahren zum Herstellen einer Zelle (1) zum Modulieren von Licht nach Patentanspruch 21 bis 23, dadurch gekennzeichnet, daß es aus einem ersten Arbeitsschritt, bei dem eine erste Schicht aus elektrolytischem Material auf einer der beiden Elektroden (2, 4) aufgetragen wird, einem zweiten Arbeitsschritt, bei dem mindestens eine zweite Materialschicht auf der anderen Elektrode aufgetragen wird, und einem dritten Arbeitsschritt, bei dem die beiden Schichten mit ihrer freien Seite zusammengefügt werden, besteht.

**26.** Verfahren zum Herstellen einer Zelle (1) zum Modulieren von Licht nach Patentanspruch 21 bis 25, dadurch gekennzeichnet, daß beim Auftragen einer einfachen Materialschicht diese in einem Arbeitsschritt und beim Auftragen einer mehrfachen Materialschicht aus gleichen oder unterschiedlichen, aufeinanderfolgend oder nicht aufeinanderfolgend aufgetragenen Grundmischungen diese Schicht in mehreren Arbeitsschritten angebracht wird.

**27.** Verfahren zum Herstellen einer Zelle (1) zum Modulieren von Licht nach Patentanspruch 21 bis 26, dadurch gekennzeichnet, daß zum Herstellen einer an einer Elektrode anhaftenden Materialschicht (3) dieser eine Kleb- oder Kontakthafteigenschaft verliehen wird.

**28.** Verfahren zum Herstellen einer Zelle (1) zum Modulieren von Licht nach Patentanspruch 21 bis 27, dadurch gekennzeichnet, daß zur Bildung der Materialschicht (3) auf einer Elektrode die Materialschicht (3) und die Elektrode entweder direkt miteinander in Berührung gebracht werden oder die Materialschicht (3) zuerst auf ein vorläufiges Zwischensubstrat, insbesondere mit einer nichthaftenden Oberflächenbeschaffenheit, aufgebracht und danach von dieser auf die entsprechende Elektrode übertragen wird.

**29.** Verfahren zum Herstellen einer Zelle (1) zum Modulieren von Licht nach Patentanspruch 21 bis 28, dadurch gekennzeichnet, daß die aus der Grundmischung in einer oder mehreren Schichten aufgetragen wird und die Gesamtstärke der Materialschicht vorzugsweise zwischen einigen Mikrometern und mehreren hundert Mikrometern beträgt.

**30.** Verfahren zum Herstellen einer Zelle (1) zum Modulieren von Licht nach Patentanspruch 21 bis 29, dadurch gekennzeichnet, daß die Grundmischung zumindest aus dem das Material (3) bildenden Bestandteilen und Wasser, sowie ggf. Zusatzstoffen zur Beibehaltung der Festigkeit und/oder zur Konservierung und/oder zur Erleichterung des Auftragens der Grundmischung als Materialschicht besteht.

**31.** Verfahren zum Herstellen einer Zelle (1) zum Modulieren von Licht nach Patentanspruch 21 bis 30, dadurch gekennzeichnet, daß die Viskosität der flüssigen Grundmischung durch Verdampfen oder Hinzufügen von Wasser auf einen Wert gebracht wird, der für ein spezielles Verfahren zur Bildung bzw. zum Auftragen einer Materialschicht geeignet ist.

**32.** Zelle (1) zum Modulieren von Licht nach Patentanspruch 1 bis 20, dadurch gekennzeichnet, daß die Bereiche zum Anlegen des elektrischen Stromes derart aufgeteilt sind, daß eine möglichst einheitliche Stromdichte im Inneren des Bildpunktes bzw. Bildsegmentes (5) erzielt wird.

FIG.1A

FIG.2A

FIG.3A

FIG.1B

FIG.2B

FIG.3B

FIG.4 A

FIG.4B

FIG.5

FIG.6

FIG.7A

FIG.7B

FIG.8A

FIG.8B

FIG.8C

FIG.8D

FIG.8E

FIG.8F

FIG.8G

FIG.8H

FIG.8I

FIG.9

EP 0 300 916 B1

FIG.10

FIG.11

FIG.12

FIG.13

FIG.14

FIG.15

FIG.16

FIG.17

FIG.18

FIG.19

FIG.20

FIG.21

FIG.22

FIG.23

FIG.24

## FIG.25

FIG.26

FIG.27